# EUROPÄISCHE PATENTANMELDUNG

(11) **EP 4 772 389 A2**
(43) Veröffentlichungstag der Anmeldung: **08.07.2026**
(21) Anmeldenummer: 26157243.2
(22) Anmeldetag: 25.04.2019
(51) Int. Cl.: B60L 53/57

(54) **DIGITALES ZUGANGSSYSTEM FÜR FAHRZEUGE FÜR VON AUSSEN GESTEUERTE LADEVORGÄNGE**

(30) Priorität: 25.04.2018 DE 102018109956; 25.04.2018 DE 102018109962; 18.06.2018 DE 102018114593
(62) Teilanmeldung aus: 19720119.7
(71) Anmelder: EGS Entwicklungs- und Forschungs- GmbH, 70469 Stuttgart (DE)
(72) Erfinder: SCHUMACHER, Uli Erich, 70469 Stuttgart (DE)
(74) Vertreter: Holzwarth-Rochford, Andreas

(57) **Zusammenfassung**

Die Erfindung betrifft ein digitales Zugangssystem (1), ein Elektrofahrzeug (100) mit einem solchen Zugangssystem und ein Verfahren (200) zur Gewährung einer Zugangsberechtigung zu einem Elektrofahrzeug mit einem solchen Zugangssystem, das eine Freischalteinheit (11) zur Positionierung in dem Fahrzeug (100), mindesten eine Zugriffseinheit (12) und mindestens eine Aktivierungseinheit (13) zur Verwendung außerhalb des Fahrzeugs (100) umfasst, wobei die Aktivierungseinheit (13) mittels drahtloser Datenkommunikation (21) zu der Freischalteinheit (11) die Freischalteinheit (11) zumindest für einen Zeitraum aktiviert, die Zugriffseinheit (12) mittels einer zur vorherigen Datenkommunikation (21) separaten unabhängigen drahtlosen Datenkommunikation (22) mit der vorher aktivierten Empfangseinheit (11) einen Zugang zum Fahrzeug (100) von außen veranlasst, wobei die Freischalteinheit (11) in Reaktion auf die Datenkommunikation (22) mit der Zugriffseinheit (12) Steuersignale (14) an die Systemsteuerung (110) zur Ansteuerung des Verriegelungssystems und Freigabe zumindest einer verriegelnden Komponente (140) zur Ermöglichung des Zugangs zum Fahrzeug zu dessen Ladung zu übermittelt.

## Beschreibung

### Gebiet der Erfindung

Die Erfindung betrifft ein digitales Zugangssystem, ein Fahrzeug mit einem solchen Zugangssystem und ein Verfahren zur Gewährung einer Zugangsberechtigung zu einem Fahrzeug mit einem solchen Zugangssystem.

### Hintergrund der Erfindung

Zur Abdeckung des Energiebedarfs von Elektrofahrzeugen werden Stromtankstellen genutzt, die die dafür benötigte elektrische Energie bereitstellen. Mit steigender Anzahl von Elektrofahrzeugen und dem Wunsch verbesserter Mobilität ergibt sich die Problematik, dass unterschiedliche Nutzer mit unterschiedlichen Ladeanforderungen solche Stromtankstellen besuchen.

Dokument DE 10 2011 101 535 A1 offenbart ein System und Verfahren, mit dem die Strombetankung über eine flexible Zuordnung von Zertifikaten für die Stromkostenabrechnung vereinfacht wird. Hierbei ist eine Authentifizierungseinrichtung im Elektrofahrzeug angeordnet, die das Elektrofahrzeug bei einer Ladesteuervorrichtung der Ladestation authentifiziert, woraufhin diese die Ladestation für das authentifizierte Fahrzeug freischaltet. Hierbei überträgt ein Server die dafür benötigten Authentifizierungsdaten an die Authentifizierungseinrichtung, wobei der Server über einen Energieversorger ebenfalls mit der Ladestation zur Überprüfung des Betankungszertifikats verbunden ist. Zur Durchführung dieses Verfahrens und des entsprechenden Systems muss der Nutzer allerdings vor Ort sein, um der Ladestation nach erfolgter Authentifizierung dann den für die Betankung benötigten physischen Zugriff auf das Elektrofahrzeug zu gewähren.

Die Mehrzahl der derzeitig erhältlichen Elektrofahrzeuge fährt ihr Steuersystem im Ruhezustand herab. Dadurch sind in der Regel nach 10 - 20 Minuten alle technischen Steuerungsmoduleinheiten im Elektrofahrzeug ausgeschaltet, wodurch der Fahrzeugakkumulator von außen weder beladen noch entladen werden kann. Bei den meisten Modellen ist zusätzlich die Zugangsklappe zur Steckverbindung zur Verbindung des Fahrzeug-Akkumulators mit einer Ladestation, insbesondere Stromladestation, über das Schließsystem des Elektrofahrzeugs gesperrt.

Somit wird eine Mobilaufladung eines Elektrofahrzeugs oder eine mobile Beladung des Elektrofahrzeugs mit anderen Gütern ohne Anwesenheit des Nutzers des Elektrofahrzeugs verhindert, da die Servicemitarbeiter ohne Zugangsberechtigung zum Elektrofahrzeug des Kunden nicht sicherstellen können, dass das System im Rahmen einer Aufladung oder Beladung die dafür notwendigen Komponenten des Elektrofahrzeugs freigibt. Die Freigabe könnte beispielsweise über Abgabe des Fahrzeugschlüssels erreicht werden, was allerdings voraussetzt, dass der Fahrzeugbesitzer in diese Abgabe einwilligt und andererseits, dass zum Zeitpunkt der Abgabe die Servicemitarbeiter für eine solche Übergabe der Fahrzeugschlüssel vor Ort sein muss. Außerdem müsste nach erfolgter Aufladung oder Beladung des Elektrofahrzeugs der Fahrzeugschlüssel dem Nutzer wieder ausgehändigt werden, wozu dieser entweder den Schlüssel beim Serviceunternehmen, das die Betankung durchgeführt hat, abholt oder ihm vom Serviceunternehmen gebracht werden müsste. Diese Maßnahmen sind sowohl für den Nutzer als auch für das Serviceunternehmen umständlich und zeitraubend.

Gleichzeitig wäre es wünschenswert, wenn die Standzeit eines Fahrzeugs, insbesondere die eines Elektrofahrzeugs bei den benötigten längeren Ladepausen, für zusätzliche Servicedienstleistungen benutzt werden könnte, zu deren Ausführung ebenfalls ein Zugang zum jeweiligen Fahrzeug notwendig wäre. Solche Servicedienstleistungen wären beispielsweise das Anliefern und Deponieren von Waren im jeweiligen Fahrzeug.

Es wäre daher wünschenswert, ein Verfahren oder System zur Verfügung zu haben, um eine Aufladung oder Beladung eines Fahrzeugs mit größerer Flexibilität ohne eine persönliche Anwesenheit des Nutzers zügig und sicher für den Nutzer durchführen zu können.

### Zusammenfassung der Erfindung

Es ist daher eine Aufgabe der Erfindung, ein Verfahren oder System zur Verfügung zu haben, mit dem eine Aufladung oder Beladung eines Fahrzeugs mit größerer Flexibilität ohne eine persönliche Anwesenheit des Nutzers zügig und sicher für den Nutzer durchgeführt werden kann.

Diese Aufgabe wird gelöst durch ein digitales Zugangssystem zumindest geeignet zum Einbau in einem Fahrzeug mit einem Verriegelungssystem und zur geeigneten Verbindung mit einer Systemsteuerung des Fahrzeugs, wobei das Zugangssystem mindestens eine Freischalteinheit zur Positionierung in dem Fahrzeug, mindesten eine Zugriffseinheit und mindestens eine Aktivierungseinheit zur Verwendung außerhalb des Fahrzeugs umfasst, wobei die Aktivierungseinheit dazu ausgestaltet ist, mittels drahtloser Datenkommunikation zu der Freischalteinheit die Freischalteinheit zumindest für einen Zeitraum zu aktivieren, die Zugriffseinheit dazu ausgestaltet ist, mittels einer zur vorherigen Datenkommunikation separaten unabhängigen drahtlosen Datenkommunikation mit der durch die Aktivierungseinheit vorher aktivierten Empfangseinheit einen Zugang zum Fahrzeug von außen zu veranlassen, wobei die Freischalteinheit dazu ausgestaltet ist, in Reaktion auf die Datenkommunikation mit der Zugriffseinheit den Zugang veranlassende Steuersignale an die Systemsteuerung zur Ansteuerung des Verriegelungssystems und Freigabe zumindest einer verriegelnden Komponente zur Ermöglichung des Zugangs zum Fahrzeug zu dessen Ladung zu übermitteln.

Der Begriff "Fahrzeug" bezeichnet hierbei alle Arten von Fahrzeugen, die mittels eines Verriegelungssystems einen Zugang von außen für Unbefugte sperren können. Der Begriff "Fahrzeug" betrifft hier Fahrzeuge mit allen Motortypen wie beispielsweise Elektrofahrzeuge, Fahrzeuge mit Verbrennungsmotoren oder mit Brennstoffzellen (wasserstoffgetriebene Fahrzeuge) oder Hybridfahrzeugen mit mindestens zwei oder mehreren unterschiedlichen Motortypen als Antrieb, umfassend Land- beziehungsweise Straßenfahrzeuge sowie Luft- und Wasserfahrzeuge.

Der Begriff "Ladung" bezeichnet hierbei das Hinzufügen von Objekten ins Fahrzeug und umfasst dabei sowohl das Beladen des Fahrzeugs beispielsweise mit Paketen oder Waren sowie das Betanken des Fahrzeugs mit Betriebs-, Kraft- oder Brennstoff, was im Falle eines Elektrofahrzeugs auch das elektrische Aufladen des Akkumulators des Elektrofahrzeugs mit einschließt.

Als Systemsteuerung wird die Elektrik/Elektronik des Fahrzeugs inklusive aller Komponenten (beispielsweise Prozessoren Steuerchips, elektronische Schaltkreise etc.), die zum Betrieb und der Steuerung Elektrik/Elektronik des Fahrzeugs benötigten werden, bezeichnet. Die Systemsteuerung ist dabei mit dem Verriegelungssystem verbunden, das die Fahrzeugbestandteile umfasst, die elektrisch vom Verschließen, Verriegeln oder Sperren von Fahrzeugkomponenten angesteuert werden können, wie beispielsweise Schließsysteme für Schlösser, Türen, Kofferraumklappen, Tankklappen etc. als auch Schaltkreise aller Art, die für die Ausführung von Handlungen wie beispielweise dem Positionieren eines Pakets im Kofferraum des Fahrzeugs oder dem Betanken des Fahrzeugs über die üblicherweise verriegelte Tankklappe vorgesehen sind, damit die Systemsteuerung diese Komponenten steuern und schalten kann. Der Begriff "Betanken" umfasst hierbei sowohl das Betanken eines Fahrzeugs mit üblichen Treibstoffen wie Benzin oder Diesel als auch die Befüllung eines Fahrzeugstanks mit Wasserstoff und das Aufladen eines Fahrzeugakkumulators im Falle von Elektrofahrzeugen. Die an die Systemsteuerung übermittelten Steuersignale werden dabei beispielsweise entsprechend der herstellerspezifischen Matrix eingeprägt. Der Zeitraum der Aktivierung der Freischalteinheit kann dabei je nach Ausführungsform eine vorbestimmte Dauer nach dem Zeitpunkt der Aktivierung sein oder wird nach Aktivierung durch Ausführung einer Handlung, wie beispielsweise das Schließen einer Tür, einer Tankklappe oder das Ziehen eines Ladesteckers, beendet.

Die Freischalteinheit ist zur Positionierung im Fahrzeug ausgestaltet und vorgesehen. Sie kann dabei im Fahrzeug fest installiert sein oder aber als Nachrüstkomponente nachträglich in ein Fahrzeug integriert werden, wozu sie mit der Systemsteuerung nachträglich in geeigneter Weise verbunden wird. Um die Freischalteinheit mit der Systemsteuerung des Fahrzeugs zu verbinden, können im Kabelbaum des Fahrzeugs entsprechende Anschlüsse bereitgestellt werden, beispielsweise bereits werksseitig bei der Erstmontage des Fahrzeugs. Die Freischalteinheit kann dabei im Rahmen der Erstmontage oder zu einem späteren Zeitpunkt über diese Anschlüsse in den Kabelbaum (Buss-System) des Fahrzeugs integriert werden. Das Buss-System des Fahrzeugs kann über einen entsprechenden Impuls in Gang gesetzt werden, sodass das spezifische System zur Ladesteuerung von der Systemsteuerung aktiviert wird. Die zwischen Freischalteinheit und der Systemsteuerung ausgetauschten Datenprotokolle müssen an die jeweilige herstellerspezifische Struktur des jeweiligen Fahrzeugs angepasst sein. Alternativ kann auch ein Öffnungsmechanismus an der Ladeklappe oder einer anderen verschließenden Komponente des Fahrzeugs bei einer Nachrüstung des Fahrzeugs mit dem erfindungsgemäßen Zugangssystem als Ersatzteil ausgetauscht werden, falls ein Zugang zu der Systemsteuerung beziehungsweise des Kabelbaums im Fahrzeug nicht möglich sein sollte und das Zugriffssystem dennoch einen Zugang zum Fahrzeug ermöglichen soll. Die Freischalteinheit kann dabei an jeder geeigneten Position im Fahrzeug angebracht werden, die einerseits eine ungestörte drahtlose Datenkommunikation mit den externen Komponenten Aktivierungseinheit und Zugriffseinheit ermöglicht (beispielsweise an Stellen ohne beeinträchtigende Abschirmung von Funksignalen, WLAN-Signales etc.) und andererseits eine zuverlässige elektrische Verbindung mit der Systemsteuerung herzustellen ist. Die Zugriffs- und Aktivierungseinheiten müssen ebenfalls zur drahtlosen Datenkommunikation mit der Freischalteinheit ausgestaltet sein. Die Zugriffseinheit löst über die Datenkommunikation mit der Freischalteinheit ein Hochfahren der Systemsteuerung und damit der Nutzungssysteme im Fahrzeug aus. Nach Beendigung der Ladung können diese nach einer entsprechenden Datenkommunikation auch wieder heruntergefahren werden. Damit erhalten Servicemitarbeiter, Mobilladefahrzeuge, autorisierte Paketdienstleister oder Mitarbeiter mit Zugangsberechtigung zum Zugangssystem nach Freigabe der notwendigen Fahrzeug- und Nutzerdaten die Möglichkeit, sich über das erfindungsgemäße Zugangssystem Zugang zum jeweiligen Fahrzeug, für das ein solcher Zugang seitens des Nutzer gewährt werden soll, zu verschaffen.

In einer Ausführungsform ist die Zugriffseinheit und/oder die Aktivierungseinheit zum Aussenden und/oder Empfangen von Signalen und/oder Daten mittels Funk, WLAN oder Nahfeldkommunikation, vorzugsweise RFID, ausgestaltet. Diese Techniken zur drahtlosen Datenkommunikation sind Technologien, mit denen zuverlässig über unterschiedliche Distanzen Daten zwischen zwei Sender- oder Empfangsstationen ausgetauscht werden können, wobei Sender und Empfänger sehr platzsparend bereitgestellt und mit eigenen Stromquellen versehen werden können. Die Aktivierungseinheit kann dabei dazu ausgestaltet sein, die zuvor aktivierte Freischalt-einheit durch ein entsprechendes Signal wieder zu deaktivieren. Somit kann die Deaktivierung einerseits durch einen zeitlichen Ablauf eines Aktivierungszeitraums als auch durch ein aktiv ausgesendetes Signal bewirkt werden. Die Zugriffseinheit kann ebenfalls dazu ausgestaltet sein, nach erfolgreichem Zugriff auf ein Fahrzeug der Freischalteinheit ein Signal zu übermitteln, aufgrund dessen die Freischalteinheit in Zusammenwirkung mit der Systemsteuerung und dem Verriegelungssystem alle zuvor entriegelten Komponenten wieder zu verriegeln.

Die ausgetauschten Daten bei der Datenkommunikation sind dabei so gestaltet, dass die Aktivierungseinheit zumindest Befehlsdaten zur Aktivierung der Freischalteinheit aussendet, die zusätzlich zum Aktivierungsbefehl eine zeitliche Definition der Aktivierungsdauer beinhalten können. Diese Aktivierungsdauer kann eine vorbestimmte Dauer sein oder je nach Wunsch im Einzelfall mittels entsprechender Eingaben in oder für die Aktivierungseinheit spezifiziert werden. Dier Aktivierung kann aber auch zurückgesetzt werden, sobald das Vorgangsende der Ladung eintritt. Die Abschaltung der Aktivierung muss daher nicht zeitdauergesteuert sein, sondern kann auch mit der Beendigung des Ladungsvorgangs durch eine entsprechende Handlung, beispielsweise die Trennung des Ladekabels vom Ladestecker, erfolgen. Die Aktivierungseinheit kann beispielsweise ein funk- oder internetfähiges mobiles Terminal, Smartphone, Tablet-PC, Computer, oder ein anderes digitales Kommunikationsgerät wie beispielsweise ein Transponder sein.

Mit dem erfindungsgemäßen Zugangssystem kann eine Aufladung oder Beladung eines Fahrzeugs mit größerer Flexibilität ohne eine persönliche Anwesenheit des Nutzers zügig und sicher für den Nutzer durchgeführt werden.

Hierbei kann das erfindungsgemäße Zugangssystem durch Aufspielen der zur Ausführung auszuführenden Softwareprogramme (beispielsweise in der Freischalt- und/oder Zugriffseinheit und/oder Aktivierungseinheit) auf andere eventuell bereits bestehende Systeme implementiert oder nachgerüstet werden.

In einer Ausführungsform umfasst die Freischalteinheit eine Prozessoreinheit mit Datenspeicher, auf dem Daten zur Autorisierung der Aktivierungseinheit und/oder der Zugriffseinheit gespeichert sind und die Prozessoreinheit dazu ausgestaltet ist, anhand dieser Daten eine Autorisierungsprüfung durchzuführen. Eine solche Autorisierungsprüfung schützt das erfindungsgemäße Zugangssystem vor missbräuchlichem Zugriff durch Dritte. Die Autorisierungsprüfung kann beispielsweise mittels Abgleich von befugten Zugangscodes, gespeichert auf dem Datenspeicher und einem von einer Aktivierungseinheit übermitteltem Zugangscode, ausgeführt werden. Falls der übermittelte Zugangscode nicht im Datenspeicher vorhanden ist, könnte das Zugangssystem die Aktivierung der Empfangseinheit blockieren. Zur Speicherung von befugten Zugangscodes (oder anderer die Befugnis belegender Daten) kann die Empfangseinheit eine Datenschnittstelle umfassen, die je nach Ausführungsform unterschiedlich ausgestaltet werden könnte, beispielsweise als USB-Schnittstelle oder als Funk- oder Internetschnittstelle zur Eingabe über eine autorisierte Webseite des Betreibers des Zugangssystems.

In einer weiteren Ausführungsform ist die Freischalteinheit dazu ausgestaltet, die Aktivierung erst nach einer erfolgreichen Autorisierungsprüfung der Aktivierungseinheit durchzuführen. Dadurch wird verhindert, dass unbefugte Zugriffseinheiten überhaupt Zugang zum Zugangssystem erlangen können.

In einer weiteren Ausführungsform ist die Freischalteinheit dazu ausgestaltet, im aktivierten Zustand Signale zur Abfrage nach vorhandenen Zugriffseinheiten auszusenden. Somit kann ein Zugriff vereinfacht werden, da die Zugriffseinheit nicht selbst nach der Freischalteinheit suchen muss. Beispielsweise kann nach erfolgreicher Suche der Freischalteinheit nach einer befugten Zugriffseinheit die Freischalteinheit über die Systemsteuerung des Fahrzeugs ein Signal (beispielsweise ein eingeschalteter Blinker) aussenden, um beispielsweise einem Servicemitarbeiter, der die Zugriffseinheit trägt, das Auffinden des betreffenden Fahrzeugs zu erleichtern. Dies könnte gerade in Parkhäusern von Vorteil sein.

In einer weiteren Ausführungsform ist die Zugriffseinheit dazu ausgestaltet, zumindest einen Identifikationscode an die Freischalteinheit zu übermitteln, anhand dessen die Freischalteinheit eine Autorisierungsprüfung der Zugriffseinheit durchführen kann, wobei die Übermittlung der Steuersignale an die Systemsteuerung erst nach erfolgreicher Autorisierungsprüfung der Zugriffseinheit erfolgt. Dadurch wird verhindert, dass unbefugte Zugriffseinheiten Zugang zum Zugangssystem mit aktivierter Freischalteinheit erlangen können. Hier gilt für die Ausgestaltung der Zugriffseinheit und die Durchführung der Autorisierungsprüfung das Gleiche wie bereits voranstehend für die Autorisierungsprüfung der Aktivierungseinheit beschrieben wurde.

In einer weiteren Ausführungsform ist die Zugriffseinheit ein Transponder, der dazu ausgestaltet ist, nach Empfang der Datenkommunikation von der Freischalteinheit zumindest den Identifizierungscode an die Freischalteinheit zu übertragen. Transponder sind kleine und kompakte Einheiten, mit denen identifizierende und weitere inhaltliche Daten einfach übertragen werden können. Transponder können zudem bequem an einer Kleidung oder in einem Fahrzeug der Servicemitarbeiter zur Ausführung der Ladung des Fahrzeugs getragen werden.

In einer weiteren Ausführungsform ist der Transponder ein passiver Transponder. Passive Transponder senden nur Daten in Reaktion auf ein empfangenes Signal aus, indem sie die Energie des empfangenen Signals für die Aussendung eines eigenen Signals verwenden. Passive Transponder begrenzen einerseits räumlich die Reichweite für eine Datenkommunikation mit der Freischalteinheit, was den Sicherheitsstandart des Zugangssystems erhöht, da ein großflächiges Scannen von aktivierten Freischalteinheiten zum Zwecke des Missbrauchs behindert wird und andererseits antworten diese Transponder nur auf aktive Freischalteinheiten, sodass Fahrzeuge mit nicht aktivierten Freischalteinheiten nicht als solche identifiziert beziehungsweise geortet werden können, was ebenfalls die Missbrauchssicherheit des Systems erhöht.

In einer weiteren Ausführungsform ist die Freischalteinheit dazu ausgestaltet, spätestens nach Ablauf des vorbestimmten Zeitraums der Aktivierung die Systemsteuerung anzuweisen, die aufgrund der vorherigen Datenkommunikation mit der Zugriffseinheit entriegelten Komponenten wieder zu verriegeln. Durch die Verriegelung nach Ablauf der Aktivierungszeit wird die Zugriffssicherheit weiter erhöht. Ferner vermeidet die automatische Verriegelung ein versehentliches Vergessen des Verriegelns durch den Servicemitarbeiter bei einem fehlenden entsprechenden Signal durch die Zugriffseinheit.

In einer weiteren Ausführungsform ist die Zugriffseinheit dazu ausgestaltet, nach Abschluss der Ladung des Fahrzeugs eine Verriegelung der entsprechenden Komponenten mittels entsprechender Datenkommunikation mit der Freischalteinheit durch die Systemsteuerung des Fahrzeugs zu veranlassen. Der Abschluss einer erfolgten Ladung kann beispielsweise über das Verschließen der zuvor entriegelten Komponenten festgestellt werden. Die Verriegelung erfolgt damit automatisch ohne weitere durch den die Zugriffseinheit tragenden oder bedienenden Servicemitarbeiter auszuführenden Schritte und erleichtert die Handhabung des Zugangssystems. Gleichzeitig wird die Sicherheit des Zugangssystems erhöht, da ein versehentliches Nicht-Verriegeln ausgeschlossen wird.

In einer weiteren Ausführungsform ist die Freischalteinheit dazu ausgestaltet, nach erfolgter Verriegelung der Komponenten des Fahrzeugs der Aktivierungseinheit und/oder der Zugriffseinheit charakteristische Daten über die erfolgte Ladung des Fahrzeugs zu übertragen. Diese Datenübertragung ermöglicht eine Protokollierung des Ladevorgangs und kann zur späteren Abrechnung des Ladeservices verwendet werden. Die Datenübertragung zur Aktivierungseinheit, üblicherweise unter Kontrolle des Besitzers oder Nutzers des Fahrzeugs, stellt zudem eine Quittung über den Ladevorgang für den Besitzer oder Nutzer dar.

In einer weiteren Ausführungsform ist die Freischalteinheit für eine reversible Anordnung im Fahrzeug und zur Verbindung mit der Systemsteuerung ausgestaltet. Das ermöglicht die Nachrüstung von Fahrzeugen mit dem erfindungsgemäßen digitalen Zugangssystem. Der Fachmann ist in der Lage, die dafür benötigten Anschüsse und Schnittstellen für die Freischalteinheit geeignet auszugestalten.

In einer weiteren Ausführungsform umfasst das Zugangssystem ein Hintergrund-Computersystem, das so ausgestaltet ist, das es zumindest eine Registrierung von Nutzern und eine Eintragung von Daten der Fahrzeuge und/oder der Freischalteinheiten und/oder der Zugriffseinheiten und/oder der Aktivierungseinheiten sowie deren Zuordnung zu den Fahrzeugen und/oder Nutzern ermöglicht und eine geeignete Übertragung von Daten (beispielsweise Zeitdauer, Nutzerdaten, Ladedaten) an die Freischalteinheit zur Ermöglichung einer Autorisierungsprüfung durch die Freischalteinheit durchführt. Ein vom Nutzer abgestelltes Fahrzeug kann beispielsweise über ein Kundenkonto im Hintergrund-Computersystem und den darin eingetragenen Ortsdaten von den mit der Ladung beauftragten Servicemitarbeitern gefunden werden. In einer Ausführungsform ist die Aktivierungseinheit ein Smartphone mit einer darauf installierten Applikation, die über ein Positionsortungssystem (beispielsweise ein GPS-System) den Fahrzeugstandort im Hintergrund-Computersystem speichert, beispielsweise beim Verlassen des Fahrzeugs durch den Nutzer. Über das Hintergrund-Computersystem kann der Nutzer Ladungen des Fahrzeugs bestellen, beispielsweise eine Übernachtaufladung seines Elektrofahrzeugs beispielsweise auf einem öffentlich zugänglichen Parkplatz, zu dem ein entsprechendes Ladefahrzeug mittels des im Hintergrund-Computersystem hinterlegten Fahrzeugstandortes gelangt. Das Servicefahrzeug kann für verschiedene Elektrofahrzeuge mit den jeweils geeigneten Kabelverbindungen (Steckern) ausgestattet sein und über mobile AC-oder DC-Ladestationen gegebenenfalls mit variabel einstellbaren Ladespannungen verfügen. Die jeweilige Beauftragung zu einer Ladung und gegebenenfalls die Freigabe der Autorisierungsdaten für die Freischalteinheit sowie anderer kommunizierter Daten kann beispielsweise über ein Distributed Ledger Technology (DLT)-Programm-System, insbesondere Blockchain-Programm-System im Rahmen des Hintergrund-Computersystems erfolgen. Das Hintergrund-Computersystem kann dazu ein oder mehrere miteinander verbundene Server umfassen, die beispielsweise über geeignete Schnittstellen auch in der Lage sein können, mit den Aktivierungseinheiten und Zugriffseinheiten zu kommunizieren. Ein solches Hintergrund-Computersystem erleichtert den Betrieb des digitalen Zugangssystems und die Abrechnung von Servicedienstleistungen und erhöht bei entsprechender Ausgestaltung mit Zugangskontrollen und Vergabe zu Zugangsrechten die Sicherheit des Zugangssystems. Bei einer Übertragung weiterer fahrbezogener Daten durch die Freischalteinheit kann das Hintergrund-Computersystem auch weitere Dienstleistungen abrechnen, wie beispielsweise kilometerbezogene Kraftfahrzeugsteuern oder Park- und Mautgebühren. In einer weiteren Ausführungsform erfolgen daher die Datenkommunikationen verschlüsselt.

In einer weiteren Ausführungsform ist das Fahrzeug ein Elektrofahrzeug und die von der Freischalteinheit an die Systemsteuerung übermittelten Steuersignale sind dazu vorgesehen, zumindest eine Aufladung des Elektrofahrzeugs oder eine Öffnung eines Kofferraums und/oder einer Ladefläche mittels Freigabe der entsprechenden Komponenten des Elektrofahrzeugs zu ermöglichen. Der Begriff Elektrofahrzeuge bezeichnet hierbei Fahrzeuge, die mit mindestens einem Elektroantrieb versehen sind. Dies umfasst auch Hybridfahrzeuge, die neben einem Elektroantrieb einen weiteren Antrieb wie beispielsweise eine Brennstoffzelle oder einen Verbrennungsmotor umfassen oder nur ergänzend mit einem Elektroantrieb ausgestattet sind. Hiermit wird erreicht, dass das Elektrofahrzeug mit einem Steuersystem im Ruhezustand unabhängig von der Anwesenheit eines Nutzers oder Besitzers des Elektrofahrzeugs von außen dennoch aufgeladen beziehungsweise mit Gütern beladen werden kann.

Die Erfindung betrifft des Weiteren ein Fahrzeug mit einem Verriegelungssystem und einer Steuerungseinheit, zumindest zur Steuerung des Verriegelungssystems sowie einem erfindungsgemäßen digitalen Zugangssystem, umfassend mindestens eine Zugriffseinheit und mindestens eine Aktivierungseinheit zur Verwendung außerhalb des Fahrzeugs und eine Freischalteinheit, die in dem Fahrzeug positioniert und mit der Steuerungseinheit geeignet verbunden ist, um mittels Ansteuerung des Verriegelungssystems und Freigabe zumindest einer verriegelnden Komponente den Zugang zum Fahrzeug zu dessen Ladung zu ermöglichen.

Mit dem erfindungsgemäßen Fahrzeug kann eine Ladung eines Fahrzeugs mit größerer Flexibilität ohne eine persönliche Anwesenheit des Nutzers zügig und sicher für den Nutzer durchgeführt werden.

In einer Ausführungsform ist die Freischalteinheit mit einer Empfangsantenne des Fahrzeugs verbunden. Das steigert die Zuverlässigkeit einer Datenkommunikation mit der Aktivierungseinheit und/oder der Zugriffseinheit.

In einer weiteren Ausführungsform ist die Freischalteinheit im Fahrzeug an einer von außen und/oder vom Innenraum des Fahrzeugs unzugänglichen Stelle angeordnet. Dies erhöht die Diebstahlsicherheit für die Freischalteinheit und verhindert die Kenntnisnahme von Unbefugten, dass eine solche Freischalteinheit im Fahrzeug angeordnet ist.

In einer weiteren Ausführungsform ist die Freischalteinheit reversibel im Fahrzeug installiert. Damit kann das erfindungsgemäße Zugangssystem in Fahrzeugen nachgerüstet und bei Bedarf aus diesen auch wieder unkompliziert entfernt werden.

In einer weiteren Ausführungsform ist das Fahrzeug ein Elektrofahrzeug und die von der Freischalteinheit an die Systemsteuerung übermittelten Steuersignale sind dazu vorgesehen, zumindest eine Aufladung des Elektrofahrzeugs oder eine Öffnung eines Kofferraums und/oder einer Ladefläche mittels Freigabe von entsprechenden Komponenten des Elektrofahrzeugs zu ermöglichen. Damit ist das Zugangssystem auch auf Elektrofahrzeuge anzuwenden. Hiermit wird erreicht, dass mit einem Steuersystem im Ruhezustand unabhängig von der Anwesenheit eines Nutzers oder Besitzers des Elektrofahrzeugs eine Ladung von außen möglich ist.

In einer weiteren Ausführungsform ist vorgesehen, dass die Systemsteuerung des Fahrzeugs aufgrund des Steuersignals der Freigabeeinheit bei gewünschter Aufladung des Elektrofahrzeugs eine Tankklappe als eine der Komponenten entriegelt und/oder über Diagnoseanschlüsse des Elektrofahrzeugs funktionsfähig freischaltet. Hiermit wird erreicht, dass das Elektrofahrzeug mit einem Steuersystem im Ruhezustand unabhängig von der Anwesenheit eines Nutzers oder Besitzers des Elektrofahrzeugs von außen dennoch aufgeladen werden kann.

Die Erfindung betrifft des Weiteren ein Verfahren zur Gewährung einer Zugangsberechtigung zu einem Fahrzeug mit einem Verriegelungssystem und einer Steuerungseinheit zumindest zur Steuerung des Verriegelungssystems sowie einem in dem Fahrzeug eingebauten erfindungsgemäßen digitalen Zugangssystem, umfassend mindestens eine Zugriffseinheit und mindestens eine Aktivierungseinheit zur Verwendung außerhalb des Fahrzeugs und eine im Fahrzeug positionierte und mit der Steuerungseinheit geeignet verbundene Freischalteinheit, umfassend folgende Schritte:
- Aktivieren der Freischalteinheit zumindest für einen Zeitraum durch die sich außerhalb des Fahrzeugs befindliche Aktivierungseinheit mittels drahtloser Datenkommunikation zu der Freischalteinheit;
- Veranlassen eines Zugangs von außen zu dem Fahrzeug durch die sich ebenfalls außerhalb des Fahrzeugs befindliche Zugriffseinheit mittels einer zur vorherigen Datenkommunikation separaten unabhängigen drahtlosen Datenkommunikation mit der durch die Aktivierungseinheit vorher aktivierten Empfangseinheit;
- Übermitteln von Steuersignalen, die einen Zugang an die Systemsteuerung durch die Freischalteinheit in Reaktion auf die Datenkommunikation mit der Zugriffseinheit veranlassen; und
- Ansteuerung des Verriegelungssystems und Freigabe zumindest einer verriegelnden Komponente zur Ermöglichung des Zugangs zum Fahrzeug zu dessen Ladung durch die Systemsteuerung.

Mit dem erfindungsgemäßen Verfahren kann eine Ladung eines Fahrzeugs mit größerer Flexibilität ohne eine persönliche Anwesenheit des Nutzers zügig und sicher für den Nutzer durchgeführt werden.

In einer Ausführungsform des Verfahrens, wobei die Freischalteinheit eine Prozessoreinheit mit Datenspeicher umfasst, auf dem Daten zur Autorisierung der Aktivierungseinheit und/oder der Zugriffseinheit gespeichert sind, umfasst dieses die weiteren Schritte:
- Durchführen einer Autorisierungsprüfung der Aktivierungseinheit anhand dieser Daten durch die Prozessoreinheit und Aktivieren der Freischalteinheit erst nach Erfolg der Autorisierungsprüfung der Aktivierungseinheit, und/oder
- Durchführen einer Autorisierungsprüfung der Zugriffseinheit anhand eines von der Zugriffseinheit an die Freischalteinheit übermittelten Identifikationscodes durch die Prozessoreinheit und Übermitteln der Steuersignale erst nach Erfolg der Autorisierungsprüfung der Zugriffseinheit.

In einer weiteren Ausführungsform des Verfahrens umfasst dieses den oder die weiteren Schritte:
- Anweisen der Systemsteuerung durch die Freischalteinheit spätestens nach Ablauf des vorbestimmten Zeitraums der Aktivierung, die Komponenten zur Ladung des Fahrzeugs zu verriegeln, sofern diese aufgrund der vorherigen Datenkommunikation mit der Zugriffseinheit entriegelt wurden; und/oder
- Verriegeln der entsprechenden Komponenten durch die Systemsteuerung des Fahrzeugs nach Abschluss der Ladung des Fahrzeugs nach entsprechender Datenkommunikation zwischen Zugriffseinheit und Freischalteinheit.

In einer weiteren Ausführungsform des Verfahrens umfasst dieses den weiteren Schritt:
- Übertragen von charakteristischen Daten über die erfolgte Ladung des Fahrzeugs durch die Freischalteinheit an die Aktivierungseinheit und/oder an die Zugriffseinheit nach erfolgter Verriegelung der Komponenten des Fahrzeugs.

In einer weiteren Ausführungsform des Verfahrens, wobei das Fahrzeug ein Elektrofahrzeug ist, ermöglicht das Übermitteln von den Zugang veranlassenden Steuersignalen an die Systemsteuerung zumindest eine Aufladung des Elektrofahrzeugs oder eine Öffnung eines Kofferraums und/oder einer Ladefläche mittels Freigabe der entsprechenden Komponenten des Elektrofahrzeugs.

Die voranstehend aufgelisteten Ausführungsformen können einzeln oder in beliebiger Kombination zueinander zur Ausgestaltung der erfindungsgemäßen Vorrichtung und des Verfahrens verwendet werden.

Insbesondere ermöglicht es das zuvor beschriebene digitale Zugangssystem, ein Fahrzeug mit einem solchen Verriegelungssystem sowie das Verfahren zur Gewährung einer Zugangsberechtigung zu einem Fahrzeug mit einem Verriegelungssystem, dass Ladesysteme eingesetzt werden, bei denen eine dynamische Aufladung des als Elektrofahrzeug ausgebildeten Fahrzeugs mittels mobiler Ladefahrzeuge realisierbar ist.

Im nachfolgenden wird ein solches Ladesystem zur dynamischen Aufladung von Elektrofahrzeugen, insbesondere eines Akkumulators eines zuvor beschriebenen Fahrzeugs mit einem zuvor beschriebenen digitalen Zugangssystem mit einer entsprechenden Software-Applikation, die Teil des Computer-Hintergrund-Systems sein kann, insbesondere dieses zumindest teilweise umfasst, und ein entsprechendes Verfahren sowie ein Datenspeicherprodukt mit darauf gespeicherter Software-Applikation beschrieben.

Wie zuvor beschrieben werden zur Abdeckung des Energiebedarfs von Elektrofahrzeugen Stromtankstellen genutzt, die die dafür benötigte elektrische Energie bereitstellen. Mit steigender Anzahl von Elektrofahrzeugen und dem Wunsch verbesserter Mobilität, insbesondere für Fernfahrten, ergibt sich die Problematik, dass unterschiedliche Nutzer mit unterschiedlichen Ladeanforderungen Stromtankstellen besuchen müssen, die möglicherweise weit abseits ihrer geplanten Fahrroute liegen und deren Ladekapazität oder Verfügbarkeit von Ladesäulen aufgrund eines zeitbedingten großen Andrangs an Kunden erschöpft sind und somit weitere Umwege in Kauf genommen werden müssen, ohne dass dabei die Elektrobatterie des Elektrofahrzeugs erschöpft werden darf.

Dokument US 2015/0298565 A1 offenbart ein Ladeunterstützungssystem und ein entsprechendes Verfahren zur Unterstützung der Ladung eines Elektrofahrzeugs, das verhindern soll, dass Elektrofahrzeuge vor Erreichung ihres Fahrziels die Batterie entleeren und liegenbleiben. Ein Kontrollcenter überwacht dazu den Ladezustand einer Vielzahl an Elektrofahrzeugen und übermittelt diesen bei geringem Ladezustand eine Aufforderung, eine sich an einem bestimmten Punkt ortsfest befindliche Stromladestation anzufahren und führt die Elektrofahrzeuge zu einer dafür geeigneten Stromladestation, wobei für die Auswahl der Stromladestation die Gegebenheiten der Stromladestation (Anzahl an der dort verfügbaren Energiemenge, erwarteter Kundenandrang etc.) berücksichtigt werden.

Damit kann zwar verhindert werden, dass Elektrofahrzeuge während einer Überlandfahrt wegen entleerter Batterie liegenbleiben.

Ein dynamisches Ladesystem für eine Aufladung einer Elektrobatterie ermöglicht es, die individuellen Bedürfnisse des Fahrers des Elektrofahrzeugs entlang seiner Route besser zu berücksichtigen und die Fahrzeuge effektiver aufgeladen werden.

Genauer umfasst ein Ladesystem zur dynamischen Aufladung von Elektrofahrzeugen eine zumindest auf mindestens einem mobilen Gerät, das eine Navigationsfunktion umfasst oder mit einem Navigationsgerät verbindbar ist, und/oder auf mindestens einem Server installierte und ausgeführte Software-Applikation und eine Vielzahl an mobilen Ladefahrzeugen mit jeweils einer Navigationseinrichtung, die unter anderem dazu ausgestaltet ist, eine aktuelle Position eines jeden mobilen Ladefahrzeugs des Ladesystems der Software-Applikation zu übermitteln, wobei die Software-Applikation dazu ausgestaltet ist, auf dem sich in einem Elektrofahrzeug befindlichen mobilen Gerät zumindest das jeweils nächste mobile Ladefahrzeug anzuzeigen und im Falle einer aufzuladenden Elektrobatterie des Elektrofahrzeugs einen Ladewunsch für dieses Elektrofahrzeug sowie zumindest eine aktuelle Position des Elektrofahrzeugs an das angezeigte mobile Ladefahrzeug zu übermitteln, wobei die Navigationseinrichtung des Ladefahrzeugs dazu ausgestaltet ist, aufgrund des empfangenen Ladewunsches Koordinaten eines geeigneten gemeinsamen Treffpunktes und einer geeigneten Treffpunktzeit zur Aufladung der Elektrobatterie des Elektrofahrzeugs an das mobile Gerät im aufzuladenden Elektrofahrzeug zu übermitteln, wobei die Software-Applikation dazu ausgestaltet ist, Treffpunkt und Treffpunktzeit in Navigationsanweisungen für einen Fahrer des aufzuladenden Elektrofahrzeugs umzusetzen.

Aufgrund der Position beider Fahrzeuge (mobiles Ladefahrzeug und aufzuladendes Elektrofahrzeug) und des festgelegten gemeinsamen Treffpunkts wird ein dynamisches Aufladen ermöglicht, bei dem sich beide Fahrzeuge von den jeweiligen Ausgangspositionen auf den Treffpunkt hin bewegen und somit dynamisch einen effektiven Treffpunkt anfahren, was eine Zeitersparnis und Ressourcenschonung für das aufzuladende Elektrofahrzeug beziehungsweise dessen Fahrer im Vergleich zu einer ortsfesten Stromladestation (Stromtankstelle) bedeutet. Die Anzeige zumindest des nächsten Ladefahrzeugs kann auf einer auf einem Bildschirm, beispielsweise des mobilen Gerätes, dargestellten Karte mittels Darstellung eines entsprechenden Symbols oder Markers geschehen oder unter Angaben von Koordinaten oder Adressangaben erfolgen, die entsprechend anzufahren sind. Die Übermittlung des gemeinsamen Treffpunkts kann die implizite Auftragsbestätigung für die Aufladung des Elektrofahrzeugs gemäß übermittelten Ladewunsch sein. Es kann aber auch explizit eine Auftragsbestätigung vom Ladefahrzeug an die Software-Applikation auf dem mobilen Gerät versendet werden.

Der Begriff "Elektrofahrzeug" bezeichnet dabei alle Fahrzeuge mit einem Elektromotor inklusive Hybridfahrzeuge mit zusätzlichen anderen Motortypen. Der Begriff "Ladefahrzeug" bezeichnet dabei Fahrzeuge, die ein Energiereservoir zur Umwandlung in elektrische Energie umfassen und somit mobil an einem beliebigen Ort diese elektrische Energie zum Aufladen einer Fahrzeugbatterie zum Betrieb eines Elektrofahrzeugs bereitstellen können. Beispielsweise können solche Ladefahrzeuge LKWs mit entsprechender Ausrüstung sein. Diese Ladefahrzeuge können selbst mit einem Elektromotor angetrieben werden, können aber auch andere Motorentypen wie Verbrennungsmotor, Hybridmotor oder andere Motoren zur eigenen Fortbewegung umfassen. Die Navigationseinrichtung des mobilen Ladefahrzeugs bestimmt sowohl die aktuelle Position des Ladefahrzeugs als auch errechnet den gemeinsamen Treffpunkt. Die Navigationseinrichtung kann beispielsweise ein entsprechend in seiner Funktionalität erweitertes Navigationssystem sein. Die Treffpunktzeit kann dabei durch eventuell noch laufende Strombetankungen anderer Elektrofahrzeuge an einem vorangegangen vereinbarten Treffpunkt mit einem anderen Elektrofahrzeug beeinflusst werden, weil in solchen Fällen das Ladefahrzeug nicht sofort zum neuen gemeinsamen Treffpunkt starten kann. Sofern der Ladewunsch entsprechend frühzeitig übermittelt wurde, stellt dies kein Hindernis für den gemeinsamen Treffpunkt dar, sondern hat bestenfalls auf die Position des gemeinsamen Treffpunkts Einfluss, sodass sich dieser gegebenenfalls weiter entlang der geplanten Fahrroute des aufzuladenden Elektrofahrzeugs in Richtung des Fahrziels des Elektrofahrzeugs verschiebt.

Der Begriff "Software-Applikation" bezeichnet dabei eine Anwendungssoftware (auch Anwendungsprogramm, kurz Anwendung oder Applikation (APP) genannt), die Computerprogramme bezeichnet, die genutzt werden, um eine nützliche oder gewünschte nicht systemtechnische Funktionalität zu bearbeiten oder zu unterstützen. Mobile APPs (auf mobilen Geräten) können beispielsweise über einen in das mobile Betriebssystem integrierten APP-Store bezogen und direkt auf dem Gerät installiert werden. Mobile Web-APPs können über den Webbrowser des mobilen Geräts abgerufen werden. Als Installation wird die Installation der Software-Applikation auf dem mobilen Gerät selbst oder einer Schnittstelle zur Nutzung eines entsprechenden Anwenderprogramms über eine Webseite bezeichnet. Als Ausführung der Software-Applikation wird die Ausführung über einen Prozessor des mobilen Geräts oder die Verarbeitung von Daten, die über eine Web-APP dem mobilen Gerät über die Schnittstelle bereitgestellt werden, bezeichnet.

Der Begriff "mobiles Geräte" bezeichnet dabei ein Gerät, das zur Herstellung einer Funk-oder Internetverbindung mit anderen Geräten ausgestaltet ist und über einen Anzeigebildschirm verfügt. Solche mobilen Geräte sind beispielsweise Smartphones, Tablet-PCs, Laptops, digitale Kommunikationsgeräte oder Navigationsgeräte, auf denen Software-Applikationen installiert und ausgeführt werden können. Insbesondere kann es sich um ein IOS- oder Android Smartphone, ein in dem Fahrzeug installiertes Gerät, wie einen Andoid Device und/oder ein Mediensystem des Fahrzeugs handeln. Die Navigationsfunktion des mobilen Geräts ermöglicht dabei, die von der Software-Applikation erstellten Navigationsanweisungen zum Erreichen des geeigneten gemeinsamen Treffpunkts in eine Navigationsroute zum Treffpunkt umzuwandeln, anhand derer der Fahrer zum gemeinsamen Treffpunkt mit dem Ladefahrzeug fahren kann. Alternativ ist das mobile Gerät an ein Navigationsgerät anschließbar, wobei mittels geeigneter Schnittstellen die Navigationsanweisungen der Software-Applikation durch das Navigationsgerät im Elektrofahrzeug in eine entsprechende Navigationsroute verarbeitet werden. Sofern sich das mobile Gerät an Bord eines Elektrofahrzeugs befindet, ist die Position des mobilen Geräts identisch mit der Position des Elektrofahrzeugs. Somit kann als Positionsinformation des Elektrofahrzeugs entweder die aktuelle Position des mobilen Geräts oder die aktuelle Position des Elektrofahrzeugs aus einem dort befindlichen Navigationsgerät über das mobile Gerät zum Ladefahrzeug übermittelt werden.

Das dynamische Ladesystem ermöglicht somit eine effektive Aufladung des Elektrofahrzeugs und berücksichtigt dabei die individuellen Bedürfnisse des Kunden des Elektrofahrzeugs und betrachtet im Gegensatz zum Stand der Technik den Ladevorgang nicht ausschließlich aus Sicht der örtlich festen Stromladestation, sondern kombiniert die Gegebenheiten der mobilen Ladestation mit der Position und Ladesituation des Elektrofahrzeugs und gegebenenfalls seiner Bewegungsdaten zu einem effektiveren Aufladevorgang für das Elektrofahrzeug im Vergleich zum Stand der Technik.

In einer Ausführungsform erstellt die Software-Applikation die Navigationsanweisungen aus gemeinsamen Treffpunkt und Treffpunktzeit für das Elektrofahrzeug erst, nachdem über die Software-Applikation eine Bestätigung des Aufladewunsches am gemeinsamen Treffpunkt an das Ladefahrzeug übermittelt wurde. Damit kann der Fahrer des Elektrofahrzeugs zuerst prüfen, ob der gemeinsame Treffpunkt und die Treffpunktzeit für ihn und den Ladezustand seines Elektrofahrzeugs akzeptabel sind. Falls nicht, kann das Elektrofahrzeug gegebenenfalls seine Route fortsetzen und nach Anzeige eines anderen zu einem späteren Zeitpunkt nächsten mobilen Ladefahrzeugs die Aufladung durch das angebotene Ladefahrzeug wahrnehmen. Dadurch erhält das Ladesystem für den Fahrer des Elektrofahrzeugs eine Flexibilität, die seine Kundenwünsche noch stärker berücksichtigen kann.

Ferner kann ein Datenaustausch zwischen dem Server und dem Mobilgerät und/oder eine Datenspeicherung und/oder ein Datenaustausch innerhalb der Software-Applikation zumindest teilweise unter Nutzung von Distributed Ledger Technologie (DLT), insbesondere ein Blockchain-System erfolgen. Dies erhöht die Sicherheit aufgrund des bessern Schutzes vor Datenverlust und/oder zusätzliche Verschlüsselung der Daten.

In einer weiteren Ausführungsform wird der gemeinsame Treffpunkt und die Treffpunktzeit unter Berücksichtigung zumindest einer bisherigen Route des aufzuladenden Elektrofahrzeugs von der Navigationseinrichtung des mobilen Ladefahrzeugs bestimmt, wobei die Software-Applikation die bisherige Route anhand von entsprechend aufgezeichneten Positionsdaten mit dem Ladewunsch an das mobile Ladefahrzeug übermittelt. Durch die Berücksichtigung der bisherigen Route kann das Fahrverhalten des Elektrofahrzeugs wie beispielsweise momentane Geschwindigkeit, bisherige Durchschnittsgeschwindigkeit und daraus abzuleitende zukünftige Bewegungsrichtung bei der Berechnung eines geeigneten gemeinsamen Treffpunkts zu Grunde gelegt werden, wodurch die Route des Elektrofahrzeugs für die gewünschte Aufladung noch weniger gestört wird als wenn nur die momentane Position des Elektrofahrzeugs zum Zeitpunkt der Übermittlung des Ladewunsches zu Grunde gelegt wird. Die bisherige Route kann durch die Software-Applikation aus einem an das mobile Gerät angeschlossenen Navigationsgerät entnommen werden oder aber durch die Software-Applikation aufgrund einer vorhandenen Navigationsfunktion im mobilen Gerät selbst aufgezeichnet werden, beispielsweise anhand von der zeitlichen Abfolge der GPS-Daten, die das mobile Gerät mittels eines GPS-Moduls selbst bestimmt.

In einer weiteren Ausführungsform übermittelt die Software-Applikation zusätzlich zur bisherigen Route auch die für das Elektrofahrzeug bis zu einem Routenziel geplante Route an das Ladefahrzeug und die Navigationseinrichtung des Ladefahrzeugs berücksichtigt die geplante Route zur Berechnung des gemeinsamen Treffpunkts und der Treffpunktzeit. Unter Berücksichtigung der weiteren geplanten Route kann der gemeinsame Treffpunkt und die entsprechende Treffpunktzeit noch besser auf die Bedürfnisse des Fahrers des Elektrofahrzeugs abgestimmt werden, sodass die Route des Elektrofahrzeugs für die gewünschte Aufladung noch weniger gestört wird. Ebenso kann hier die geplante Route des Elektrofahrzeugs durch die Software-Applikation aus einem an das mobile Gerät angeschlossenen Navigationsgerät entnommen werden oder aber durch die Software-Applikation aufgrund einer vorhandenen Navigationsfunktion im mobilen Gerät selbst bereitgestellt werden.

In einer weiteren Ausführungsform berechnet die Navigationseinrichtung des Ladefahrzeugs automatisch die schnellste Route für das Ladefahrzeug zum Treffpunkt und zeigt diese im Ladefahrzeug als Fahrroute an. Dadurch erreicht das Ladefahrzeug den gemeinsamen Treffpunkt am schnellsten, was den räumlichen Bereich möglicher geeigneter gemeinsamer Treffpunkte unter Berücksichtigung der Kundenwünsche und einer möglichst geringen Störung der Route des Elektrofahrzeugs erweitert.

In einer weiteren Ausführungsform übermittelt die Navigationseinrichtung des Ladefahrzeugs auf einem Weg zum gemeinsamen Treffpunkt zumindest periodisch die aktuelle Position des Ladefahrzeugs an die Software-Applikation für eine Abfrage im Elektrofahrzeug. Damit kann bis zur Treffpunktzeit ständig überprüft werden, ob der gemeinsame Treffpunkt vom Ladefahrzeug wie geplant zur Treffpunktzeit erreicht werden kann. Gegebenenfalls könnte das Elektrofahrzeug bei einer ungeplanten Verzögerung den gemeinsamen Treffpunkt stornieren und einen anderen Treffpunkt, gegebenenfalls mit einem anderen mobilen Ladefahrzeug vereinbaren.

In einer weiteren Ausführungsform ist die Software-Applikation dazu ausgestaltet, die aktuelle Position des Ladefahrzeugs auf dem Weg zum gemeinsamen Treffpunkt auf einer Navigationsanzeige im Elektrofahrzeug anzuzeigen. Durch eine solche Anzeige erhält der Fahrer des Elektrofahrzeugs eine einfache visuelle und damit unmittelbare Kontrolle, ob die Vereinbarungen über Treffpunkt und Treffpunktzeit eingehalten werden können.

In einer weiteren Ausführungsform ist die Software-Applikation dazu ausgestaltet, alle Positionen aller Ladefahrzeuge anzuzeigen, um eine Auswahl eines gewünschten Ladefahrzeugs für die Aufladung des Elektrofahrzeugs zu ermöglichen. Auch kann in einer Ausführungsform alternativ oder zusammen mit den vorangegangenen Ausführungsformen der Fahrer des Elektrofahrzeugs einen gemeinsamen Treffpunkt vorschlagen und ist damit nicht auf den vom Ladefahrzeug berechneten und übermittelten Treffpunkt angewiesen. Damit kann der Fahrer des Elektrofahrzeugs bereits im Vorfeld seiner Fahrt entlang einer Fahrroute seine Tankstopps hocheffizient planen. So kann er beispielsweise auch in der Mittagszeit einen Treffpunkt an einer Raststätte mit dem Ladefahrzeug verabreden oder das Elektrofahrzeug während eines Termins (beispielsweise eines Kundenbesuchs) auf dem Gelände seines Geschäftspartners aufladen lassen, wozu die Software-Applikation die notwendigen Möglichkeiten bietet.

In einer weiteren Ausführungsform verfügt das Ladefahrzeug über einen Energie- bzw. Batteriespeicher von mehr als 300 kWh und über mindestens eine DC-Ladeeinheit und mindestens eine AC-Ladeeinheit. Damit können alle gängigen Elektrofahrzeuge geladen werden. Das Ladefahrzeug kann auch mehr DC- oder AC-Ladestation umfassen, beispielsweise jeweils zwei DC-Ladeeinheiten und zwei AC-Ladeeinheiten. Somit kann ein gemeinsamer Treffpunkt auf die mehr als nur ein Elektrofahrzeug vereinbart werden, sofern die Routen der jeweiligen Elektrofahrzeuge dies als sinnvoll und als geringe Störung der Routen der jeweiligen Elektrofahrzeuge erscheinen lassen.

Die Abrechnung der Aufladung des Elektrofahrzeugs kann dabei auf Basis der Fahrzeit zum Treffpunkt und der Ladezeit jeweils auf Zeitbasis oder auf Basis der Fahrzeit zum Treffpunkt und der geladenen Energiemenge erfolgen.

Des Weiteren kann ein Verfahren zur dynamischen Aufladung von Elektrofahrzeugen in einem zuvor beschriebenen Ladesystem umfassend eine zumindest auf mindestens einem mobilen Gerät, das eine Navigationsfunktion umfasst oder jeweils mit einem Navigationsgerät verbindbar ist, installierte und ausgeführte Software-Applikation und eine Vielzahl an mobilen Ladefahrzeugen mit jeweils einer Navigationseinrichtung, umfassend folgende Schritte realisiert werden:
- Übermitteln von aktuellen Positionen eines jeden mobilen Ladefahrzeugs des Ladesystems an die Software-Applikation durch die Navigationseinrichtung des Ladefahrzeugs;
- Anzeigen zumindest des jeweils nächsten mobilen Ladefahrzeugs auf dem sich in einem Elektrofahrzeug befindlichen mobilen Gerät durch die Software-Applikation;
- Übermitteln eines Ladewunsches für das Elektrofahrzeug sowie zumindest einer aktuellen Position des Elektrofahrzeugs an das angezeigte mobile Ladefahrzeug im Falle einer aufzuladenden Elektrobatterie des Elektrofahrzeugs durch die Software-Applikation;
- Übermitteln von Koordinaten eines geeigneten gemeinsamen Treffpunktes und einer geeigneten Treffpunktzeit zur Aufladung der Elektrobatterie des Elektrofahrzeugs aufgrund des empfangenen Ladewunsches an das mobile Gerät im aufzuladenden Elektrofahrzeug durch die Navigationseinrichtung des Ladefahrzeugs; und
- Umsetzen von Treffpunkt und Treffpunktzeit in Navigationsanweisungen für einen Fahrer des aufzuladenden Elektrofahrzeugs durch die Software-Applikation zur Navigation des Elektrofahrzeugs zum gemeinsamen Treffpunkt.

Dieses Verfahren ermöglicht somit eine effektive Aufladung des Elektrofahrzeugs und berücksichtigt dabei die individuellen Bedürfnisse des Kunden des Elektrofahrzeugs und betrachtet im Gegensatz zum Stand der Technik den Ladevorgang nicht ausschließlich aus Sicht der örtlich festen Stromladestation, sondern kombiniert die Gegebenheiten der mobilen Ladestation mit der Position und Ladesituation des Elektrofahrzeugs und gegebenenfalls seiner Bewegungsdaten zu einem wesentlich effektiveren Aufladevorgang für das Elektrofahrzeug im Vergleich zum Stand der Technik.

In einer Ausführungsform des Verfahrens umfasst dieses den zusätzlichen Schritt des Bestimmens des gemeinsamen Treffpunkts und der Treffpunktzeit unter Berücksichtigung zumindest einer bisherigen Route des aufzuladenden Elektrofahrzeugs von der Navigationseinrichtung des mobilen Ladefahrzeugs, wobei die Software-Applikation die bisherige Route anhand von entsprechend aufgezeichneten Positionsdaten zusammen mit dem Ladewunsch an das mobile Ladefahrzeug übermittelt hat.

In einer weiteren Ausführungsform des Verfahrens übermittelt die Software-Applikation zusätzlich zur bisherigen Route auch die für das Elektrofahrzeug bis zu einem Routenziel geplante Route an das Ladefahrzeug und die Navigationseinrichtung des Ladefahrzeugs berücksichtigt die geplante Route zur Berechnung des gemeinsamen Treffpunkts und der Treffpunktzeit.

In einer weiteren Ausführungsform des Verfahrens umfasst dieses den zusätzlichen Schritt des zumindest periodischen Übermittelns der aktuellen Position des Ladefahrzeugs auf einem Weg zum gemeinsamen Treffpunkt durch die Navigationseinrichtung an die Software-Applikation für eine Abfrage im Elektrofahrzeug.

In einer weiteren Ausführungsform des Verfahrens umfasst dieses den zusätzlichen Schritt des Anzeigens der aktuellen Position des Ladefahrzeugs auf dem Weg zum gemeinsamen Treffpunkt durch die Software-Applikation auf einer Navigationsanzeige im Elektrofahrzeug.

In einer weiteren Ausführungsform des Verfahrens zeigt die Software-Applikation alle Positionen aller Ladefahrzeuge an, um eine Auswahl eines gewünschten Ladefahrzeugs für die Aufladung des Elektrofahrzeugs zu ermöglichen gefolgt vom Auswählen eines der angezeigten Ladefahrzeuge als das Ladefahrzeug für eine Aufladung der Elektrobatterie des Elektrofahrzeugs.

In einer weiteren Ausführungsform des Verfahrens schlägt die Software-Applikation dem Ladefahrzeug einen Treffpunkt und/oder eine gemeinsame Treffpunktzeit vor, die vom Ladefahrzeug als gemeinsamer Treffpunkt und gemeinsame Treffpunktzeit übernommen wird. Der vorgeschlagene Treffpunkt beziehungsweise die vorgeschlagene Treffpunktzeit kann von einem Bediener des mobilen Geräts, beispielsweise dem Fahrer des Elektrofahrzeugs, in dieses eingegeben werden, wozu die Software-Applikation eine entsprechende Eingabemaske zur Verfügung stellt. Der gewünschte Treffpunkt kann beispielsweise durch Angabe der Ortskoordinaten oder durch Markieren eines entsprechenden Punktes auf einer als Karte gestalteten Eingabemaske eingegeben werden.

Des Weiteren kann ein Datenspeicherprodukt mit einer auf dem Datenspeicherprodukt gespeicherten Software-Applikation geeignet zur Ausführung der auf die Software-Applikation bezogenen Schritte des Verfahrens zur dynamischen Aufladung realisiert werden.

Datenspeicherprodukte können dabei jegliche Datenspeicher geeignet zur Speicherung von Software-Programmen wie Software-Applikationen sein, beispielsweise Datensticks, CDs, Festplatten, Server und andere dafür geeignete Geräte.

Die voranstehend aufgelisteten Ausführungsformen der dynamischen Aufladung können einzeln oder in beliebiger Kombination zueinander zur Ausgestaltung der Vorrichtung zur dynamischen Aufladung und des Verfahrens zur dynamischen Aufladung verwendet werden.

Es ist ersichtlich, dass das digitale Zugangssystem die dynamische Ladung dadurch unterstützen kann, dass dem Ladefahrzeug, insbesondere einem Insassen, wie einem Fahrer, einer Serviceperson oder einem anderen Mitarbeiter, ermöglicht wird, Zugang zu dem Elektrofahrzeug zur Ladung des Energiespeichers bzw. Akkumulators gewährt wird. So kann beispielsweise eine Ladeklappe für eine elektrische Ladung des Elektrofahrzeugs freigegeben werden. Dazu werden dem Ladefahrzeug bzw. dem Insassen Daten zum Aktivieren der Freischalteinheit zumindest für einen Zeitraum durch die Aktivierungseinheit übermittelt.

Die Aktivierung der Freischalteinheit kann insbesondere wie folgt durchgeführt werden.

Wesentliche Komponenten sind dabei die Software-Applikation, die mit dem zu ladenden Fahrzeug wechselwirkt. Bei der Software-Applikation handelt es sich insbesondere um eine servergestützte Applikation, welche insbesondere eingehende Informationen der zu ladenden Fahrzeuge und/oder der Ladefahrzeuge auswertet, die Ladefahrzeuge steuert, Treffpunkte festlegt und/oder die Abrechnung regelt.

Die Wechselwirkung mit dem zu ladenden Fahrzeug kann dadurch erreicht werden, dass die Software-Applikation teilweise auf einem Mobilgerät installiert ist und/oder auf einem Mobilgerät eine mit der Software-Applikation verbundene mobile Applikation installiert ist und ausgeführt wird, wobei insbesondere über eine OBD2-Schnittstelle des Fahrzeugs Zugriff auf notwendige Fahrzeugdaten zur Verfügung gestellt wird.

Vorzugsweise erfolgt die Kommunikation zwischen den auf dem Server und dem Mobilgerät installierten Teilen der Software-Applikation, insbesondere die Weiterleitung und Speicherung der insbesondere für die Steuerung des Zugangs zu dem zu ladenden Fahrzeug, die Ladung des zu ladenden Fahrzeugs und die Abrechnung der Ladung notwendigen Daten, unter Einsatz von DLT, insbesondere über eine Block-Chain-Anwendung. Dadurch wird eine mehrfach redundante Sicherheit für alle Regelungs-, Vertrags- und Abrechnungsvorgänge herstellt, die jedoch im definierten Bereich transparent für alle Partner ist.

Beispielswiese erhält das Mobilgerät bzw. die mobile Applikation über die OBD2-Schnittstelle alle wesentlichen Informationen vom zu ladenden Fahrzeug, wie z.B. Fahrweise, Ladekapazität und Ladezustand des Akkumulators, Temperatur und Position.

Der auf dem Mobilgerät ausgeführte Teil der Software-Applikation bzw. die mobile Applikation kennt darüber hinaus das Reiseziel, wenn notwendig den Abstellplatz des zu ladenden Fahrzeugs, hat Zugriff auf Navigationsdaten und Verkehrslage und ist mit dem Internet verbunden.

Die Software-Applikation berechnet, wann das zu ladende Fahrzeug sich mit einem Ladefahrzeug wo treffen muss und wieviel elektrische Energie benötigt wird.

Dabei wird die DLT, insbesondere Blockchaintechnologie, genutzt, um die entsprechenden Daten an den Server zu übermitteln bzw. diese Daten zu speichern. Der Server, mittels dem die zu ladenden Fahrzeuge und die Ladefahrzeuge überwacht werden, bestätigt über die DLT bzw. Blockchain dem auf dem Mobilgerät ausgeführten Teil der Software-Applikation bzw. der mobilen Applikation das Treffen des zu ladenden Fahrzeugs und den geplanten Treffpunkt. Diese sind jedoch nicht statisch, sondern können aufgrund von der Software-Applikation und/oder der mobilen Applikation erfassten Veränderungen angepasst werden.

Die Software-Applikation erhält ferner auch Daten, die es ermöglichen, über das Zugangssystem dem Ladefahrzeug einen Zugang zu dem zu ladenden Fahrzeug für die Ladung zu ermöglichen. Dies kann unabhängig von der Verwendung der DLT bzw. Blockchaintechnologie erfolgen. Bevorzugt ist dabei, dass die Daten nur über eine begrenzte Gültigkeitsdauer verfügen, die an den geplanten Zeitpunkt des Treffens zwischen Ladefahrzeug und zu ladendem Fahrzeug angepasst ist. Bevorzugt ermöglichen die Daten nur einen Zugang eine bestimmte Zeit vor bzw. nach einem berechneten Zeitpunkt des Treffens. Die Daten können beispielsweise einen Code umfassen, der nur einmalig genutzt werden kann. Nach der einmaligen Nutzung oder dem Verstreichen des Gültigkeitszeitraumes kann der Code nicht mehr für einen Zugang zu dem zu ladenden Fahrzeug genutzt werden. Die zum Zugang notwendigen Daten werden insbesondere wie folgt generiert bzw. übertragen.

Persönliche Daten der Beteiligten Personen, wie zum Beispiel Bewegungsprofile, verbleiben als hochsensible Daten innerhalb der auf dem Mobilgerät ausgeführten Teil der Softwareapplikation bzw. der mobilen Applikation in dem zu ladenden Fahrzeug. Das Mobilgerät meldet nur eine ID des Kunden und Zeit und den Ort des geplanten Treffpunktes an den Server. Dabei erfolgt die Übertragung der Daten insbesondere über die DLT bzw. Blockchain verschlüsselt.

Für jeden Ladevorgang wird dabei ein neuer DLT bzw. Blockchain Vorgang generiert. Auch neue Aufträge des gleichen Kunden oder Wiederholungsaufträge führen zu einem neuen DLT bzw. Blockchain-Vorgang. Auf diese Weise wird verhindert, dass individuelle Auftragsdaten, Zugangscodes oder andere mit dem Ladevorgang in Zusammenhang stehende Daten wiederverwendet werden können, nachdem der Ladevorgang abgeschlossen und die Blockchain geschlossen wurde. Aufgrund der Verschlüsselung durch die DLT bzw. Blockchain ist ein Abfischen von diesen Daten nicht so möglich, dass die Daten missbraucht werden können, da die Daten nutzlos für andere Lade- bzw. Zahlungsvorgänge sind. So ist jeder Ladeauftrag einmalig und aufgrund der DLT bzw. Blockchain Technologie nicht veränderbar.

Mit einem einzelnen Blockchainvorgang wird eine individuelle Auftragsnummer verknüpft, mit der nur ein einzelner Ladevorgang bzw. Ladeauftrag ausgelöst werden kann.

Der Server kann insbesondere als ein leistungsstarker geclusterter Server ausgebildet sein oder als Cloudanwendung ausgebildet sein. Der Server steuert alle Ladefahrzeuge und handelt mit dem zu ladenden Fahrzeug mögliche Treffpunkte innerhalb der übermittelten Parameter aus. Dazu werden von der Software-Applikation mittels Blockchain alle für die Abarbeitung des Ladevorgangs notwendigen Daten ermittelt, mit den realen Gegebenheiten und Möglichkeiten abgeglichen und dem Benutzer des zu ladenden Fahrzeugs eine Auftragsbestätigung angeboten. Kommt es zu einer Annahme der Auftragsbestätigung, werden die für den Ladevorgang notwendigen Daten, insbesondere Code für das Zugangssystem, Treffpunkt, Treffpunktzeit an das zu ladende Fahrzeug, das Ladefahrzeug, insbesondere den Betreiber des zu ladenden Fahrzeugs bzw. den Betreiber des Ladefahrzeugs, übermittelt.

Ferner wird über die Software-Applikation die Durchführung der Ladung veranlasst und überwacht, wobei dieser Vorgang, insbesondere aufgrund der Verwendung der Blockchain-Technologie, nach Annahme der Auftragsbestätigung um einen automatischen Ablauf, in den grundsätzlich nicht eingegriffen werden kann. Kommt es zu einer Panne eines Ladefahrzeugs wird ein neuer Blockchain Vorgang generiert und dieser dann mit einem alternativen Ladefahrzeug durchgeführt.

Die Verwendung der DLT bzw. Blockchain bietet den Vorteil, dass auf bestehende Blockchain-Anwendung aufgebaut werden kann und damit neben der logistischen Abwicklung des Ladevorganges auch Zahlungs- und Abrechnungsvorgänge bzw. deren Formalitäten abgewickelt werden können.

Der Server bzw. die Software-Applikation kann alle Verträge mit den Betreibern der zu ladenden Fahrzeuge bzw. der Ladefahrzeuge verwalten, alle Vorgänge abrechnen und steuern.

Der Server bietet ferner über die DLT- bzw. Blockchain eine Schnittstelle zu Partnern, wie Stromanbietern, anderen Anbietern von Ladefahrzeugen oder dem Flottenmanagement von Firmen und Organisationen.

Die DLT bzw. Blockchain kann als ERC20/ERC223 Lösung realisiert sein und insbesondere auf einer bestehenden Blockchain-Anwendung ablaufen.

Aus dem zuvor angeführten ergibt sich der Vorteil, dass die in dem Ladesystem verwendete DLT bzw. Blockchain Technoloige die Aufgabe einer dezentralen mehrfach redundanten Datenbank wahrnimmt und die Möglichkeit bietet, darüber hinaus das Vertragsmanagement über Smart Contracts (elektronische automatische Verträge) mit hoher Sicherheit durchzuführen und zu automatisieren.

Es wird so möglich, eine verschlüsselte Verbindung zum Austausch der notwendigen Daten zwischen allen Parteien bereitzustellen, wobei bevorzugt durch Smart Contracts geregelt wird, wer Zugriff auf welche Daten hat und wer welche Informationen wie einsehen kann.

Die Abrechnung kann bevorzugt über eigene Token, welche vorzugsweise ebenfalls durch Smart Contracts mit klassischen Zahlungsanbietern, wie Kreditkartenanbietern, am SEPA-Zahlungsverkehr Beteiligten und/oder Anbietern wie PayPal, verbunden sind, erfolgen.

Durch die Verwendung der DLT bzw. Blockchain-Technologie ist eine Optimierung von Kosten aufgrund der reduzierten für die Abwicklung der Ladung notwendigen Hard- und Software-Struktur sowie den hohen Grad an Automatisierung und der damit einhergehenden Reduzierung manueller Eingriffe möglich, ohne die Sicherheit zu reduzieren. Ferner verbessert die Verwendung dieser Technologie sichere und klar geregelte Kommunikationsmöglichkeiten zwischen einer unbegrenzten Anzahl von Partnern. Die Server- oder Cloudressourcen sowie die Software-Applikation bzw. die mobile Applikation müssen keine angreifbaren Schnittstellen öffnen.

Das zuvor beschriebene Ladesystem zur dynamischen Aufladung kann gemäß der folgenden Beispiele realisiert sein, wobei diese Realisierung zusätzlich oder unabhängig von dem beanspruchten digitalen Zugangssystem realisiert sein kann.

B1. Ein Ladesystem (1001) zur dynamischen Aufladung von Elektrofahrzeugen (1002), insbesondere einem Fahrzeug mit einem digitalen Zugangssystem gemäß den Ansprüchen, umfassend eine zumindest auf mindestens einem mobilen Gerät (1003), das eine Navigationsfunktion umfasst oder mit einem Navigationsgerät (1022) verbindbar ist, und/oder auf mindestens einem Server installierte und ausgeführte Software-Applikation (1004) und eine Vielzahl an mobilen Ladefahrzeugen (1005) mit jeweils einer Navigationseinrichtung (1051), die unter anderem dazu ausgestaltet ist, eine aktuelle Position (P5) eines jeden mobilen Ladefahrzeugs (1005) des Ladesystems (1001) der Software-Applikation (1004) zu übermitteln, wobei die Software-Applikation (1004) dazu ausgestaltet ist, auf dem sich in einem Elektrofahrzeug (1002) befindlichen mobilen Gerät (1003) zumindest das jeweils nächste mobile Ladefahrzeug (1005) anzuzeigen und im Falle einer aufzuladenden Elektrobatterie (1021) des Elektrofahrzeugs (1002) einen Ladewunsch für dieses Elektrofahrzeug (1002) sowie zumindest eine aktuelle Position (P2) des Elektrofahrzeugs (1002) an das angezeigte mobile Ladefahrzeug (1005) zu übermitteln, wobei die Navigationseinrichtung (1051) des Ladefahrzeugs (1005) dazu ausgestaltet ist, aufgrund des empfangenen Ladewunsches Koordinaten eines geeigneten gemeinsamen Treffpunktes (TP) und einer geeigneten Treffpunktzeit (TZ) zur Aufladung der Elektrobatterie (1021) des Elektrofahrzeugs (1002) an das mobile Gerät (1003) im aufzuladenden Elektrofahrzeug (1002) zu übermitteln, wobei die Software-Applikation (1004) dazu ausgestaltet ist, Treffpunkt (TP) und Treffpunktzeit (TZ) in Navigationsanweisungen für einen Fahrer des aufzuladenden Elektrofahrzeugs (1002) umzusetzen.

B2. Das Ladesystem (1001) nach Beispiel B1, dadurch gekennzeichnet, dass die Software-Applikation (1004) die Navigationsanweisungen aus gemeinsamen Treffpunkt (TP) und Treffpunktzeit (TZ) für das Elektrofahrzeug (1002) erst erstellt, nachdem über die Software-Applikation (1004) eine Bestätigung des Aufladewunsches am gemeinsamen Treffpunkt (TP) an das Ladefahrzeug (1005) übermittelt wurde und/oder ein Datenaustausch zwischen dem Server und dem Mobilgerät und/oder eine Datenspeicherung und/oder ein Datenaustausch innerhalb der Software-Applikation zumindest teilweise unter Nutzung von Distributed Ledger Technologie (DLT), insbesondere eines Blockchain-Systems, erfolgt.

B3. Das Ladesystem (1001) nach Beispiel B1 oder B2, dadurch gekennzeichnet, dass der gemeinsame Treffpunkt (TP) und die Treffpunktzeit (TZ) unter Berücksichtigung zumindest einer bisherigen Route (BR) des aufzuladenden Elektrofahrzeugs (1002) von der Navigationseinrichtung (1051) des mobilen Ladefahrzeugs (1005) bestimmt wird, wobei die Software-Applikation (1004) die bisherige Route (BR) anhand von entsprechend aufgezeichneten Positionsdaten mit dem Ladewunsch an das mobile Ladefahrzeug (1005) übermittelt.

B4. Das Ladesystem (1001) nach Beispiel B3, dadurch gekennzeichnet, dass die Software-Applikation (1004) zusätzlich zur bisherigen Route (BR) auch die für das Elektrofahrzeug (1002) bis zu einem Routenziel (RZ) geplante Route (GR) an das Ladefahrzeug (1005) übermittelt und die Navigationseinrichtung (1051) des Ladefahrzeugs (1005) die geplante Route (GR) zur Berechnung des gemeinsamen Treffpunkts (TP) und der Treffpunktzeit (TZ) berücksichtigt.

B5. Das Ladesystem (1001) nach einem der voranstehenden Beispiele B1 bis B4, dadurch gekennzeichnet, dass die Navigationseinrichtung (1051) des Ladefahrzeugs (1005) automatisch die schnellste Route für das Ladefahrzeug (1005) zum Treffpunkt (TP) berechnet und im Ladefahrzeug (1005) als Fahrroute (FRL) anzeigt.

B6. Das Ladesystem (1001) nach einem der voranstehenden Beispiele B1 bis B5, dadurch gekennzeichnet, dass die Navigationseinrichtung (1051) des Ladefahrzeugs (1005) auf einem Weg zum gemeinsamen Treffpunkt (TP) zumindest periodisch die aktuelle Position (P5) des Ladefahrzeugs (1005) an die Software-Applikation (1004) für eine Abfrage im Elektrofahrzeug (1002) übermittelt.

B7. Das Ladesystem (1001) nach Beispiel B6, dadurch gekennzeichnet, dass die Software-Applikation (1004) dazu ausgestaltet ist, die aktuelle Position (P5) des Ladefahrzeugs (1005) auf dem Weg zum gemeinsamen Treffpunkt (TP) auf einer Navigationsanzeige im Elektrofahrzeug (1002) anzuzeigen.

B8. Das Ladesystem (1001) nach einem der voranstehenden Beispiele B1 bis B7, dadurch gekennzeichnet, dass die Software-Applikation (1004) dazu ausgestaltet ist, alle Positionen (P5) aller Ladefahrzeuge (1005) anzuzeigen, um eine Auswahl eines gewünschten Ladefahrzeugs (1005) für die Aufladung des Elektrofahrzeugs (1002) zu ermöglichen.

B9. Das Ladesystem (1001) nach einem der voranstehenden Ansprüche, dadurch gekennzeichnet,
dass die Software-Applikation (1004) dazu ausgestaltet ist, dem Ladefahrzeug (1005) einen Treffpunkt (TP) und/oder eine gemeinsame Treffpunktzeit (TZ) vorzuschlagen, die vom Ladefahrzeug (1005) als gemeinsamer Treffpunkt (TP) und gemeinsame Treffpunktzeit (TZ) übernommen wird.

B10. Das Ladesystem (1001) nach einem der voranstehenden Beispiele B1 bis B9, dadurch gekennzeichnet,
dass das Ladefahrzeug (1005) über einen Energiespeicher bzw. Batteriespeicher (1052) von mehr als 300 kWh und über mindestens eine DC-Ladeeinheit (1053) und mindestens eine AC-Ladeeinheit (1054) verfügt.

B11. Ein Verfahren (1100) zur dynamischen Aufladung von Elektrofahrzeugen in einem Ladesystem nach einem der Beispiele B1 bis B10 umfassend eine zumindest auf einem mobilen Gerät (1003), das eine Navigationsfunktion umfasst oder jeweils mit einem Navigationsgerät (1022) verbindbar ist, installierte und ausgeführte Software-Applikation (1004) und eine Vielzahl an mobilen Ladefahrzeugen (1005) mit jeweils einer Navigationseinrichtung (1051), umfassend folgende Schritte:
- Übermitteln (1110) von aktuellen Positionen (P5) eines jeden mobilen Ladefahrzeugs (1005) des Ladesystems (1001) an die Software-Applikation (1004) durch die Navigationseinrichtung (1051) des Ladefahrzeugs (1005);
- Anzeigen (1120) zumindest des jeweils nächsten mobilen Ladefahrzeugs (1005) auf dem sich in einem Elektrofahrzeug (1002) befindlichen mobilen Gerät (1003) durch die Software-Applikation;
- Übermitteln (1130) eines Ladewunsches für das Elektrofahrzeug (1002) sowie zumindest einer aktuellen Position (P2) des Elektrofahrzeugs (1002) an das angezeigte mobile Ladefahrzeug (1005) im Falle einer aufzuladenden Elektrobatterie (1021) des Elektrofahrzeugs (1002) durch die Software-Applikation;
- Übermitteln (1140) von Koordinaten eines geeigneten gemeinsamen Treffpunktes (TP) und einer geeigneten Treffpunktzeit (TZ) zur Aufladung der Elektrobatterie (1021) des Elektrofahrzeugs (1002) aufgrund des empfangenen Ladewunsches an das mobile Gerät (1003) im aufzuladenden Elektrofahrzeug (1002) durch die Navigationseinrichtung (1051) des Ladefahrzeugs (1005); und
- Umsetzen (1150) von Treffpunkt (TP) und Treffpunktzeit (TZ) in Navigationsanweisungen für einen Fahrer des aufzuladenden Elektrofahrzeugs (1002) durch die Software-Applikation (1004) zur Navigation des Elektrofahrzeugs (1002) zum gemeinsamen Treffpunkt (TP).

B12. Das Verfahren (1100) nach Beispiel B11, umfassend den zusätzlichen Schritt des Bestimmens (1160) des gemeinsamen Treffpunkts (TP) und der Treffpunktzeit (TZ) unter Berücksichtigung zumindest einer bisherigen Route (BR) des aufzuladenden Elektrofahrzeugs (1002) von der Navigationseinrichtung (1051) des mobilen Ladefahrzeugs (1005), wobei die Software-Applikation (1004) die bisherige Route (BR) anhand von entsprechend aufgezeichneten Positionsdaten zusammen mit dem Ladewunsch an das mobile Ladefahrzeug (1005) übermittelt hat.

B13. Das Verfahren (1100) nach Beispiel B12, wobei die Software-Applikation (1004) zusätzlich zur bisherigen Route (BR) auch die für das Elektrofahrzeug (1002) bis zu einem Routenziel (RZ) geplante Route (GR) an das Ladefahrzeug (1005) übermittelt und die Navigationseinrichtung (1051) des Ladefahrzeugs (1005) die geplante Route (GR) zur Berechnung (1160) des gemeinsamen Treffpunkts (TP) und der Treffpunktzeit (TZ) berücksichtigt.

B14. Das Verfahren (1100) nach einem der Beispiele B11 bis B13, umfassend den zusätzlichen Schritt des zumindest periodischen Übermittelns (1170) der aktuellen Position (P5) des Ladefahrzeugs (1005) auf einem Weg zum gemeinsamen Treffpunkt durch die Navigationseinrichtung (1051) an die Software-Applikation (1004) für eine Abfrage im Elektrofahrzeug (1002).

B15. Das Verfahren (1100) nach Beispiel B14, umfassend den zusätzlichen Schritt des Anzeigens (1180) der aktuellen Position (P5) des Ladefahrzeugs (1005) auf dem Weg zum gemeinsamen Treffpunkt (TP) durch die Software-Applikation (1004) auf einer Navigationsanzeige im Elektrofahrzeug (1002).

B16. Das Verfahren (1100) nach einem der Beispiele B11 bis B15, wobei die Software-Applikation (1004) alle Positionen (P5) aller Ladefahrzeuge (1005) anzeigt, um eine Auswahl eines gewünschten Ladefahrzeugs (1005) für die Aufladung des Elektrofahrzeugs (1002) zu ermöglichen, gefolgt vom Auswählen (1190) eines der angezeigten Ladefahrzeuge (1005) als das Ladefahrzeug (1005) für eine Aufladung der Elektrobatterie (1021) des Elektrofahrzeugs (1002).

B17. Datenspeicherprodukt (1010) mit einer auf dem Datenspeicherprodukt (1010) gespeicherten Software-Applikation (1004) geeignet zur Ausführung der auf die Software-Applikation (1004) bezogenen Schritte des Verfahrens (1100) nach einem der Beispiele B11 bis B16.

Das zuvor beschriebene dynamische Ladesystem kann insbesondere Ladefahrzeuge umfassen, die besondere, nachfolgend erläuterte Energiespeicher aufweisen, um eine Ladung des Elektrofahrzeugs zu ermöglichen. Diese nachfolgend beschriebenen Energiespeicher können allerdings auch in lokalen bzw. stationären Ladestationen, Stromladestationen bzw. Stromtankstellen eingesetzt werden bzw. von diesen umfasst sein.

Diese Energiespeicher für Stromtankstellen bzw. für Ladefahrzeuge weisen ein Steuerungsmodul zur Aufnahme, Abgabe oder Weiterleitung von elektrischer Energie zwischen den Stromanschlüssen des Energiespeichers gleichzeitig mit unterschiedlicher Spannung und Leistung auf.

Ein Elektrofahrzeug mit einem Elektroantrieb ist einem gewöhnlichen Fahrzeug mit Verbrennungsmotor in vielen Eigenschaften überlegen. Elektroautos sind obendrein als emissionsfreie Fahrzeuge insbesondere in Ballungsräumen sehr geeignet. Im Vergleich zu Fahrzeugen mit Verbrennungsmotoren verfügen aktuelle Elektrofahrzeuge jedoch aufgrund der geringen Ladekapazitäten der Energiespeicher im Fahrzeug, typischerweise Batterien (Akkus/Akkumulatoren), zumeist über erheblich geringere Reichweiten und müssen daher oft geladen werden. Längere Fahrten mit Elektrofahrzeugen benötigen heutzutage immer noch eine Ladeplanung. Bei einer Ladestation für Elektrofahrzeuge handelt es sich um eine speziell für Elektrofahrzeuge konzipierte Ladestationen, die in ihrer Bauweise meist einer Zapfsäule für konventionelle Kraftstoffe nachempfunden ist. Die Verbreitung von Ladestationen zur Förderung der Elektromobilität ist ein wichtiger Baustein der Verkehrswende. Um die Nutzerfreundlichkeit von Elektrofahrzeugen zu steigern, wird eine schnellere Ladung (Strombetankung) angestrebt. Ladezeiten von einer Stunde sind zwar technisch gut erreichbar, aber für den Fernfahrbetrieb von Elektrofahrzeugen immer noch deutlich zu lang. Mit sogenannten Schnellladestationen könnte die elektrische Energie für über 150 Fahrkilometer (rund 30 kWh) in 10 bis 20 Minuten aus dem Netz in schnell-ladefähige Fahrzeugbatterien geladen werden.

Die derzeitige Ladeinfrastruktur ist aber auf bestehende Anschlusswerte aus dem lokalen Stromnetz angewiesen. Das Bereitstellen sehr hoher Ströme für die parallele Schnellaufladung mehrerer Fahrzeuge ist aufgrund der durch das allgemeine Stromnetz bedingten Restriktionen (beispielsweise die Beschränkung der verfügbaren Strommenge durch die Hauptsicherung des Netzanschlusses) meist nicht möglich.

DE 10 2010 002 237 A1 offenbart ein Verfahren und eine Vorrichtung zur elektrischen Energieverteilung in einer Stromtankstelle mit mehreren an ein internes Versorgungsnetz der Stromtankstelle angeschlossenen Ladestationen zum parallelen Aufladen mehrerer Elektrofahrzeuge, wo mit Hilfe einer intelligenten Steuereinrichtung ein Beladungsplan mit zeitlich gestaffelten Ladezeiten für eine Mehrzahl an Elektrofahrzeugen in der Stromtankstelle erstellt wird, der eine Aufladung der Elektrofahrzeuge ohne Überlastung des internen Stromnetzes der Stromtankstelle und des Anschlusses an das allgemeine Stromnetz ermöglicht. Die intelligente Steuereinrichtung ist dabei als Schnittstelle zwischen dem allgemeinen Stromnetz und dem internen Versorgungsnetz angeordnet. Hierbei versorgt die intelligente Steuereinrichtung das interne Versorgungsnetz mit einer einzigen für das Versorgungsnetz vorgesehenen Spannung, sodass die Ladestationen der Stromtankstelle in ihrer Gesamtheit auf die vom internen Versorgungsnetz festgelegte Spannung und maximal transferierbare Leistung zur Ladung der Elektrofahrzeuge angewiesen sind.

Zur Bereitstellung zusätzlicher Leistung können alternativ weitere lokale Stromquellen wie beispielsweise Wind- oder Solarkraftanlagen mit einer auf den Bedarf der Stromtankstelle angepasste maximal lieferbare Energiemenge pro Zeiteinheit zusätzlich zum allgemeinen Stromnetz an eine Stromtankstelle angeschlossen werden, um in Perioden mit hoher Last für die Stromtankstelle das allgemeine Stromnetz nicht zu überlasten. Allerdings liefern diese zusätzlichen Stromquellen den benötigten Strom im Vergleich zum allgemeinen Stromnetz in einer mit den äußeren Bedingungen (Windstärke, Sonneneinstrahlung) zeitlich stark variierenden Menge und zusätzlich mit anderen Parametern, beispielsweise mit unterschiedlicher Spannung wie Niederspannung, Mittelspannung oder Hochspannung und/oder einer anderen Wellenform (Gleichspannung statt Wechselspannung).

Zur Speicherung der Energie können entsprechende Energiespeicher eingesetzt werden. Die nachfolgend beschriebenen Energiespeicher sind besonders für die Anwendung in Stromtankstellen bzw. Ladefahrzeugen geeignet, die gleichzeitig sowohl an Niederspannung als auch an Mittel- und Hochspannung als Eingangsquelle angeschlossen werden und flexibel unterschiedlichste Spannungen von 230 Volt bis 50 kV als Ausgangsquelle liefern können. Dies ermöglicht es, dass die Ladestation für die unterschiedlichsten Elektrofahrzeuge die elektrische Energie flexibel ohne Strombegrenzung durch die Ladestation mit der jeweils optimalen Spannung und Leistung liefern kann.

Damit kann eine Stromtankstelle bzw. ein Ladefahrzeug betrieben werden, die sehr flexibel unterschiedlichste Spannungen als Eingangsspannungen verarbeiten und flexibel an unterschiedlichste Abnehmer mit unterschiedlichen Bedingungen und Mengen liefern kann.

Ein solcher Energiespeicher für Stromtankstellen umfasst eine Energiespeichereinheit und ein mit der Energiespeichereinheit verbundenes Steuerungsmodul zumindest mit mehreren Einspeise-Stromanschlüssen zur Aufnahme von elektrischer Energie und mit mehreren Ausspeise-Stromanschlüssen zur Abgabe von elektrischer Energie, wobei das Steuerungsmodul zur Weiterleitung der über die Einspeise-Stromanschlüssen aufgenommenen elektrischen Energie an die Energiespeichereinheit und/oder an die Ausspeise-Stromanschlüsse sowie der abzugebenden elektrischen Energie von den Einspeise-Stromanschlüssen und/oder der Energiespeichereinheit über die Ausspeise-Stromanschlüsse zur bedarfsgerechten Abgabe an ein oder mehrere Ladesäulen für Elektrofahrzeuge vorgesehen ist, wobei das Steuerungsmodul mehrere entsprechend angesteuerte Spannungswandler umfasst, um die Aufnahme, Abgabe oder Weiterleitung der elektrischen Energie zwischen den Einspeise- und Ausspeise-Stromanschlüssen gleichzeitig mit unterschiedlicher Spannung und Leistung zu ermöglichen, wozu das Steuerungsmodul die an den Einspeise-Stromanschlüssen ankommende elektrische Energie und die an den Ausspeise-Stromanschlüssen abgefragte elektrische Energie überwacht und mittels der Spannungswandler geeignet an den jeweiligen Bedarf anpasst.

Der Begriff "Energiespeicher" bezeichnet alle reversibel ladbaren Energiespeicher, die eine für eine Ladung eines Elektrofahrzeugs geeignete Kapazität und Leistungsaufnahme beziehungsweise Leistungsabgabe bereitstellen können, beispielsweise für die Aufnahme im Bereich von 230V bis 50kV, wobei die Energie als Gleichspannung und/oder Wechselspannung angeboten beziehungsweise abgenommen werden kann.

Die Energiespeichereinheit im Energiespeicher ist die Einheit, die die Energie innerhalb des Energiespeichers speichert. Dazu wird die über die Einspeise-Stromanschlüsse aufgenommene Energie zur Speicherung in der Energiespeichereinheit durch das Steuerungsmodul des Energiespeichers in eine für die jeweilige Energiespeichereinheit geeignete Spannung umgewandelt. Gleiches gilt bei der Abgabe von Energie aus der Energiespeichereinheit an die Ausspeise-Stromanschlüsse. Beispielsweise ist die Energiespeichereinheit eine Lithium-Eisenphosphat-Batterie mit mehreren Batteriezellen beziehungsweise eine Anordnung aus einer Vielzahl solcher Batterien.

Der Begriff "Stromanschlüsse" zum Einspeisen und Ausspeisen von Energie bezeichnet alle Schnittstellen, die geeignet sind, an ein Stromkabel angeschlossen zu werden, um den darüber bereitgestellten Strom aufzunehmen beziehungsweise diesen an das Stromkabel abzugeben. Stromanschlüsse umfassen Steckverbindungen oder induktive Verbindungen zum Transfer von Strom in das oder aus dem jeweiligen Stromkabel. Der oder die Stromanschlüsse zum Anschluss an das allgemeine Stromnetz sind dem Fachmann bekannt, ebenso die Stromanschlüsse zum Verbinden des Energiespeichers mit Solar-und/oder Windkraftanlagen, die beispielsweise Mittelspannung bis circa 50kV liefern könnten. Die Anzahl der jeweiligen Einspeise-Stromanschlüsse und die der Ausspeisestromanschlüsse können je nach Anwendung variieren. Der erfindungsgemäße Stromspeicher umfasst dabei zumindest zwei separate Einspeise-Stromanschlüsse und zumindest zwei separate Ausspeisestromanschlüsse, wobei zumindest ein Ausspeise-Stromanschluss auch als Rückspeiseanschluss für das allgemeine Stromnetz dienen kann.

Das Steuerungsmodul umfasst zur geeigneten Aufnahme, Weiterleitung und Abgabe von Energie bei den jeweils unterschiedlich abgebotenen Einspeiseströmen beziehungsweise den jeweils unterschiedlich benötigten Ausspeiseströmen und der entsprechenden gleichzeitigen Umwandlung innerhalb des Steuerungsmoduls von Gleichstrom in Wechselstrom und umgekehrt sowie der Anpassung des Spannungswertes beziehungsweise der Spannungsamplitude Spannungswandler in Form von ein oder mehrere Transformatoren und Umrichter pro Stromanschluss auf der Einspeise- und Ausspeiseseite und entsprechende Steuerungselektronik zur Steuerung der aktiven Komponenten der Transformatoren und Umrichter. Die Energiespeichereinheit kann bei der Umwandlung als balancierende Einheit zur Stabilisation der Umwandlung beziehungsweise zum Hinzufügen fehlender Energie oder zur Aufnahme überschüssiger Energie verwendet werden. Das Steuerungsmodul umfasst zumindest eine Prozessoreinheit und einen Datenspeicher, auf denen entsprechende Steuerprogramme ausgeführt und gespeichert werden, um die bedarfsgerechte Weiterleitung von Energie steuern zu können. Das Steuerprogramm steuert entsprechend die Spannungswandler.

Der Begriff "Stromtankstelle" bezeichnet alle Arten von Einrichtungen, die in der Lage sind, mehrere Elektrofahrzeuge parallel zueinander (gleichzeitig) und unabhängig von den jeweiligen Typen an Elektrofahrzeugen und ihren Ladeanforderungen mit elektrischer Energie mit jeweils für die jeweiligen Elektrofahrzeuge besonders geeigneten Parametern für Wellenform (Gleichstrom bzw. DC/ Wechselstrom bzw. AC), Spannung und Leistung zum Aufladen deren Fahrzeugbatterien zu versorgen, ohne dabei die Stromkabel beziehungsweise Versorgungsnetze zu überlasten. Der Begriff "bedarfsgerechte Abgabe" bezeichnet dabei die dynamische Anpassung der Abgabe von Energie in Form und Menge über die jeweiligen Ausspeise-Stromanschlüsse durch das Steuerungsmodul, damit an den Ladestationen immer die tatsächlich benötigte Energie mit optimierten Spannungs- und Leistungswerten zur Ladung des oder der Elektrofahrzeuge bereitgestellt wird. An jedem Ausspeise-Stromanschluss können durch die dynamische Steuerung des Steuermoduls unterschiedliche Spannungen und Leistungen individuell angepasst für das jeweils gerade angeschlossene Elektrofahrzeug bereitgestellt werden. Die Anforderungen an Strom und Leistung definiert durch die Gegebenheiten des Elektrofahrzeugs kann dem Steuermodul durch Art der Steckverbindung oder durch Eingabe an einer Ladesäule oder durch eine geeignete Datenkommunikation zwischen Steuermodul und dem Elektrofahrzeug mitgeteilt werden, wonach das Steuermodul mittels seiner Transformatoren und Umrichter an dem betreffenden Ausspeise-Stromanschluss Strom, Leistung und Wellenform (Gleichspannung bzw. DC oder Wechselspannung bzw. AC) in der gewünschten Form mit maximal möglicher Leistung bereitstellt.

Der hier beschriebene Energiespeicher für Stromtankstellen ermöglicht es somit, eine Stromtankstelle zu betreiben, die sehr flexibel unterschiedlichste Spannungen als Eingangsspannungen verarbeiten und flexibel an unterschiedlichste Abnehmer mit unterschiedlichen Bedingungen und Mengen liefern kann.

In einer Ausführungsform ist einer der Einspeise- Stromanschlüsse dazu vorgesehen, mit dem allgemeinen Stromnetz verbunden zu werden und ein oder mehrere andere der Einspeise-Stromanschlüsse sind zum Anschluss zumindest an eine regenerative Energiequelle, vorzugsweise an eine Wind- und/oder Solarenergieanlage, ausgestaltet. Das allgemeine Stromnetz kann dabei die Grundversorgung der Stromtankstelle mit Ladestrom für die Elektrofahrzeuge sicherstellen, während die regenerativen Energiequellen wie Wind- oder Solarenergie einerseits als Zusatzenergiequellen für Spitzenbelastungen zur Vermeidung einer Überlastung des Energiespeichers beziehungsweise des Versorgungsnetzes der Stromtankstelle dienen als auch als CO2-freie Energiequellen zur Verbesserung des Energiemixes.

In einer weiteren Ausführungsform sind jeweils mindestens einer der Ausspeise-Stromanschlüsse für einpolige und/oder dreipolige Anschlüsse zur Abgabe von Gleichstrom- und/oder Wechselstrom ausgestaltet. Hierbei können die Ausspeise-Stromanschlüsse beispielsweise als einphasige 230V/10A/2,3 kW-Anschlüsse, einphasige 230V/16A/3,6kW-Anschlüsse, dreiphasige 400V/16A/11kW-Anschlüsse, dreiphasige 400V/32A/22kW-Anschlüsse, dreiphasige 400V/63A/43kW-Anschlüsse, 230V/47kW-Anschlüsse, Ladetyp-1-Anschlüsse, Ladetyp-2-Anschlüsse, CCS-Combo-1-Anschlüsse, CCS-Combo-2-Anschlüsse, CHAdeMO-Anschlüsse oder Tesla-135kW-Supercharger-Anschlüsse ausgeführt sein. Die Energieübertragung kann dabei mittels Kabelsteckverbindung oder induktiv geschehen. Eine induktive Energieübertragung vermeidet verschleißende Steckverbindungen an den Stromanschlüssen. Die Ladeleistung ist ein wesentlicher Faktor für die Ladedauer. Wechselstrom-Anschlüsse von Typ-2 bieten 11kW oder 22kW an. Höhere Leistungen bieten Gleichstromanschlüsse, wo für CHAdeMO und CCS derzeit bis zu 50kW üblich sind. Die erfindungsgemäßen Ausspeise-Stromanschlüsse können für den Verbraucher (Elektrofahrzeug) bis zum 600kW anbieten. Ein Rückspeiseanschluss für das allgemeine Stromnetz kann als 20KV-Anschluss ausgeführt sein. Die erfindungsgemäßen Ausspeise-Stromanschlüsse liefern Strom mit einer maximalen Ladeleistung für alle angeschlossenen Ladestationen und ermöglichen daher immer die schnellstmögliche Ladezeit für den Abnehmer, hier das Elektrofahrzeug, wobei die Ladezeit nur durch die Gegebenheiten beim Abnehmer selber beschränkt werden.

In einer weiteren Ausführungsform ist das Steuerungsmodul dazu ausgestaltet, neben der Weiterleitung von elektrischer Energie von den Einspeise-Stromanschlüssen zu den Ausspeise-Stromanschlüssen zur Abgabe der elektrischen Energie an die Ladestationen eine Lastprüfung in mindestens einem an die Ausspeisestromanschlüsse angeschlossenen Versorgungsnetz durchzuführen und bei Bedarf zusätzliche elektrische Energie aus der Energiespeichereinheit für das jeweilige Versorgungsnetz bereitzustellen. Hiermit wird eine Überlastung auf Seiten der Einspeise-Stromanschlüsse und der Ausspeise-Stromanschlüsse sowie in dem Versorgungsnetz zwischen Ladesäule und Energiespeicher vermieden.

In einer weiteren Ausführungsform ist das Steuerungsmodul mit ein oder mehreren Lastsensoren zur Lastprüfung in dem jeweiligen angeschlossenen Versorgungsnetz ausgestattet. Hierbei können Stromwandler als Wechselstromsensoren oder Gleichstromsensoren wie Hallsonden, Sensoren mit Reed-Schaltern oder thermische Sensoren verwendet werden. Sofern alle Versorgungsnetze mit Lastsensoren überwacht werden, kann das Steuerungsmodul des erfindungsgemäßen Energiespeichers eine Überlastung in allen Versorgungsnetzen feststellen und mit einer entsprechenden Stromregelung darauf reagieren.

In einer weiteren Ausführungsform ist das Steuerungsmodul im Falle keiner durch die Lastprüfung festgestellten Überlastung des Versorgungsnetzes zur Weiterleitung zumindest eines Teils der über die Einspeise-Stromanschlüsse aufgenommenen elektrischen Energie an die Energiespeichereinheit vorgesehen. Somit kann die Energiespeichereinheit als Vorbereitung für eventuell zusätzlich für die gleichzeitige Ladung von Elektrofahrzeugen benötigte Energie geladen werden, um diese dann im Bedarfsfall auch tatsächlich den Ausspeise-Stromanschlüssen zur Verfügung stellen zu können.

In einer weiteren Ausführungsform ist das Steuerungsmodul dazu ausgestaltet, die Aufnahme, Abgabe oder Weiterleitung der elektrischen Energie zwischen Einspeise-Stromanschlüssen, Energiespeichereinheit und Ausspeise-Stromanschlüssen auf Basis von erhaltenen Wetterdaten und statistisch ermittelten Verbrauchsparametern an Energie zu steuern. Dadurch wird nicht nur die momentane Situation auf Seiten der Einspeise- und Ausspeisestromanschlüsse für die Steuerung des Energiespeichers berücksichtigt, sondern sichert eine hinreichend große im Energiespeichermodul gespeichert Energiemenge für Zeiten mit geringer Einspeisung durch die regenerativen Energiequellen, um dennoch den Ausspeise-Stromanschlüssen im Bedarfsfall Energie zusätzlich zur Versorgung aus dem allgemeinen Stromnetz zur Verfügung stellen zu können.

In einer weiteren Ausführungsform umfasst der Energiespeicher des Weiteren mindestens einen Wasserstoffspeicher verbunden mit mindestens einer Brennstoffzelle zur Erzeugung von elektrischer Energie, angeschlossen an zumindest einen der Einspeise-Stromanschlüsse. Damit besitzt der Energiespeicher eine weitere Energiequelle zum Bereitstellen von zusätzlicher Energie.

In einer weiteren Ausführungsform umfasst der Energiespeicher dabei zusätzlich mindestens einen Elektrolyseur, angeschlossen an den oder die Wasserstoffspeicher, der mittels des Steuermoduls mit Strom zur Elektrolyse von Wasser zur Erzeugung von Wasserstoff versorgt wird, das anschließend in dem oder den Wasserstoffspeicher gespeichert wird. Somit stellt der Wasserstoffspeicher in Verbindung mit der Brennstoffzelle nicht nur eine zusätzliche Energiequelle dar, sondern kann als Energiespeicher zur Zwischenspeicherung von Energie in Form von Wasserstoff bei einem Überangebot von elektrischer Energie, wo ein Teil zur Elektrolyse von Wasser verwendet wird, genutzt werden. Sofern der Wasserstoff im Elektrolyseur nicht aus Wasser, sondern aus einem anderen Rohstoff erzeugt wird, so ist dies ebenfalls mit von der Erfindung mit umschlossen.

In einer weiteren Ausführungsform bestimmt das Steuermodul nach den Wetterdaten und Verbrauchsparametern automatisch eine dafür geeignete Speichermenge in der Energiespeichereinheit und in dem oder den Wasserstoffspeichern und passt Füllstände in der Energiespeichereinheit und/oder in dem oder den Wasserstoffspeichern mittels Energiespeicherung oder Wasserstofferzeugung oder deren jeweiligen Verbrauch entsprechend an, beispielsweise unter Berücksichtigung der Wetterprognose für die nächsten 24 Stunden. Hiermit lässt sich besonders zuverlässig eine ausreichende gespeicherte Energiemenge im Energiespeicher sicherstellen, um jederzeit den Strombedarf bei der Ladung von Elektrofahrzeugen unabhängig von der vom allgemeinen Stromnetz und den anderen Energiequellen eingespeisten Energie decken zu können. Damit wird auch eine manuelle Bedarfsermittlung und Bedienung des Wasserstoffspeichers beziehungsweise der Brennstoffzelle vermieden. Über die Verbindung von Solarkraft und Windkraft mit wasserstoffbasierter Energiespeicherung kann der Anteil der "grünen" Energie bei der Stromversorgung von Elektrofahrzeugen auf lokaler Basis deutlich gesteigert werden. Selbst bei wenigen Rückumwandlungen der Energie wäre diese Art der Stromversorgung günstiger als über den Netzanschluss an das allgemeine Stromnetz.

In einer weiteren Ausführungsform umfasst die Energiespeichereinheit zumindest einen oder mehrere geeignet mit dem Steuerungsmodul verbundene Batteriespeicher. Ein Batteriespeicher kann reversibel und bei geringen Verlusten geladen und entladen werden und ist in der Lage, Energie über längere Zeiträume verlustarm zu speichern. Ebenso ermöglicht der geringe Platzbedarf von Batteriespeichern eine kompakte Bauweise des Energiespeichers, insbesondere der Energiespeichereinheit. Der Batteriespeicher kann eine Kapazität zwischen 600kWh und 5MWh umfassen, wobei der Batteriespeicher dazu modular mit einer Vielzahl an Batteriezellen betrieben werden kann.

Im Folgenden wird ferner eine Stromtankstelle, die insbesondere als Ladefahrzeug eines zuvor beschriebenen dynamischen Ladesystems ausgebildet sein kann, zur parallelen Aufladung mehrerer Elektrofahrzeuge umfassend mehrere über ein oder mehrere Versorgungsnetze der Stromtankstelle miteinander verbundene Ladesäulen und mindestens einen erfindungsgemäßen Energiespeicher, der zur Abgabe von elektrischer Energie über das oder die internen Versorgungsnetze an die Ladesäulen angeschlossen ist und zur Aufnahme von elektrischer Energie zumindest mit dem allgemeinen Stromnetz verbunden ist. Das Versorgungsnetz der Stromtankstelle ist dabei ein zum allgemeinen Stromnetz separates Versorgungsnetz lediglich auf der Ausspeiseseite des Steuerungsmoduls und ist nur über das Steuerungsmodul mit dem allgemeinen Stromnetz und gegebenenfalls den weiteren regenerativen Energiequellen verbunden. Die Stromtankstelle kann dabei je nach Ausführungsform beispielsweise über acht AC/DC Powersäulen als Ladestationen verfügen, an denen in Abhängigkeit von den Vorgaben des Elektrofahrzeugs eine Leistung von 12kW bis zu 200kW zur Ladung des Elektrofahrzeugs angeboten werden. Die Ladesäulen können dabei so ausgeführt sein, dass die Ladestecker der Elektrofahrzeuge entweder direkt oder mit Adapter an die Ladesäulen angeschlossen werden können. Zusätzlich kann die Stromtankstelle eine oder mehrere Hochleistungs-Ladesäulen mit bis zu 600kW für Klein- oder Großtransporter, dem Schwerlastverkehr oder Bussen ausgestattet sein. Kleine Stromtankstellen können aber auch weniger Ladesäulen, beispielsweise vier Ladesäulen mit einer Leistung von 12kW bis 200kW, umfassen. Die Anzahl der Ladesäulen ist frei skalierbar, ebenso die Kapazität des Energiespeichers zur zusätzlichen Versorgung der Ladesäulen in Verbindung mit der Versorgung durch das allgemeine Stromnetz. Als Ladecenter kann die Stromtankstelle mit bis zu 50 Ladesäulen aufgerüstet werden. Die Ladesäulen können dabei über Datenleitungen mit dem Steuerungsmodul verbunden sein, um nach Erkennung der benötigten Ladeparameter für das betreffende Elektrofahrzeug (beispielsweise durch Erkennung des Ladekabels, durch Nahfeldkommunikation mit dem Elektrofahrzeug, durch Eingabe durch den Nutzer des Elektrofahrzeugs) die gewünschten (günstigen) Ladeparameter dem Steuerungsmodul zu übertragen, damit dieses die Energie bedarfsgerecht mittel entsprechender Ansteuerung der Spannungswandler an den entsprechenden Ausspeise-Stromanschlüssen bereitstellt.

Die Stromtankstelle ist dank des zuvor beschriebenen Energiespeichers unabhängig vom Typ des Elektrofahrzeugs, egal ob es Wechselstrom oder Gleichstrom benötigt. Durch diesen Energiespeicher kann die Stromtankstelle somit sehr flexibel unterschiedlichste Spannungen als Eingangsspannungen verarbeiten und flexibel an unterschiedlichste Abnehmer mit unterschiedlichen Bedingungen und Mengen liefern. Bei der Wahl der Stromtankstelle bzw. dem Ladefahrzeug ist nicht mehr zu unterscheiden, ob das Elektrofahrzeug Gleichspannung oder Wechselspannung benötigt. Die Stromtankstelle bzw. das Ladefahrzeug können an die jeweilige Spannung angepasst werden bzw. liefern beide.

Ferner wird an der Stromtankstelle bzw. dem Ladefahrzeug, insbesondere an der jeweiligen Ladesäule bzw. dem jeweiligen Ausspeise-Stromanschluss, insbesondere in Abhängigkeit von dem Typ des angeschlossenen Ladekabels, welcher insbesondere automatisch detektiert wird, Spannungen von bis zu 1000V in unterschiedlichen Stromstärken, zur Verfügungstellung von verschiedenen Ladeleistungen, wie von 22 kW-AC bis 600kW DC bereitgestellt.

In einer Ausführungsform der Stromtankstelle umfasst diese des Weiteren eine Wind-und/oder Solarkraftanlage, die über jeweilige Einspeise-Stromanschlüsse und über den Energiespeicher mit dem internen Versorgungsnetz verbunden sind. Eine solche Stromtankstelle verbessert die CO2-Bilanz bei der Ladung von Elektrofahrzeugen durch die Nutzung von CO2-freien Energiequellen und sichert über das weiter angeschlossene allgemeine Stromnetz und den Energiespeicher eine ständige und zuverlässige Energieversorgung der Ladestationen.

In einer weiteren Ausführungsform der Stromtankstelle sind ein oder mehrere Lastsensoren an das oder die Versorgungsnetze angeschlossen und mit dem Steuerungsmodul des Energiespeichers verbunden. Damit kann das Steuerungsmodul eine Lastprüfung in dem jeweiligen Versorgungsnetz ausführen und bei Bedarf zusätzliche elektrische Energie aus der Energiespeichereinheit für das jeweilige Versorgungsnetz bereitstellen, um eine Überlastung auf Seiten der Einspeise-Stromanschlüsse zu vermeiden.

In einer weiteren Ausführungsform ist die Stromtankstelle zumindest zum Empfang von Wetterdaten und zur Übermittlung dieser Wetterdaten an das Steuermodul ausgestattet. Damit kann das Steuermodul die Aufnahme, Abgabe oder Weiterleitung der elektrischen Energie zwischen Einspeise-Stromanschlüssen, Energiespeichereinheit und Ausspeise-Stromanschlüssen auf Basis der Wetterdaten und/oder statistisch ermitteltem Verbrauchsparametern an Energie sehr effektiv steuern. In einer bevorzugten Ausführungsform umfasst die Stromtankstelle dazu zum Empfang der Wetterdaten eine Wetterstation. Die Wetterstation bezeichnet hierbei eine Zusammenstellung verschiedener Messgeräte, die zur Messung meteorologischer Größen und damit der Wetterbeobachtung am Ort der Stromtankstelle dienen. Eine digitale Wetterstation bietet dabei den Vorteil, dass sie Wetterdaten der entsprechenden Sensoren mittels Datenübertragung an eine Auswerteeinheit weiterleiten kann, die beispielsweise in der Wetterstation oder im Steuerungsmodul angeordnet sein kann. Die Sensoren werden an den gewünschten Messpunkten angebracht, an denen sie Daten sammeln und zur Weiterverarbeitung übermitteln können.

In einer weiteren Ausführungsform der Stromtankstelle ist zumindest einer der Ausspeisestromanschlüsse als Rückspeiseanschluss für das allgemeine Stromnetz vorgesehen. Durch diesen Rückspeiseanschluss kann überschüssiger Strom in das allgemeine Stromnetz eingespeist werden, wodurch einerseits Einspeise-Erlöse erzielt werden können und andererseits das allgemeine Stromnetz bei geeigneter Einspeisung zusätzlich stabilisiert werden kann.

Ein Verfahren zum Betreiben einer Stromtankstelle zur parallelen Aufladung mehrerer Elektrofahrzeuge umfassend mehrere über ein Versorgungsnetz der Stromtankstelle miteinander verbundene Ladesäulen und mindestens einen zuvor beschriebenen Energiespeicher, umfassend eine Energiespeichereinheit und ein mit der Energiespeichereinheit verbundenes Steuerungsmodul zumindest mit mehreren Einspeise-Stromanschlüssen zur Aufnahme von elektrischer Energie und mehreren Ausspeise-Stromanschlüssen zur Abgabe von elektrischer Energie, wobei der Energiespeicher zur Abgabe der elektrischen Energie über das interne Versorgungsnetz an die Ladesäulen angeschlossen ist und zur Aufnahme der elektrischen Energie zumindest mit dem allgemeinen Stromnetz verbunden ist, kann so ausgebildet sein, dass das Steuermodul nachfolgende Schritte ausführt:
- Weiterleiten der über die Einspeise-Stromanschlüsse aufgenommenen elektrischen Energie an die Energiespeichereinheit und/oder an die Ausspeise-Stromanschlüsse;
- Überwachen der an den Einspeise-Stromanschlüssen ankommenden elektrischen Energie und der an den Ausspeise-Stromanschlüssen abgefragten elektrischen Energie;
- Aufnahme, Abgabe oder Weiterleitung der elektrischen Energie zwischen den Einspeise- und Ausspeise-Stromanschlüssen gleichzeitig mit unterschiedlicher Spannung und Leistung durch entsprechend angesteuerte Spannungswandler im Steuerungsmodul; und
- bedarfsgerechtes Abgeben der elektrischen Energie mittels Weiterleitung der abzugebenden elektrischen Energie von den Einspeise-Stromanschlüssen und/oder der Energiespeichereinheit über die Ausspeise-Stromanschlüssen an das Versorgungsnetz zur Versorgung der Ladestationen.

Dieses Verfahren ermöglicht es, eine Stromtankstelle zu betreiben, die sehr flexibel unterschiedlichste Spannungen als Eingangsspannungen verarbeiten und flexibel an unterschiedlichste Abnehmer mit unterschiedlichen Bedingungen und Mengen liefern kann.

In einer Ausführungsform umfasst das Verfahren des Weiteren die zusätzlichen Schritte:
- Durchführen einer Lastprüfung im Versorgungsnetz mittels ein oder mehrerer Lastsensoren, die an geeigneter Stelle im Versorgungsnetz angeordnet sind;
- Bereitstellen zusätzlicher elektrischer Energie aus der Energiespeichereinheit für das Versorgungsnetz bei Bedarf, um eine Überlastung auf Seiten der Einspeise-Stromanschlüsse zu vermeiden; und
- Weiterleiten zumindest eines Teils der über die Einspeise-Stromanschlüsse aufgenommenen elektrischen Energie an die Energiespeichereinheit, falls durch die Lastprüfung keine Überlastung des Versorgungsnetzes festgestellt wurde.

In einer weiteren Ausführungsform umfasst das Verfahren des Weiteren den zusätzlichen Schritt des Steuerns der Aufnahme, Abgabe oder Weiterleitung der elektrischen Energie zwischen Einspeise-Stromanschlüssen, Energiespeichereinheit und Ausspeise-Stromanschlüssen auf Basis von erhaltenen Wetterdaten und statistisch ermittelten Verbrauchsparametern an den Ladestationen.

In einer weiteren Ausführungsform des Verfahrens, bei der der Energiespeicher des Weiteren mit mindestens einen Wasserstoffspeicher verbunden mit mindestens einer Brennstoffzelle zur Erzeugung von elektrischer Energie angeschlossen an zumindest einen der Einspeise-Stromanschlüsse und einen Elektrolyseur angeschlossen an den oder die Wasserstoffspeicher umfasst, wobei der Elektrolyseur mittels des Steuermoduls mit Strom zur Elektrolyse von Wasser versorgt wird, das anschließend in dem oder den Wasserstoffspeichern gespeichert wird, umfasst das Verfahren des Weiteren die zusätzlichen Schritte:
- automatisches Bestimmen einer nach den Wetterdaten und Verbrauchsparametern geeigneten Speichermenge in der Energiespeichereinheit und in dem oder den Wasserstoffspeichern; und
- entsprechendes Anpassen der Füllstände in der Energiespeichereinheit und/oder in dem oder den Wasserstoffspeichern mittels Energiespeicherung oder Wasserstofferzeugung oder deren jeweiligen Verbrauch.

Der Energiespeicher, wie er zuvor beschrieben wurde, zeichnet sich insbesondere dadurch aus, dass mittels des Steuerungsmoduls das Verhältnis der Gesamtleistung der Energiespeichereinheit im Verhältnis zur über die Ladesäulen bzw. die Ausspeise-Stromanschlüsse abgegebenen Leistung, die insbesondere über den Typ des jeweiligen Ladekabels des Elektrofahrzeugs festgelegt ist, veränderbar bzw. steuerbar ist.

Das Steuermodul kann ebenso an den Einspeise-Stromanschlüssen ankommende Spannungen auf die Energiespeichereinheit bzw. einzelne Energiespeichereinheitselemente, wie Batteriespeicher, sowie Elektrolyser von Wasserstoffspeichern so verteilen bzw. steuern, dass diese an die Aufnahmekapazitäten des Energiespeichers, insbesondere der Energiespeichereinheit bzw. der einzelne Energiespeichereinheitselemente oder Elektrolyser, angepasst sind. Dabei können die einzelne Energiespeichereinheitselemente sowie Elektrolyser in Reihe oder parallel geschaltet werden.

Der Einsatz der Wasserstoffspeicher erlaubt es, dass beispielsweise bei höheren Versorgungsleistungen an den Einspeise-Stromanschlüssen, insbesondere des allgemeinen Stromnetzes, die komplette zur Verfügung gestellte Leistung genutzt werden kann, um sowohl die Energiespeichereinheit als auch die Ausspeise-Stromanschlüsse mit Energie zu versorgen und für Situationen, in denen die Versorgungsleistung geringer ist, eine Reserve zu produzieren. Diese Reserve wird dadurch erzeugt, dass nicht an die Energiespeichereinheit oder die Ausspeise-Stromanschlüsse geleitete Leistung dazu genutzt wird, mittels Elektrolysern Wasserstoff zu generieren und diesen in Drucktanks zwischen zu speichern. Bei einer zu geringen Netzleistung kann dann über die Umwandlung des Wasserstoffs in elektrische Energie die Energiespeichereinheit bzw. die Ausspeise-Stromanschlüsse mit Energie zur Ladung bzw. Abgabe der Energie versorgt werden.

Der zuvor beschriebene Energiespeicher kann gemäß der folgenden Veranschaulichungen realisiert sein, wobei diese Realisierung zusätzlich oder unabhängig von dem beanspruchten digitalen Zugangssystem und/dem zuvor beschriebenen System zur dynamischen Aufladung realisiert sein kann.

V1. Ein Energiespeicher (2001) für Stromtankstellen (2010) umfassend eine Energiespeichereinheit (2011) und ein mit der Energiespeichereinheit (2011) verbundenes Steuerungsmodul (2012) zumindest mit mehreren Einspeise-Stromanschlüssen (2013) zur Aufnahme (E) von elektrischer Energie und mehreren Ausspeise-Stromanschlüssen (2014) zur Abgabe (A) von elektrischer Energie, wobei das Steuerungsmodul (2012) zur Weiterleitung (W) der über die Einspeise-Stromanschlüsse (2013) aufgenommenen elektrischen Energie an die Energiespeichereinheit (2011) und/oder an die Ausspeise-Stromanschlüsse (2014) sowie der abzugebenden elektrischen Energie von den Einspeise-Stromanschlüssen (2013) und/oder der Energiespeichereinheit (2011) über die Ausspeise-Stromanschlüsse (2014) zur bedarfsgerechten Abgabe an eine oder mehrere Ladesäulen (2002) für Elektrofahrzeuge vorgesehen ist, wobei das Steuerungsmodul (2012) mehrere entsprechend angesteuerte Spannungswandler umfasst, um die Aufnahme, Abgabe oder Weiterleitung (E, A, W) der elektrischen Energie zwischen den Einspeise- und Ausspeise-Stromanschlüssen (2013, 2014) gleichzeitig mit unterschiedlicher Spannung und Leistung zu ermöglichen, wozu das Steuerungsmodul (2012) die an den Einspeise-Stromanschlüssen (2013) ankommende elektrische Energie und die an den Ausspeise-Stromanschlüssen (2014) abgefragte elektrische Energie überwacht und mittels der Spannungswandler geeignet an den jeweiligen Bedarf anpasst.

V2. Der Energiespeicher (2001) nach Veranschaulichung V1,
dadurch gekennzeichnet,
dass einer der Einspeise- Stromanschlüsse (2013) dazu vorgesehen ist, mit dem allgemeinen Stromnetz (2031) verbunden zu werden und ein oder mehrere andere der Einspeise-Stromanschlüsse (2013) zum Anschluss zumindest an eine regenerative Energiequelle (2032, 2033), vorzugsweise an eine Wind- und/oder Solarenergieanlage (2032, 2033) ausgestaltet sind.

V3. Der Energiespeicher (2001) nach Veranschaulichung V1 oder V2,
dadurch gekennzeichnet,
dass jeweils mindestens einer der Ausspeise-Stromanschlüsse (2014) für einpolige und/oder dreipolige Anschlüsse zur Abgabe von Gleichstrom- und/oder Wechselstrom ausgestaltet sind.

V4. Der Energiespeicher (2001) nach einem der voranstehenden
Veranschaulichungen V1 bis V3,
dadurch gekennzeichnet, dass das Steuerungsmodul (2012) dazu ausgestaltet ist, neben der Weiterleitung (W) von elektrischer Energie von den Einspeise-Stromanschlüssen (2013) zu den Ausspeise-Stromanschlüsse (2014) zur Abgabe (A) der elektrischen Energie an die Ladestationen (2002) eine Lastprüfung in mindestens einem an die Ausspeisestromanschlüsse angeschlossenen Versorgungsnetz (2004) durchzuführen und bei Bedarf zusätzliche elektrische Energie aus der Energiespeichereinheit (2011) für das jeweilige Versorgungsnetz (2004) bereitzustellen, um eine Überlastung auf Seiten der Einspeise-Stromanschlüsse (2013) zu vermeiden.

V5. Der Energiespeicher (2001) nach Veranschaulichung V4,
dadurch gekennzeichnet,
dass das Steuerungsmodul (2012) mit ein oder mehreren Lastsensoren (2015) zur Lastprüfung in dem jeweiligen angeschlossenen Versorgungsnetz (2004) ausgestattet ist.

V6. Der Energiespeicher (2001) nach Veranschaulichung V4 oder V5,
dadurch gekennzeichnet,
dass das Steuerungsmodul (2012) im Falle keiner durch die Lastprüfung festgestellten Überlastung des Versorgungsnetzes (2004) zur Weiterleitung (W) zumindest eines Teils der über die Einspeise-Stromanschlüsse (2013) aufgenommenen elektrischen Energie (E) an die Energiespeichereinheit (2011) vorgesehen ist.

V7. Der Energiespeicher (2001) nach einem der voranstehenden Veranschaulichungen V1 bis V6,
dadurch gekennzeichnet,
dass das Steuerungsmodul (2012) dazu ausgestaltet ist, die Aufnahme, Abgabe oder Weiterleitung (E, A, W) der elektrischen Energie zwischen Einspeise-Stromanschlüssen (2013), Energiespeichereinheit (2011) und Ausspeise-Stromanschlüssen (2014) auf Basis von erhaltenen Wetterdaten (WD) und statistisch ermittelten Verbrauchsparametern (VP) an Energie zu steuern.

V8. Der Energiespeicher (2001) nach einem der voranstehenden Veranschaulichungen V1 bis V7,
dadurch gekennzeichnet,
dass der Energiespeicher (2011) des Weiteren mindestens einen Wasserstoffspeicher (2016) verbunden mit mindestens einer Brennstoffzelle (2017) zur Erzeugung von elektrischer Energie angeschlossen an zumindest einen der Einspeise-Stromanschlüsse (2013) umfasst.

V9. Der Energiespeicher (2001) nach Veranschaulichung V8,
dadurch gekennzeichnet,
dass der Energiespeicher (2011) zusätzlich mindestens einen Elektrolyseur (2018) angeschlossen an den oder die Wasserstoffspeicher (2016) umfasst, der mittels des Steuermoduls (2012) mit Strom zur Elektrolyse von Wasser versorgt wird, das anschließend in dem oder den Wasserstoffspeichern (2016) gespeichert wird.

V10. Der Energiespeicher (2001) nach Veranschaulichung V9,
dadurch gekennzeichnet,
dass das Steuermodul (2012) nach den Wetterdaten (WD) und Verbrauchsparametern (VP) automatisch eine dafür geeignete Speichermenge in der Energiespeichereinheit (2011) und in dem oder den Wasserstoffspeichern (2016) bestimmt und Füllstände in der Energiespeichereinheit (2011) und/oder in dem oder den Wasserstoffspeichern (2016) mittels Energiespeicherung oder Wasserstofferzeugung oder deren jeweiligen Verbrauch entsprechend anpasst.

V11. Der Energiespeicher (2001) nach einem der voranstehenden Veranschaulichungen V1 bis V10,
dadurch gekennzeichnet,
dass die Energiespeichereinheit (2011) zumindest einen oder mehrere geeignet mit dem Steuerungsmodul verbundene Energiespeichereinheitselemente, wie Batteriespeicher (2111), umfasst.

V12. Eine Stromtankstelle (2010) zur parallelen Aufladung mehrerer Elektrofahrzeuge (2005) umfassend mehrere über ein oder mehrere Versorgungsnetze (2004) der Stromtankstelle (2010) miteinander verbundene Ladesäulen (2002) und mindestens einen Energiespeicher (2001) nach einem der Veranschaulichungen V1 bis V11, der zur Abgabe (A) von elektrischer Energie über das oder die internen Versorgungsnetze (2004) an die Ladesäulen (2002) angeschlossen ist und zur Aufnahme (E) von elektrischer Energie zumindest mit dem allgemeinen Stromnetz (2031) verbunden ist.

V13. Die Stromtankstelle (2010) nach Veranschaulichung V12,
dadurch gekennzeichnet,
dass die Stromtankstelle (2010) des Weiteren eine Wind- und/oder Solarkraftanlage (2032, 2033) umfasst, die über jeweilige Einspeise-Stromanschlüsse (2013) und über den Energiespeicher (2001) mit dem internen Versorgungsnetz (2004) verbunden sind.

V14. Die Stromtankstelle (2010) nach einem der Veranschaulichungen V12 oder V13,
dadurch gekennzeichnet,
dass ein oder mehrere Lastsensoren (2015) an das oder die Versorgungsnetze (2004) angeschlossen und mit dem Steuerungsmodul (2012) des Energiespeichers (2001) verbunden sind, damit das Steuerungsmodul (2012) eine Lastprüfung in dem jeweiligen Versorgungsnetz (2004) ausführen und bei Bedarf zusätzliche elektrische Energie aus der Energiespeichereinheit (2011) für das jeweilige Versorgungsnetz (2004) bereitstellen kann, um eine Überlastung auf Seiten der Einspeise-Stromanschlüsse (2013) zu vermeiden.

V15. Die Stromtankstelle (2010) nach einem der Veranschaulichungen V12 bis V14, dadurch gekennzeichnet,
dass die Stromtankstelle (2010) zumindest zum Empfang von Wetterdaten (WD) und zur Übermittlung dieser Wetterdaten (WD) an das Steuermodul (2012) ausgestattet ist, damit das Steuermodul (2012) die Aufnahme, Abgabe oder Weiterleitung (E, A, W) der elektrischen Energie zwischen Einspeise-Stromanschlüssen (2013), Energiespeichereinheit (11) und Ausspeise-Stromanschlüssen (2014) auf Basis der Wetterdaten (WD) und/oder statistisch ermitteltem Verbrauchsparametern (VP) an Energie steuern kann.

V16. Die Stromtankstelle (2010) nach Veranschaulichung V15,
dadurch gekennzeichnet,
dass die Stromtankstelle (2010) zum Empfang der Wetterdaten (WD) eine Wetterstation (2020) umfasst.

V17. Die Stromtankstelle (2010) nach einem der Veranschaulichungen V12 bis V15,
dadurch gekennzeichnet,
dass zumindest einer der Ausspeisestromanschlüsse (2014) als Rückspeiseanschluss für das allgemeine Stromnetz (2031) vorgesehen ist.

V18. Ein Verfahren (2100) zum Betreiben einer Stromtankstelle (2010) zur parallelen Aufladung mehrerer Elektrofahrzeuge (2005) umfassend mehrere über ein Versorgungsnetz (2004) der Stromtankstelle (2010) miteinander verbundene Ladesäulen (2002) und mindestens einen Energiespeicher (2001) nach einem der Veranschaulichungen V1 bis V11 umfassend eine Energiespeichereinheit (2011) und ein mit der Energiespeichereinheit (2011) verbundenes Steuerungsmodul (2012) zumindest mit mehreren Einspeise-Stromanschlüssen (2013) zur Aufnahme (A) von elektrischer Energie und mehreren Ausspeise-Stromanschlüssen (2014) zur Abgabe (A) von elektrischer Energie, wobei der Energiespeicher (2001) zur Abgabe (A) der elektrischen Energie über das interne Versorgungsnetz (2004) an die Ladesäulen (2002) angeschlossen ist und zur Aufnahme (E) der elektrischen Energie zumindest mit dem allgemeinen Stromnetz (2031) verbunden ist, wobei das Steuermodul (2012) nachfolgende Schritte ausführt:
- Weiterleiten (2110) der über die Einspeise-Stromanschlüsse (2013) aufgenommene elektrische Energie an die Energiespeichereinheit (2011) und/oder an die Ausspeise-Stromanschlüsse (2014);
- Überwachen (2120) der an den Einspeise-Stromanschlüssen (2013) ankommenden elektrischen Energie und der an den Ausspeise-Stromanschlüssen (2014) abgefragten elektrischen Energie;
- Aufnahme, Abgabe oder Weiterleitung (2130) der elektrischen Energie zwischen den Einspeise- und Ausspeise-Stromanschlüssen (2013, 2014) gleichzeitig mit unterschiedlicher Spannung und Leistung durch entsprechend angesteuerte Spannungswandler im Steuerungsmodul (2011); und
- bedarfsgerechtes Abgeben (2140) der elektrischen Energie mittels Weiterleitung (W) der abzugebenden elektrischen Energie von den Einspeise-Stromanschlüssen (2013) und/oder der Energiespeichereinheit (2011) über die Ausspeise-Stromanschlüssen (2014) an das Versorgungsnetz (2004) zur Versorgung der Ladestationen (2002).

V19. Das Verfahren (2100) nach Veranschaulichung V18, umfassend des Weiteren die zusätzlichen Schritte:
- Durchführen (2150) einer Lastprüfung im Versorgungsnetz (2004) mittels ein oder mehrerer Lastsensoren (2015), die an geeigneter Stelle im Versorgungsnetz (2004) angeordnet sind;
- Bereitstellen (2160) zusätzlicher elektrischer Energie aus der Energiespeichereinheit (2011) für das Versorgungsnetz (2004) bei Bedarf, um eine Überlastung auf Seiten der Einspeise-Stromanschlüsse (2013) zu vermeiden; und
- Weiterleiten (2170) zumindest eines Teils der über die Einspeise-Stromanschlüsse (2013) aufgenommenen elektrischen Energie an da Energiespeichereinheit (2011), falls durch die Lastprüfung keine Überlastung des Versorgungsnetzes (2004) festgestellt wurde.

V20. Das Verfahren (2100) nach Veranschaulichung V18 oder V19, umfassend des Weiteren den zusätzlichen Schritt:
- Steuern (2180) der Aufnahme, Abgabe oder Weiterleitung der elektrischen Energie zwischen Einspeise-Stromanschlüssen, Energiespeichereinheit und Ausspeise-Stromanschlüssen auf Basis von erhaltenen Wetterdaten und statistisch ermitteltem Verbrauchsparametern an den Ladestationen.

V21. Das Verfahren (2100) nach Veranschaulichung V20, wobei der Energiespeicher (2001) des Weiteren mindestens einen Wasserstoffspeicher (2016) verbunden mit mindestens einer Brennstoffzelle (2017) zur Erzeugung von elektrischer Energie angeschlossen an zumindest einen der Einspeise-Stromanschlüsse (2013) und einen Elektrolyseur (2018) angeschlossen an den oder die Wasserstoffspeicher (2016) umfasst, wobei der Elektrolyseur (2018) mittels des Steuermoduls (2011) mit Strom zur Elektrolyse von Wasser versorgt wird, das anschließend in dem oder den Wasserstoffspeicher (2016) gespeichert wird, umfassend des Weiteren die zusätzlichen Schritte:
- automatisches Bestimmen (2190) einer nach den Wetterdaten (WD) und Verbrauchsparametern (VP) geeigneten Speichermenge in der Energiespeichereinheit (2011) und in dem oder den Wasserstoffspeichern (2016); und
- entsprechendes Anpassen (2200) der Füllstände in der Energiespeichereinheit (2011) und/oder in dem oder den Wasserstoffspeichern (2016) mittels Energiespeicherung oder Wasserstofferzeugung oder deren jeweiligen Verbrauch.

### Das zuvor beschriebene dynamische Ladesystem bzw. der zuvor beschriebene

Energiespeicher erlauben insbesondere in Kombination mit dem digitalen Zugangssystem die Durchführung von Ladungen, bei denen der Benutzer des zu ladenden Fahrzeugs nicht anwesend sein muss, beispielsweise eine Nachladung, wenn das zu ladende Fahrzeug von dem Benutzer abgestellt wurde.

Beispielsweise kann eine Anforderung einer Nachtladung durch einen Benutzer eines zu ladenden Fahrzeugs, der insbesondere registrierter Kunde des dynamischen Ladesystems ist, erfolgen. Das digitale Zugangssystem, insbesondere in Verbindung mit dem dynamischen Ladesystem ermöglicht es, dass zu einem beliebigen Zeitpunkt innerhalb eines Zeitfensters mit dem Code einen Zugang zu dem zu ladenden Fahrzeug, ermöglicht wird. Der Code wird insbesondere bei Annahme der Auftragsbestätigung durch den Benutzer erzeugt. Der Code ermöglicht es über die Aktivierungseinheit die Freischalteinheit zu aktivieren um über die Zugriffseinheit beispielsweise die Tankklappe oder einen anderen geeigneten Mechanismus am zu ladenden Fahrzeug sowie die für die Ladung des Fahrzeugs notwendigen Systeme, wie zumindest teilweise das elektrische Betriebssystem, zu aktivieren bzw. zu öffnen können.

Dies ermöglicht es dann, das zu ladende Fahrzeug mit dem per Rendezvoussystem zu dem zu ladenden Fahrzeug gelangten Ladefahrzeug zu verbinden und die Ladung durchzuführen.

Mit dem Schließen der Tankklappe oder alternativ mit Entfernung des Ladekabels bzw. Abschaltung der Aktivierung der zu ladenden Fahrzeugs ist die Ladung abgeschlossen. Der Zugangscode wird vorteilhafterweise automatisch, insbesondere durch das dynamische Ladesystem entwertet und eine erneuter Zugriff mit diesem Code ist nicht möglich. Ferner wird das Fahrzeug vorteilhafterweise wieder automatisch in den Ruhezustand zurückgeführt, also die mittels der Zugriffseinheit aktivierten System wieder deaktiviert.

Auch ist es möglich, dass ein Zugangscode einen Zugriff nur in einem beschränkten Zeitfenster ermöglicht, beispielsweise zwischen 22:00 und 6:30. Ein in diesem Zeitfenster nicht verwendeter Zugangscode kann dann ebenfalls automatisch entwertet werden.

Hervorzuheben ist, dass die Freischalteinheit keinen generellen Zugriff auf das gesamte Fahrzeug bzw. alle Systeme des Fahrzeugs ermöglicht, sondern nur definierte Berechtigungen bereitstellt, wie den Zugang zu der Ladeklappe, während andere Berechtigungen, wie Zugang zum Innenraum, Betätigung von Systemen wie Beleuchtung, Zündung oder dergleichen, nicht erteilt werden. Die Freischalteinheit erlaubt also eine zeitgenaue und zeitbegrenzte Nutzung von bestimmten Systemen des zu ladenden Fahrzeugs, ohne auf andere Systeme Einfluss zu gewinnen oder das Fahrzeug betreten zu können.

Für die Durchführung einer Ladung ohne Anwesenheit des Benutzers des zu ladenden Fahrzeugs ist insbesondere vorgesehen, dass, insbesondere durch die Zugriffseinheit basierend auf dem Zugangscode, ein digitaler Zugriff auf den Stromspeicher des zu ladenden Fahrzeugs gewährt wird, um damit eine notwendige Lademenge festlegen zu können.

Ergänzend oder alternativ kann diese Lademenge, insbesondere über ein vorgegebenes Mengenraster, manuell von dem Benutzer des zu ladenden Fahrzeugs festgelegt werden, beispielsweise wenn ein Zugriff aus technischen Gründen nicht möglich ist oder vom Benutzer nicht gewünscht ist.

Ferner ermöglicht das dynamische Ladesystem und/oder das digitale Zugangssystem, insbesondere während einer Auftragslaufzeit, wie zwischen 22:00 und 6:30 Uhr, einen Zugriff auf ein Positionsortungssystem, beispielsweise ein Navigationssystem des zu ladenden Fahrzeugs, insbesondere um den Standort des Fahrzeugs detailgenau, beispielsweise für ein Rendezvous mit dem Ladefahrzeug bestimmen zu können.

Vorzugsweise ist in dem dynamischen Ladesystem, insbesondere der Software-Applikation, vorgesehen, dass alle laderelevanten Daten, insbesondere die mögliche Ladegeschwindigkeit, abrufbar sind.

Insbesondere mittels des dynamischen Ladesystems aber grundsätzlich auch durch andere Ladesystem kann ein Auftrag für eine Nachtladung wie folgt zustande kommen und folgende Vorgänge auslösen:
Der Benutzer des Fahrzeugs meldet über die mobile Applikation bzw. die Softwareapplikation einen Nachtladewunsch an. Bevorzugt erfolgt dies vor Beginn eines festgelegten Zeitfensters, wie 22:00 bis 6:30 Uhr. Das für die Ladung vorgesehene Fahrzeug wird, insbesondere in dem Zeitfenster an einem vereinbarten Standort abgestellt bzw. vor Durchführung der Ladung wird der Standort des Fahrzeugs, wie zuvor beschrieben, bestimmt bzw. erfasst. Alternativ oder ergänzend, wenn das Fahrzeug sich zu Beginn des Zeitfensters noch nicht am endgültigen Standplatz befindet, kann der Benutzer die genauen Standortdaten korrigieren.

Insbesondere mittels der Software-Applikation wird anschließend die erforderliche Lademenge über Abfrage am Energiespeicher des Fahrzeugs oder über die manuell angegebene Menge bestimmt. Basierend auf diesen Daten errechnet insbesondere die Software-Applikation die Machbarkeit anhand vorliegender Ladeaufträge und Position der zu ladenden Fahrzeuge. Anschließend wird die bereits zuvor erwähnte Auftragsbestätigung dem Benutzer des Fahrzeugs angeboten.

Voraussetzung für ein entsprechendes Angebot sind darüber hinaus aus weitere Umgebungsparameter, wie beispielsweise ob am gewünschten Standort auf Grund verkehrsrechtlicher oder sonstiger regulatorischer Beschränkungen überhaupt eine Ladung durchführbar ist und/oder der Standort von dem Ladefahrzeug überhaupt erreichbar ist.

Ferner wird die Auftragsbestätigung in Abhängigkeit insbesondere von der voraussichtlich benötigten Ladezeit, der benötigten Anfahrtszeit und damit der Gesamtzeitaufwand für jede einzelne Ladung geplant, insbesondere deren Vereinbarkeit mit anderen Nachladeanfragen ermittelt.

Die Bestätigung enthält im Hintergrund den insbesondere über DLT bzw. Blockchain Technik verschlüsselten Zugangscode. Dieser Zugangscode kann durch Annahme der Auftragsbestätigung aktiviert und insbesondere über die Software-Applikation automatisch an das zu ladende Fahrzeug und das Ladefahrzeug weitergeleitet.

Damit kann die Freischalteinheit des zu ladenden Fahrzeugs mittels der Aktivierungseinheit des Ladefahrzeugs für das fixierte Zeitfenster mittels des Zugangscodes einmalig aktuiert werden.

Um all diese Daten ermitteln zu können benötigen wir ein spezielles Datenpaket, welches in Bezug auf aktuelle Daten nur direkt über unsere Freischalteinrichtung abgefragt werden kann, wiederkehrende Dauerdaten sind beim Kunden hinterlegt.

### Kurze Beschreibung der Abbildungen

Diese und andere Aspekte der Erfindung bezüglich des digitalen Zugangssystems werden im Detail in den Abbildungen wie folgt gezeigt.
- Fig.1:: schematische Darstellung einer Ausführungsform des erfindungsgemäßen Zugangssystems;
- Fig.2:: schematische Darstellung einer Ausführungsform des erfindungsgemäßen Fahrzeugs mit erfindungsgemäßem Zugangssystem;
- Fig.3:: schematische Darstellung einer Ausführungsform des erfindungsgemäßen Verfahrens.

Weiterhin umfasst die Beschreibung die folgenden Figuren, mittels denen weitere Aspekte des zuvor beschriebenen dynamischen Ladesystems erläutert werden.
- Fig.4:: schematische Darstellung einer Ausführungsform des dynamischen Ladesystems;
- Fig.5:: schematische Darstellung einer Ausführungsform des Elektrofahrzeugs mit mobilem Gerät und darauf installierter erfindungsgemäßer Software-Applikation für das dynamische Ladesystem;
- Fig.6:: schematische Darstellung der Berechnung des gemeinsamen Treffpunkts anhand von Positions- und Bewegungsdaten des Elektrofahrzeugs;
- Fig.7:: schematische Darstellung des Ladefahrzeugs des dynamischen Ladesystems;
- Fig.8:: schematische Darstellung des Datenspeicherprodukts mit darauf gespeicherter Software-Applikation für die Durchführung des dynamischen Ladesystems; und
- Fig.9:: schematische Darstellung einer Ausführungsform des Verfahrens für die dynamische Ladung.

Schließlich umfasst die Beschreibung die folgenden Figuren, mittels denen weitere Aspekte des zuvor beschriebenen Energiespeichers erläutert werden.
- Fig.10:: schematische Darstellung einer Ausführungsform des erfindungsgemäßen Energiespeichers;
- Fig.11:: schematische Darstellung einer anderen Ausführungsform des Energiespeichers mit Wasserstoffspeicher, Brennstoffzelle und Elektrolyseur;
- Fig.12:: schematische Darstellung einer Ausführungsform der Stromtankstelle mit dem zuvor beschriebenen Energiespeicher, insbesondere implementiert in einem;
- Fig.13:: schematische Darstellung einer Ausführungsform des erfindungsgemäßen Verfahrens zum Betreiben einer Stromtankstelle.

### Detaillierte Beschreibung der Ausführungsbeispiele

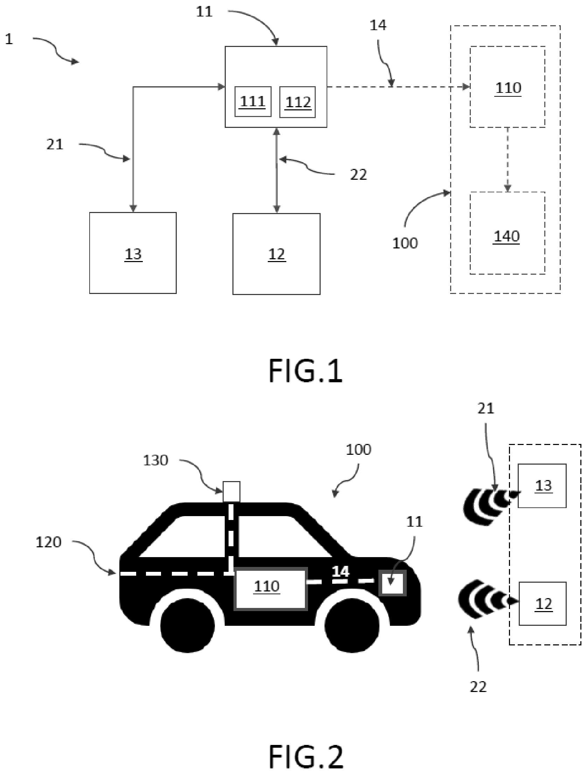

Fig.1 zeigt eine schematische Darstellung einer Ausführungsform des erfindungsgemäßen Zugangssystems 1 zum Einbau in einem Fahrzeug 100 mit einem Verriegelungssystem und zur geeigneten Verbindung mit einer Systemsteuerung 110 des Fahrzeugs 100 (daher gestrichelt gezeigt), wobei das Zugangssystem 1 eine Freischalteinheit 11 zur Positionierung in dem Fahrzeug 100 sowie eine Zugriffseinheit 12 und eine Aktivierungseinheit 13 zur Verwendung außerhalb des Fahrzeugs 100 umfasst. In anderen Ausführungsformen können auch mehrere Aktivierungs- und Zugriffseinheiten für das gleiche Fahrzeug 100 verwendet werden. Die Aktivierungseinheit 13 (beispielsweise ein mobiles Terminal, Smartphone, Tablet-PC, eine Webseite im Internet etc.) aktiviert dabei mittels drahtloser Datenkommunikation 21 die Freischalteinheit 11 dauerhaft oder für einen limitierten Zeitraum, beispielsweise ein vorbestimmter Zeitraum. Die Zugriffseinheit 12 veranlasst dann mittels einer zur vorherigen Datenkommunikation 21 separaten unabhängigen drahtlosen Datenkommunikation 22 über die vorher aktivierte Empfangseinheit 11 einen Zugang zum Fahrzeug 100 von außen, wozu die Freischalteinheit 11 in Reaktion auf die Datenkommunikation 22 den Zugang veranlassende Steuersignale 14 an die Systemsteuerung 110 zur Ansteuerung des Verriegelungssystems und Freigabe zumindest einer verriegelnden Komponente 140 zur Ermöglichung des Zugangs zum Fahrzeug zu dessen Ladung übermittelt. Die Datenkommunikation kann dabei mittels Funk, WLAN oder Nahfeldkommunikation, vorzugsweise RFID, durchgeführt werden, wozu die Freischalt- Aktivierungs- und Zugriffseinheiten mit entsprechenden Sende- und/oder Empfangsmodulen geeignet ausgestaltet sind. Die Datenkommunikationen 21, 22 kann zudem verschlüsselt erfolgen. Die Freischalteinheit 11 umfasst hier außerdem eine Prozessoreinheit 111 mit Datenspeicher 112, auf dem Daten zur Autorisierung der Aktivierungseinheit 13 und/oder der Zugriffseinheit 12 gespeichert sind. Die Prozessoreinheit 111 ist dabei dazu ausgestaltet, anhand dieser Daten eine Autorisierungsprüfung für die Aktivierungs- und Zugriffseinheiten durchzuführen. Hierbei kann die Zugriffseinheit 12 beispielsweise einen Identifikationscode an die Freischalteinheit 11 übermitteln, anhand dessen die Freischalteinheit 11 die Autorisierungsprüfung durchführt. Die Freischalteinheit 11 kann dazu ausgestaltet sein, im aktivierten Zustand Signale zur Abfrage nach vorhandenen Zugriffseinheiten 12 auszusenden. Die Zugriffseinheit 12 kann dabei ein Transponder (aktiver oder passiver) sein, der nach Empfang der Datenkommunikation 22 von der Freischalteinheit 11 den Identifizierungscode an die Freischalteinheit 11 überträgt. Die Freischalteinheit 11 kann des Weiteren geeignete Schnittstellen zum Anschluss an die Systemsteuerung 110 des Fahrzeugs 100 umfassen, damit sie reversibel in dem Fahrzeug angeordnet werden kann. Das Zugangssystem 1 kann des Weiteren ein Hintergrund-Computersystem (hier nicht explizit gezeigt) umfassen, das so ausgestaltet ist, dass es zumindest eine Registrierung von Nutzern 3 und eine Eintragung von Daten der Fahrzeuge 100 und/oder der Freischalteinheiten 11 und/oder der Zugriffseinheiten 12 und/oder der Aktivierungseinheiten 13 sowie deren Zuordnung zu den Fahrzeugen 100 und/oder Nutzern 3 ermöglicht und eine geeignete Übertragung von Daten an die Freischalteinheit 11 zumindest zu Ermöglichung eine Autorisierungsprüfung durch die Freischalteinheit 11 durchführt.

Fig.2 zeigt eine schematische Darstellung einer Ausführungsform des erfindungsgemäßen Fahrzeugs 100 mit erfindungsgemäßem Zugangssystem 1 gemäß Figur 1. Das Fahrzeug 100 umfasst ein Verriegelungssystem (hier nicht explizit gezeigt) und eine Steuerungseinheit 110 unter anderem zur Steuerung des Verriegelungssystems. Das digitale Zugangssystem 1 umfasst eine Zugriffseinheit 12 und eine Aktivierungseinheit 13, die außerhalb des Fahrzeugs zur Aktivierung der Freischalteinheit 11 und zur Veranlassung des Zugangs von außen zum Fahrzeug verwendet werden. Die Zugriffseinheit 12 und die Aktivierungseinheit 13 können dabei zwei separate Geräte sein oder in einer anderen Ausführungsform in einem gemeinsamen Gerät integriert sein, wie durch das gestrichelte Rechteck angedeutet ist. Damit dieser Zugang gewährt und freigegeben werden kann, ist eine Freischalteinheit 11 in dem Fahrzeug 100 positioniert und mit der Steuerungseinheit 110 geeignet verbunden, um mittels Ansteuerung des Verriegelungssystems und Freigabe zumindest einer verriegelnden Komponente 140 den Zugang zum Fahrzeug zu dessen Ladung zu ermöglichen. Für eine bessere Datenkommunikation 21, 22 ist die Freischalteinheit 11 hier mit der Empfangsantenne 130 des Fahrzeugs 100 verbunden (gestrichelt gezeigt). Die Freischalteinheit 11 ist in dieser Ausführungsform innerhalb des Kotflügelmaterials des Fahrzeugs 100 und damit an einer von außen und vom Innenraum des Fahrzeugs 100 unzugänglichen Stelle angeordnet. Die Freischalteinheit 11 könnte aber auch reversibel im Fahrzeug 100 installiert sein, beispielsweise an der Frontscheibe des Fahrzeugs. Die Ladung des Fahrzeugs 100 kann beispielsweise durch eine Öffnung eines Kofferraums und/oder einer Ladefläche 120 des Fahrzeugs 100 mittels Freigabe entsprechenden Komponenten 140 des Elektrofahrzeugs 100 durch die von der Freischalteinheit 11 an die Systemsteuerung 110 ausgesendeten Steuersignale 14 ermöglicht werden. Im Falle eines Fahrzeugs 100 als Elektrofahrzeug können die von der Freischalteinheit 11 an die Systemsteuerung 110 übermittelten Steuersignale 14 auch eine Aufladung des Elektrofahrzeugs 100 ermöglichen. Hierbei entriegelt die Systemsteuerung 110 aufgrund des Steuersignals 14 bei gewünschter Aufladung des Elektrofahrzeugs 100 eine Tankklappe und die Ladesteuerung des Elektrofahrzeugs 100 beziehungsweise schaltet diese funktionsfähig frei.

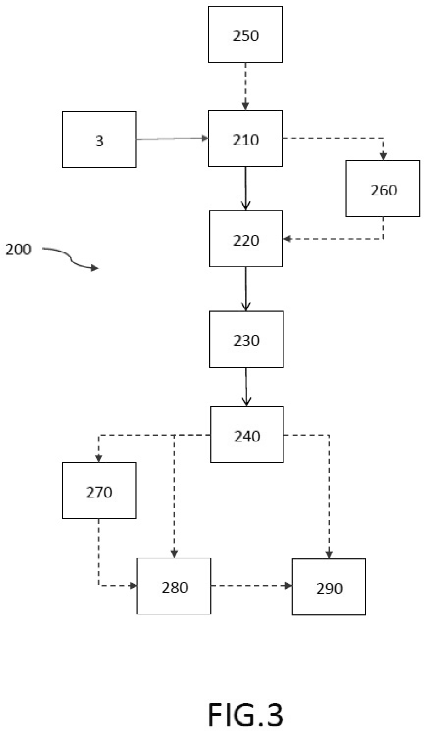

Fig.3 zeigt eine schematische Darstellung einer Ausführungsform des erfindungsgemäßen Verfahrens 200 zur Gewährung einer Zugangsberechtigung zu einem Fahrzeug 100 mit einem Verriegelungssystem und einer Steuerungseinheit 110 zumindest zur Steuerung des Verriegelungssystems sowie einem in dem Fahrzeug 100 eingebauten erfindungsgemäßen digitalen Zugangssystem 1 wie in den Figuren 1 und 2 gezeigt. Das Verfahren umfasst dabei die folgenden Schritte des Aktivierens 210 der Freischalteinheit 11 zumindest für einen vorbestimmten Zeitraum durch die sich außerhalb des Fahrzeugs 100 befindliche Aktivierungseinheit 13 mittels drahtloser Datenkommunikation 21 zu der Freischalteinheit 11. Dem Schritt des Aktivierens kann das Durchführen 250 einer Autorisierungsprüfung der Aktivierungseinheit 13 anhand von Daten zur Autorisierung der Aktivierungseinheit 13 durch eine Prozessoreinheit 111 der Freischalteinheit vorgeschaltet sein, wobei das Aktivieren 210 der Freischalteinheit 11 dann erst nach Erfolg der Autorisierungsprüfung der Aktivierungseinheit 13 erfolgt. Die Freischalteinheit 11 kann dafür auch einen Datenspeicher 112 zum Speicher dieser Daten für die Aktivierungseinheit und/oder die Zugriffseinheit umfassen. Nach dem Aktivieren 210 erfolgt der Schritt des Veranlassens 220 eines Zugangs von außen zu dem Fahrzeug 100 durch die sich ebenfalls außerhalb des Fahrzeugs 100 befindliche Zugriffseinheit 12 mittels einer zur vorherigen Datenkommunikation 21 separaten unabhängigen drahtlosen Datenkommunikation 22 mit der durch die Aktivierungseinheit 13 vorher aktivierten Empfangseinheit 11. Dem Schritt des Veranlassens 220 kann das Durchführen 260 einer Autorisierungsprüfung der Zugriffseinheit anhand eines von der Zugriffseinheit an die Freischalteinheit 13 übermittelten Identifikationscodes durch die Prozessoreinheit 111 vorgeschaltet sein. Nachfolgend erfolgt ein Übermitteln 230 von den Zugang veranlassenden Steuersignalen 14 an die Systemsteuerung 110 durch die Freischalteinheit 11 in Reaktion auf die Datenkommunikation 22 mit der Zugriffseinheit 12, wobei das Übermitteln 230 der Steuersignale erst nach Erfolg der Autorisierungsprüfung der Zugriffseinheit 12 erfolgen kann. Anschließend erfolgt eine Ansteuerung 240 des Verriegelungssystems und Freigabe zumindest einer verriegelnden Komponente 140 zur Ermöglichung des Zugangs zum Fahrzeug zu dessen Ladung durch die Systemsteuerung 110. In einer Ausführungsform können zusätzlich die weiteren Schritte des Anweisens 270 der Systemsteuerung 110 durch die Freischalteinheit 11 spätestens nach Ablauf des vorbestimmten Zeitraums der Aktivierung, die Komponenten 140 zur Ladung des Fahrzeugs zu verriegeln, sofern diese aufgrund der vorherigen Datenkommunikation 22 mit der Zugriffseinheit 12 entriegelt wurden, und/oder das Verriegeln 280 der entsprechenden Komponenten 140 durch die Systemsteuerung 110 des Fahrzeugs 100 nach Abschluss der Ladung des Fahrzeugs 100 nach entsprechender Datenkommunikation 22 zwischen Zugriffseinheit 12 und Freischalteinheit 11 erfolgen. In einem weiteren Schritt können zusätzlich charakteristische Daten über die erfolgte Ladung des Fahrzeugs 100 durch die Freischalt-einheit 11 an die Aktivierungseinheit 14 und/oder an die Zugriffseinheit 12 nach erfolgter Verriegelung der Komponenten 140 des Fahrzeugs 100 übertragen 290 werden. In einer Ausführungsform, wo das Fahrzeug 100 ein Elektrofahrzeug ist, ermöglicht das Übermitteln 230 zumindest eine Aufladung des Elektrofahrzeugs 100 oder eine Öffnung eines Kofferraums und/oder einer Ladefläche 120 mittels Freigabe der entsprechenden Komponenten 140 des Elektrofahrzeugs 100.

### Detaillierte Beschreibung der Ausführungsbeispiele des dynamischen Ladesystems:

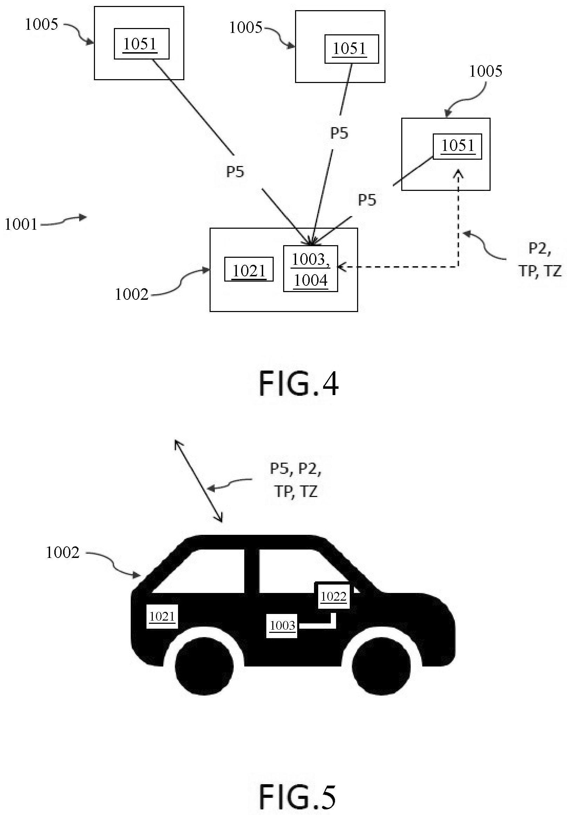

Fig.4 zeigt eine schematische Darstellung einer Ausführungsform des erfindungsgemäßen Ladesystems 1001 zur dynamischen Aufladung von Elektrofahrzeugen 1002 umfassend ein oder mehrere mobile Geräte 1003 (hier ist aus Übersichtsgründen exemplarisch nur ein mobiles Gerät in einem Elektrofahrzeug 1002 dargestellt), die jeweils eine Navigationsfunktion umfassen oder mit einem Navigationsgerät 1022 im jeweiligen Elektrofahrzeug 1002 verbindbar sind und eine auf dem jeweiligen mobilen Gerät 1003 installierte und ausgeführte Software-Applikation 1004 sowie eine Vielzahl an mobilen Ladefahrzeugen 1005 mit jeweils einer Navigationseinrichtung 1051, die unter anderem dazu ausgestaltet ist, eine aktuelle Position P5 eines jeden mobilen Ladefahrzeugs 1005 des Ladesystems 1001 der Software-Applikation 1004 zu übermitteln. Die Software-Applikation 1004 ist dabei dazu ausgestaltet, auf dem sich in einem Elektrofahrzeug 1002 befindlichen mobilen Gerät 1003 zumindest das jeweils nächste mobile Ladefahrzeug 1005 anzuzeigen und im Falle einer aufzuladenden Elektrobatterie 1021 des Elektrofahrzeugs 1002 einen Ladewunsch für dieses Elektrofahrzeug 1002 sowie zumindest eine aktuelle Position P2 des Elektrofahrzeugs 1002 an das angezeigte mobile Ladefahrzeug 1005 zu übermitteln, wobei die aktuelle Position des mobilen Geräts mit der aktuellen Position P2 des Elektrofahrzeugs 1002 gleichgesetzt wird, da sich das mobile Gerät 1003 an Bord des Elektrofahrzeugs 1002 befindet. Die Navigationseinrichtung 1051 des Ladefahrzeugs 1005 ist wiederum dazu ausgestaltet, aufgrund des empfangenen Ladewunsches Koordinaten eines geeigneten gemeinsamen Treffpunktes TP und einer geeigneten Treffpunktzeit TZ zur Aufladung der Elektrobatterie 1021 des Elektrofahrzeugs 1002 an das mobile Gerät 1003 im aufzuladenden Elektrofahrzeug 1002 zu übermitteln, wobei die Software-Applikation 1004 dazu ausgestaltet ist, Treffpunkt TP und Treffpunktzeit TZ in Navigationsanweisungen für einen Fahrer des aufzuladenden Elektrofahrzeugs 1002 umzusetzen. Hierbei kann die Software-Applikation 1004 die Navigationsanweisungen aus gemeinsamen Treffpunkt TP und Treffpunktzeit TZ für das Elektrofahrzeug 1002 auch erst dann erstellen, nachdem über die Software-Applikation 1004 eine Bestätigung des Aufladewunsches am gemeinsamen Treffpunkt TP an das Ladefahrzeug 5 übermittelt wurde. In einer Ausführungsform kann die Software-Applikation 4 auch dazu ausgestaltet sein, alle Positionen P5 aller Ladefahrzeuge 1005 anzuzeigen, um eine Auswahl eines gewünschten Ladefahrzeugs 1005 für die Aufladung des Elektrofahrzeugs 1002 durch einen Bediener des mobilen Geräts (beispielsweise der Fahrer des Elektrofahrzeugs 1002) zu ermöglichen.

Fig.5 zeigt eine schematische Darstellung einer Ausführungsform des Elektrofahrzeugs 1002 mit einer Elektrobatterie 1021 zum Betrieb des Elektrofahrzeugs 1002 und mit einem mobilem Gerät 1003 und darauf installierter erfindungsgemäßer Software-Applikation 1004. Hierbei kann die Software-Applikation 1004 dazu ausgestaltet sein, Treffpunkt TP und Treffpunktzeit TZ in Navigationsanweisungen für einen Fahrer des aufzuladenden Elektrofahrzeugs 1002 umzusetzen, wobei die Software-Applikation 1004 die aktuelle Position P5 des Ladefahrzeugs 1005 auf dem Weg zum gemeinsamen Treffpunkt TP auf einer Navigationsanzeige im Elektrofahrzeug 1002 anzeigen kann. Die Navigationsanzeige kann dabei der Bildschirm des mobilen Geräts 1003 oder der Bildschirm des mit dem mobilen Gerät 1003 verbundenen Navigationsgerät 1022 im Elektrofahrzeug 1002 sein. Dazu kann das mobile Gerät 1003 beispielsweise über ein Kabel oder eine Schnittstelle für kabellose Nahfeldkommunikation (beispielsweise Bluetooth) mit dem Navigationsgerät 1022 verbunden sein. Die Software-Applikation 1004 stellt entsprechende Schnittstellen zur Datenübertragung auf das Navigationsgerät 1022 bereit. In einer Ausführungsform kann die Navigationseinrichtung 1051 des Ladefahrzeugs 1005 auf einem Weg zum gemeinsamen Treffpunkt TP zumindest periodisch die jeweils aktuelle Position P5 des Ladefahrzeugs 1005 an die Software-Applikation 1004 für eine Abfrage im Elektrofahrzeug 1002 übermitteln, bis das Ladefahrzeug 1005 den gemeinsamen Treffpunkt TP erreicht hat.

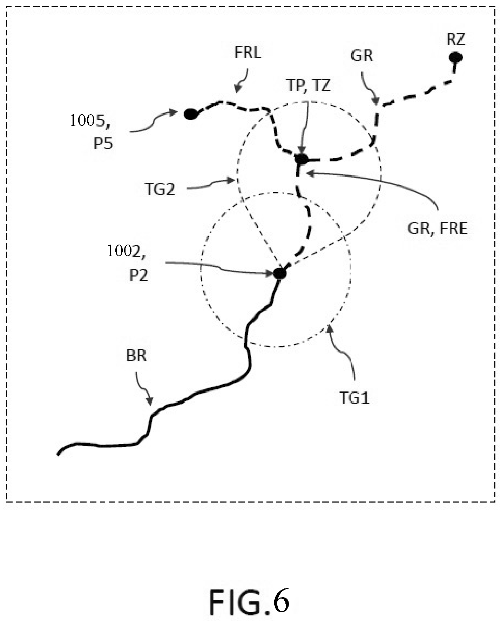

Fig.6 zeigt eine schematische Darstellung der Berechnung des gemeinsamen Treffpunkts TP anhand von Positions- und Bewegungsdaten des Elektrofahrzeugs 1002 sowie die Fahrwege FRE, FRL des Ladefahrzeugs 1005 und des Elektrofahrzeugs 1002 zum gemeinsamen Treffpunkt TP. Sofern zusammen mit dem Ladewunsch lediglich die aktuelle Position P2 des Elektrofahrzeugs 1002 an das angezeigte mobile Ladefahrzeug 1005 übermittelt wird, kann die Navigationseinrichtung 1051 des Ladefahrzeugs 1005 ohne Kenntnis der bisherigen Route BR und der geplanten zukünftigen Route GR des Elektrofahrzeugs 1002 nur ein Treffpunktgebiet TG1 (durch eine Strich-Punkt-Line dargestellter Kreis) um die aktuellen Position P2 des Elektrofahrzeugs 1002 zur Berechnung eines geeigneten gemeinsamen Treffpunktes TP zu Grunde legen, dessen Durchmesser beispielsweise von den Straßenverhältnissen und anzunehmenden Geschwindigkeiten der beiden Fahrzeuge 1002, 1005 bestimmt wird. Wird dagegen der gemeinsame Treffpunkt TP und die Treffpunktzeit TZ unter Berücksichtigung einer bisherigen Route BR des aufzuladenden Elektrofahrzeugs 1002 von der Navigationseinrichtung 1051 des mobilen Ladefahrzeugs 1005 bestimmt, kann auf Basis der Annahme, dass sich der bisherige Routenverlauf in etwa so fortsetzen wird, ein anderes Treffpunktgebiet TG2 unter Extrapolation der bisherigen Route BR des Elektrofahrzeugs 1002 in eine entsprechende Vorwärtsbewegung angenommen werden, hier als tropfenförmiges Gebiet TG2 gestrichelt dargestellt. Ein gemeinsamer Treffpunkt im Gebiet TG2 stört die Route des Elektrofahrzeugs 1002 deutlich weniger als ein Treffpunkt im Gebiet TG1 basierend lediglich auf der aktuellen Position P2 des Elektrofahrzeugs 1002 zum Zeitpunkt der Übermittlung des Ladewunsches. Hierzu übermittelt die Software-Applikation 1004 die bisherige Route BR anhand von entsprechend aufgezeichneten Positionsdaten mit dem Ladewunsch an das mobile Ladefahrzeug 1005. Falls die Software-Applikation 1004 zusätzlich zur bisherigen Route BR auch noch die für das Elektrofahrzeug 1002 bis zu einem Routenziel RZ geplante Route GR an das Ladefahrzeug 1005 übermittelt, kann die Navigationseinrichtung 1051 des Ladefahrzeugs 1005 die geplante Route GR zur Berechnung des gemeinsamen Treffpunkts TP und der Treffpunktzeit TZ berücksichtigen, wie in Fig.6 dargestellt ist. Hier liegt der gemeinsame Treffpunkt TP exakt auf der geplanten Route GP des Elektrofahrzeugs 1002 zum Routenziel RZ. Damit stört die geplante Aufladung der Elektrobatterie 1021 des Elektrofahrzeugs 1002 die Route BR,GR des Elektrofahrzeugs 1002 überhaupt nicht, da der gemeinsame Treffpunkt TP und die Fahrstrecke FRE des Elektrofahrzeugs 1002 zum Treffpunkt TP der geplanten Route GR entspricht und somit keine Umwege und damit verbundene zusätzliche Fahrzeiten in Kauf genommen werden müssen. Hierbei kann die Navigationseinrichtung 1051 des Ladefahrzeugs 1005 automatisch die schnellste Route für das Ladefahrzeug 1005 zum Treffpunkt TP berechnen und im Ladefahrzeug 1005 als Fahrroute FRL anzeigen.

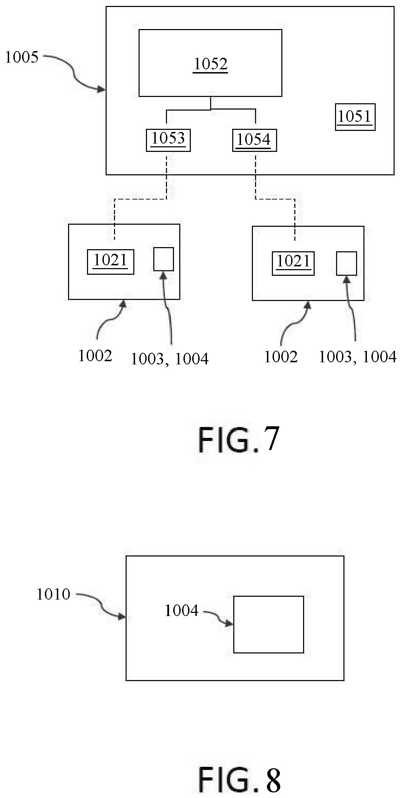

Fig.7 zeigt eine schematische Darstellung des erfindungsgemäßen Ladefahrzeugs 1005, das hier neben der Navigationseinrichtung 1051 über einen Batteriespeicher 1052 von mehr als 300 kWh und über eine DC-Ladeeinheit 1053 und eine AC-Ladeeinheit 1054 verfügt. Andere Ladefahrzeuge können auch über mehr DC- und/oder AC-Ladeeinheiten 1053, 1054 verfügen. Die mehreren Ladeeinheiten 1053, 1054 ermöglichen das simultane Aufladen mehrerer Elektrofahrzeuge 1002 jeweils mit Elektrobatterie 1021 und mobilen Geräten 1003, auf denen jeweils die Software-Applikationen 1004 installiert und ausgeführt werden.

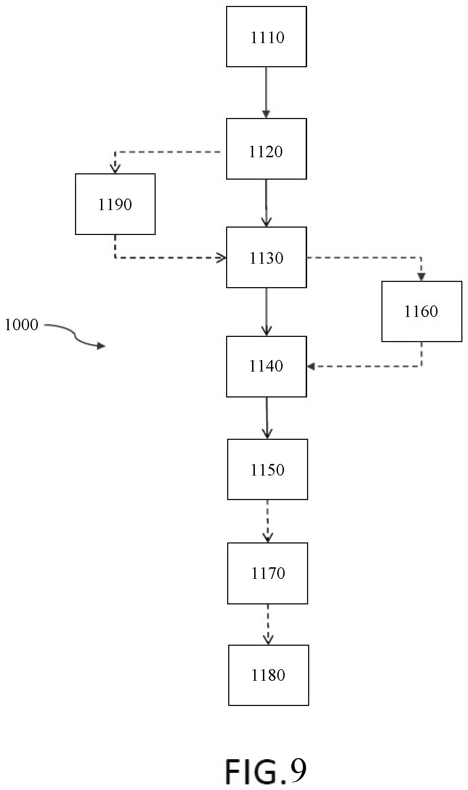

Fig.8 zeigt eine schematische Darstellung des erfindungsgemäßen Datenspeicherprodukts 1010 mit darauf gespeicherter Software-Applikation 1004, die zur Ausführung der auf die Software-Applikation 1004 bezogenen Schritte des Verfahrens 1100 gemäß Fig.9 geeignet ist. Datenspeicherprodukte 1010 können dabei jegliche Datenspeicher geeignet zur Speicherung von Software-Programmen wie Software-Applikationen sein, beispielsweise Datensticks, CDs, Festplatten, Server und andere dafür geeignete Geräte.

Fig.9 zeigt eine schematische Darstellung einer Ausführungsform des erfindungsgemäßen Verfahrens 1100 zur dynamischen Aufladung von Elektrofahrzeugen in einem erfindungsgemäßen Ladesystem umfassend eine zumindest auf einem mobilen Gerät 1003, das eine Navigationsfunktion umfasst oder jeweils mit einem Navigationsgerät 1022 verbindbar ist, installierte und ausgeführte Software-Applikation 1004 und eine Vielzahl an mobilen Ladefahrzeugen 1005 mit jeweils einer Navigationseinrichtung 1051. Das Verfahren umfasst in dieser Ausführungsform die Schritte des Übermittelns 1110 von aktuellen Positionen P5 eines jeden mobilen Ladefahrzeugs 1005 des Ladesystems 1001 an die Software-Applikation 1004 durch die Navigationseinrichtung 1051 des Ladefahrzeugs 1005; des Anzeigens 1120 zumindest des jeweils nächsten mobilen Ladefahrzeugs 1005 auf dem sich in einem Elektrofahrzeug 1002 befindlichen mobilen Gerät 1003 durch die Software-Applikation; des Übermittelns 1130 eines Ladewunsches für das Elektrofahrzeug 1002 sowie zumindest einer aktuellen Position P2 des Elektrofahrzeugs 1002 an das angezeigte mobile Ladefahrzeug 1005 im Falle einer aufzuladenden Elektrobatterie 1021 des Elektrofahrzeugs 1002 durch die Software-Applikation; des Übermittelns 1140 von Koordinaten eines geeigneten gemeinsamen Treffpunktes TP und einer geeigneten Treffpunktzeit TZ zur Aufladung der Elektrobatterie 1021 des Elektrofahrzeugs 1002 aufgrund des empfangenen Ladewunsches an das mobile Gerät 1003 im aufzuladenden Elektrofahrzeug 1002 durch die Navigationseinrichtung 1051 des Ladefahrzeugs 1005; und des Umsetzens 1150 von Treffpunkt TP und Treffpunktzeit TZ in Navigationsanweisungen für einen Fahrer des aufzuladenden Elektrofahrzeugs 1002 durch die Software-Applikation 4 zur Navigation des Elektrofahrzeugs 1002 zum gemeinsamen Treffpunkt TP. In einer Ausführungsform (gestrichelter Pfeil) umfasst das Verfahren den zusätzlichen Schritt des zumindest periodischen Übermittelns 1170 der aktuellen Position P5 des Ladefahrzeugs 1005 auf einem Weg zum gemeinsamen Treffpunkt durch die Navigationseinrichtung 1051 an die Software-Applikation 1004 für eine Abfrage im Elektrofahrzeug 1002 sowie das Anzeigen 1180 der aktuellen Position P5 des Ladefahrzeugs 1005 auf dem Weg zum gemeinsamen Treffpunkt TP durch die Software-Applikation 1004 auf einer Navigationsanzeige im Elektrofahrzeug 1002. Nachfolgend zu Schritt 1130 kann das Verfahren den zusätzlichen Schritt des Bestimmens 1160 des gemeinsamen Treffpunkts TP und der Treffpunktzeit TZ unter Berücksichtigung zumindest einer bisherigen Route BR des aufzuladenden Elektrofahrzeugs 1002 von der Navigationseinrichtung 1051 des mobilen Ladefahrzeugs 1005 umfassen, wobei die Software-Applikation 1004 die bisherige Route BR anhand von entsprechend aufgezeichneten Positionsdaten zusammen mit dem Ladewunsch an das mobile Ladefahrzeug 1005 übermittelt hat. Außerdem kann die Software-Applikation 1004 zusätzlich zur bisherigen Route BR auch die für das Elektrofahrzeug 1002 bis zu einem Routenziel RZ geplante Route GR an das Ladefahrzeug 1005 übermitteln und die Navigationseinrichtung 1051 des Ladefahrzeugs 1005 die geplante Route GR zur Berechnung 1160 des gemeinsamen Treffpunkts TP und der Treffpunktzeit TZ berücksichtigen.

### Detaillierte Beschreibung der Ausführungsbeispiele des Energiespeichers:

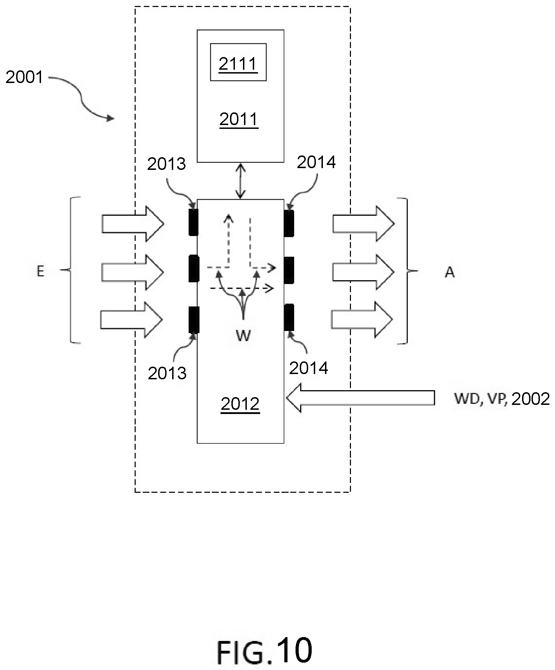

Fig. 10 zeigt eine schematische Darstellung einer Ausführungsform des erfindungsgemäßen Energiespeichers 2001 für Stromtankstellen 2010, der eine Energiespeichereinheit 2011 und ein mit der Energiespeichereinheit 2011 verbundenes Steuerungsmodul (2012) zumindest mit mehreren Einspeise-Stromanschlüssen 2013 zur Aufnahme E von elektrischer Energie und mehreren Ausspeise-Stromanschlüssen 2014 zur Abgabe A von elektrischer Energie umfasst. Das Steuerungsmodul 2012 ist zur Weiterleitung W der über die Einspeise-Stromanschlüssen 2013 aufgenommene elektrische Energie an die Energiespeichereinheit 2011 und/oder an die Ausspeise-Stromanschlüsse 2014 sowie der abzugebenden elektrischen Energie von den Einspeise-Stromanschlüssen 2013 und/oder der Energiespeichereinheit 2011 über die Ausspeise-Stromanschlüsse 2014 zur bedarfsgerechten Abgabe an ein oder mehrere Ladesäulen 2002 für Elektrofahrzeuge vorgesehen. Die hier gezeigte Anzahl an jeweils drei Einspeise- und Ausspeise-Stromanschlüsse 2013, 2014 stellt nur ein Beispiel dar. Die Anzahl beider Anschlusstypen kann je nach Anwendung stark variieren. Dazu umfasst das Steuerungsmodul 2012 mehrere entsprechend angesteuerte Spannungswandler (beispielsweise mehrere Transformatoren und/oder Umrichter in einer dafür geeigneten Anzahl und Anordnung). Damit wird die Aufnahme, Abgabe oder Weiterleitung E, A, W der elektrischen Energie zwischen den Einspeise- und Ausspeise-Stromanschlüssen 2013, 2014 gleichzeitig mit unterschiedlicher Spannung und Leistung ermöglicht. Das Steuerungsmodul 2012 überwacht dazu die an den Einspeise-Stromanschlüssen 2013 ankommende elektrische Energie und die an den Ausspeise-Stromanschlüssen 2014 abgefragte elektrische Energie und passt diese mittels der Spannungswandler geeignet an den jeweiligen Bedarf an. Einer der Einspeise- Stromanschlüsse 2013 kann dabei für die Sicherstellung einer Grundversorgung mit Energie mit dem allgemeinen Stromnetz 2031 verbunden sein. Ein oder mehrere andere der Einspeise-Stromanschlüsse 2013 können zum Anschluss zumindest an eine regenerative Energiequelle 2032, 2033, vorzugsweise an eine Wind- und/oder Solarenergieanlage 2032, 2033 ausgestaltet sein. Jeweils mindestens einer der Ausspeise-Stromanschlüsse 2014 kann für einpolige und/oder dreipolige Anschlüsse zur Abgabe von Gleichstrom- und/oder Wechselstrom ausgestaltet sein. Zusätzlich kann das Steuerungsmodul 2012 dazu ausgestaltet sein, die Aufnahme, Abgabe oder Weiterleitung E, A, W der elektrischen Energie zwischen Einspeise-Stromanschlüssen 2013, Energiespeichereinheit 2011 und Ausspeise-Stromanschlüssen 2014 auf Basis von erhaltenen Wetterdaten WD und statistisch ermitteltem Verbrauchsparametern VP an Energie zu steuern. Die Energiespeichereinheit 2011 kann zur Speicherung der Energie zumindest einen oder mehrere geeignet mit dem Steuerungsmodul verbundene Batteriespeicher 2111 umfassen.

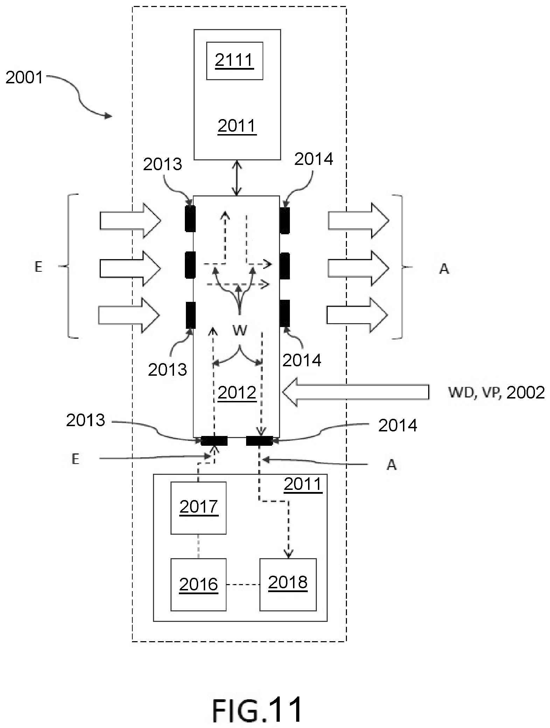

Fig.11 zeigt eine schematische Darstellung einer anderen Ausführungsform des erfindungsgemäßen Energiespeichers 2001 hier im Vergleich zu Figur 10 zusätzlich mit Wasserstoffspeicher 2016, Brennstoffzelle 2017 und Elektrolyseur 2018. Im Nachfolgenden werden nur die nicht in Figur 10 gezeigten Komponenten beschrieben, für alle anderen Komponenten wird auf Figur 10 verwiesen. Der Wasserstoffspeicher 2016 ist hier mit mindestens einer Brennstoffzelle 2017 verbunden, die die in der Brennstoffzelle 2017 erzeugte elektrischer Energie an den angeschlossen Einspeise-Stromanschluss 2013 liefert. Außerdem ist ein Elektrolyseur 2018 an den Wasserstoffspeicher 16 angeschlossen, der mittels des Steuermoduls 2012 mit Strom zur Elektrolyse eines geeigneten Rohstoffs zur Erzeugung von Wasserstoff versorgt wird, das anschließend in dem oder den Wasserstoffspeicher 2016 gespeichert wird. Der in dieser Ausführungsform gezeigte einzige Wasserstoffspeicher kann in anderen Ausführungsformen durch eine Vielzahl von Wasserstoffspeichern ersetzt werden. Ebenso kann in anderen Ausführungsformen die Anzahl an Elektrolyseuren und Brennstoffzellen höher sein als hier gezeigt. Die Verrohrung der einzelnen Komponenten miteinander sowie die Stromanschlüsse können von Fachmann geeignet ausgeführt werden. Das Steuermodul 2012 kann dabei nach den Wetterdaten WD und Verbrauchsparametern VP automatisch eine dafür geeignete Speichermenge in der Energiespeichereinheit 2011 und in dem oder den Wasserstoffspeichern 2016 bestimmen und Füllstände in der Energiespeichereinheit 2011 und/oder in dem oder den Wasserstoffspeichern 2016 mittels Energiespeicherung oder Wasserstofferzeugung oder deren jeweiligen Verbrauch entsprechend anpassen.

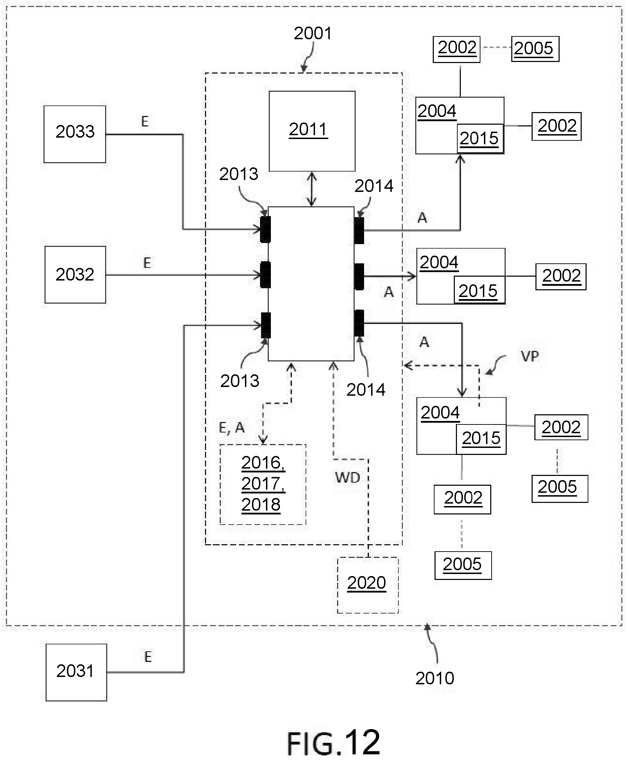

Fig.12 zeigt eine schematische Darstellung einer Ausführungsform der erfindungsgemäßen Stromtankstelle 2010 zur parallelen Aufladung mehrerer Elektrofahrzeuge 2005, umfassend einen erfindungsgemäßen Energiespeicher 2001 mit pro Ausspeise-Stromanschluss 2014 jeweils einem Versorgungsnetz 2004, an das hier ein oder mehrere Ladesäulen 2002 angeschlossen sind, wobei der Energiespeicher 2001 der zur Abgabe A von elektrischer Energie über das oder die internen Versorgungsnetze 2004 an die Ladesäulen 2002 angeschlossen ist und zur Aufnahme E von elektrischer Energie mit dem allgemeinen Stromnetz 2031 verbunden ist. Des Weiteren umfasst die Stromtankstelle 2010 eine Wind- und Solarkraftanlage 2032, 2033, die über jeweilige separate Einspeise-Stromanschlüsse 2013 mit dem Energiespeicher 2001 und über den Energiespeicher 2001 mit dem internen Versorgungsnetz 2004 verbunden sind. Hier ist außerdem jeweils ein Lastsensor 2015 im jeweiligen Versorgungsnetz 2004 angeschlossen und mit dem Steuerungsmodul 2012 des Energiespeichers 2001 geeignet über eine Datenleitung verbunden (aus Übersichtsgründen gestrichelt nur für ein Versorgungsnetz 2004 dargestellt), damit das Steuerungsmodul 2012 eine Lastprüfung in dem jeweiligen Versorgungsnetz 2004 ausführen und bei Bedarf zusätzliche elektrische Energie aus der Energiespeichereinheit 2011 für das jeweilige Versorgungsnetz 2004 bereitstellen kann, um eine Überlastung auf Seiten der Einspeise-Stromanschlüsse 2013 zu vermeiden. Zusätzlich empfängt die Stromtankstelle 2010 Wetterdaten WD von einer Wetterstation 2020 der Stromtankstelle 1, wobei dieser Wetterdaten WD an das Steuermodul 2012 übermittelt werden, damit das Steuermodul 2012 die Aufnahme, Abgabe oder Weiterleitung E, A, W der elektrischen Energie zwischen Einspeise-Stromanschlüssen 2013, Energiespeichereinheit 2011 und Ausspeise-Stromanschlüssen 2014 auf Basis der Wetterdaten WD und/oder statistisch ermitteltem Verbrauchsparametern VP an Energie steuern kann. In einer Ausführungsform (hier nicht explizit gezeigt) ist zumindest einer der Ausspeisestromanschlüsse 2014 als Rückspeiseanschluss an das allgemeine Stromnetz 2031 angeschlossen. Das Steuerungsmodul 2012 kann dabei dazu ausgestaltet sein, neben der Weiterleitung W von elektrischer Energie von den Einspeise-Stromanschlüssen 2013 zu den Ausspeise-Stromanschlüsse 2014 zur Abgabe A der elektrischen Energie an die Ladestationen 2002 eine Lastprüfung in allen hier an die Ausspeisestromanschlüsse angeschlossenen Versorgungsnetze 2004 durchzuführen und bei Bedarf zusätzliche elektrische Energie aus der Energiespeichereinheit 2011 für das jeweilige Versorgungsnetz 2004 bereitzustellen, um eine Überlastung auf Seiten der Einspeise-Stromanschlüsse 2013 zu vermeiden. Das Steuerungsmodul 2012 kann dabei im Falle keiner durch die Lastprüfung festgestellten Überlastung des Versorgungsnetzes 2004 zumindest einen Teil der über die Einspeise-Stromanschlüsse 2013 aufgenommenen elektrischen Energie E an die Energiespeichereinheit 2011 weiterleiten, um die in der Energiespeichereinheit 2111 gespeicherte Energiemenge in einem Bedarfsfall zu erhöhen.

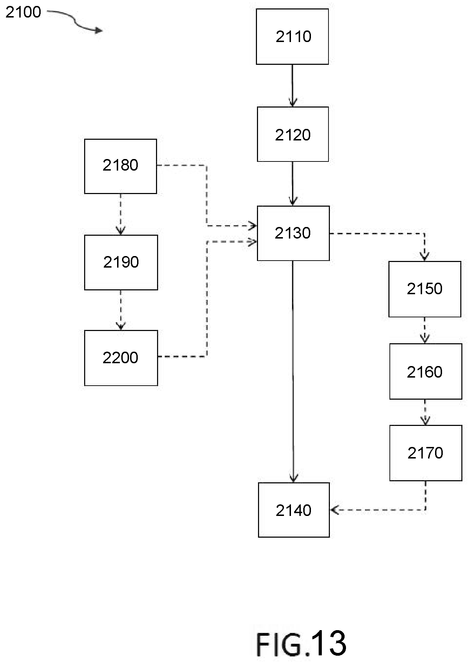

Fig.13 zeigt eine schematische Darstellung einer Ausführungsform des erfindungsgemäßen Verfahrens 2100 zum Betreiben einer Stromtankstelle 2010 zur parallelen Aufladung mehrerer Elektrofahrzeuge 2005 umfassend mehrere über ein Versorgungsnetz 2004 der Stromtankstelle 2010 miteinander verbundene Ladesäulen 2002 und mindestens einen erfindungsgemäßen Energiespeicher 2001 (siehe Figuren 10 oder 11) umfassend eine Energiespeichereinheit 2011 und ein mit der Energiespeichereinheit 2011 verbundenes Steuerungsmodul 2012 zumindest mit mehreren Einspeise-Stromanschlüssen 2013 zur Aufnahme E von elektrischer Energie und mehreren Ausspeise-Stromanschlüssen 2014 zur Abgabe A von elektrischer Energie, wobei der Energiespeicher 2001 zur Abgabe A der elektrischen Energie über das interne Versorgungsnetz 2004 an die Ladesäulen 2002 angeschlossen ist und zur Aufnahme E der elektrischen Energie zumindest mit dem allgemeinen Stromnetz 2031 verbunden ist, wobei das Steuermodul 2012 im erfindungsgemäßen Verfahren die nachfolgende Schritte ausführt: Weiterleiten 2110 der über die Einspeise-Stromanschlüsse 2013 aufgenommene elektrische Energie an die Energiespeichereinheit 2011 und/oder an die Ausspeise-Stromanschlüsse 2014; Überwachen 2120 der an den Einspeise-Stromanschlüssen 2013 ankommenden elektrischen Energie und der an den Ausspeise-Stromanschlüssen 2014 abgefragten elektrischen Energie; Aufnahme, Abgabe oder Weiterleitung 2130 der elektrischen Energie zwischen den Einspeise- und Ausspeise-Stromanschlüssen 2013, 2014 gleichzeitig mit unterschiedlicher Spannung und Leistung durch entsprechend angesteuerte Spannungswandler im Steuerungsmodul 2011; und bedarfsgerechtes Abgeben 2140 der elektrischen Energie mittels Weiterleitung W der abzugebenden elektrischen Energie von den Einspeise-Stromanschlüssen 2013 und/oder der Energiespeichereinheit 2011 über die Ausspeise-Stromanschlüssen 2014 an das Versorgungsnetz 2004 zur Versorgung der Ladestationen 2002. Für die Aufnahme, Abgabe und Weiterleitung 2130 der abzugebenden Energie zu einer bedarfsgerechten Abgabe 2140 können in einer Ausführungsform die zusätzlichen Schritte des Durchführens 2150 einer Lastprüfung im Versorgungsnetz 2004 mittels ein oder mehrerer Lastsensoren 2015, die an geeigneter Stelle im Versorgungsnetz 2004 angeordnet sind; des Bereitstellens 2160 zusätzlicher elektrischer Energie aus der Energiespeichereinheit 2011 für das Versorgungsnetz 2004 bei Bedarf, um eine Überlastung auf Seiten der Einspeise-Stromanschlüsse 2013 zu vermeiden; und des Weiterleitens 2170 zumindest eines Teils der über die Einspeise-Stromanschlüsse 2013 aufgenommenen elektrischen Energie an die Energiespeichereinheit 2011, falls durch die Lastprüfung keine Überlastung des Versorgungsnetzes 2004 festgestellt wurde, durchgeführt werden. Das Steuern 2180 der Aufnahme, Abgabe oder Weiterleitung der elektrischen Energie zwischen Einspeise-Stromanschlüssen, Energiespeichereinheit und Ausspeise-Stromanschlüssen kann dabei auf Basis von erhaltenen Wetterdaten und statistisch ermitteltem Verbrauchsparametern an den Ladestationen erfolgen. In einer Ausführungsform, wo der Energiespeicher 2001 des Weiteren mindestens einen Wasserstoffspeicher 2016 verbunden mit mindestens einer Brennstoffzelle 2017 zur Erzeugung von elektrischer Energie angeschlossen an zumindest einen der Einspeise-Stromanschlüsse 2013 und einen Elektrolyseur 2018 angeschlossen an den oder die Wasserstoffspeicher 2016 umfasst, wobei der Elektrolyseur 2018 mittels des Steuermoduls 2011 mit Strom zur Elektrolyse von Wasser versorgt wird, das anschließend in dem oder den Wasserstoffspeicher 2016 gespeichert wird, können des Weiteren die nachfolgenden Schritte ausgeführt werden: automatisches Bestimmen 2190 einer nach den Wetterdaten WD und Verbrauchsparametern VP geeigneten Speichermenge in der Energiespeichereinheit 2011 und in dem oder den Wasserstoffspeichern 2016; und entsprechendes Anpassen 2200 der Füllstände in der Energiespeichereinheit 2011 und/oder in dem oder den Wasserstoffspeichern 2016 mittels Energiespeicherung oder Wasserstofferzeugung oder deren jeweiligen Verbrauch.

Die hier gezeigten Ausführungsformen stellen nur Beispiele für die vorliegende Erfindung dar und dürfen daher nicht einschränkend verstanden werden. Alternative durch den Fachmann in Erwägung gezogene Ausführungsformen sind gleichermaßen vom Schutzbereich der vorliegenden Erfindung umfasst.

Die hier gezeigten Ausführungsformen stellen nur Beispiele für die vorliegende Erfindung dar und dürfen daher nicht einschränkend verstanden werden. Alternative durch den Fachmann in Erwägung gezogene Ausführungsformen sind gleichermaßen vom Schutzbereich der vorliegenden Erfindung umfasst. Insbesondere können die in der voranstehenden Beschreibung, insbesondere in Form der Beispiele B1 bis B17 bzw. der Veranschaulichungen V1 bis V21, in den Ansprüchen und in den Figuren offenbarten Merkmale sowohl einzeln auch in beliebiger Kombination wesentlich für die Erfindung in ihren verschiedenen Ausführungsformen sein.

Weitere nicht einschränkende Ausführungsformen oder Aspekte sind in den folgenden Beispielen dargelegt.

### Beispiele

1. Ein digitales Zugangssystem (1) zumindest geeignet zum Einbau in einem Fahrzeug (100) mit einem Verriegelungssystem und zur geeigneten Verbindung mit einer Systemsteuerung (110) des Fahrzeugs (100), wobei das Zugangssystem (1) mindestens eine Freischalteinheit (11) zur Positionierung in dem Fahrzeug (100), mindestens eine Zugriffseinheit (12) und mindestens eine Aktivierungseinheit (13) zur Verwendung außerhalb des Fahrzeugs (100) umfasst, wobei die Aktivierungseinheit (13) dazu ausgestaltet ist, mittels drahtloser Datenkommunikation (21) zu der Freischalteinheit (11) die Freischalteinheit (11) zumindest für einen Zeitraum zu aktivieren, die Zugriffseinheit (12) dazu ausgestaltet ist, mittels einer zur vorherigen Datenkommunikation (21) separaten unabhängigen drahtlosen Datenkommunikation (22) mit der durch die Aktivierungseinheit (13) vorher aktivierten Empfangseinheit (11) einen Zugang zum Fahrzeug (100) von außen zu veranlassen, wobei die Freischalteinheit (11) dazu ausgestaltet ist, in Reaktion auf die Datenkommunikation (22) mit der Zugriffseinheit (12) den Zugang veranlassende Steuersignale (14) an die Systemsteuerung (110) zur Ansteuerung des Verriegelungssystems und Freigabe zumindest einer verriegelnden Komponente (140) zur Ermöglichung des Zugangs zum Fahrzeug zu dessen Ladung zu übermitteln.
2. Das Zugangssystem (1) nach Beispiel 1,
   dadurch gekennzeichnet,
   dass die Freischalteinheit (11) zumindest zum Empfang von Signalen und/oder Daten mittels Funk, WLAN oder Nahfeldkommunikation, vorzugsweise RFID, ausgestaltet ist.
3. Das Zugangssystem (1) nach Beispiel 1 oder 2,
   dadurch gekennzeichnet,
   dass die Freischalteinheit (11) eine Prozessoreinheit (111) mit Datenspeicher (112) umfasst, auf dem Daten zur Autorisierung der Aktivierungseinheit (13) und/oder der Zugriffseinheit (12) gespeichert sind und die Prozessoreinheit (111) dazu ausgestaltet ist, anhand dieser Daten eine Autorisierungsprüfung durchzuführen.
4. Das Zugangssystem (1) nach Beispiel 3,
   dadurch gekennzeichnet,
   dass die Freischalteinheit (11) dazu ausgestaltet ist, die Aktivierung erst nach einer erfolgreichen Autorisierungsprüfung der Aktivierungseinheit (13) durchzuführen.
5. Das Zugangssystem (1) nach einem der voranstehenden Beispiele,
   dadurch gekennzeichnet,
   dass die Freischalteinheit (11) dazu ausgestaltet ist, im aktivierten Zustand Signale zur Abfrage nach vorhandenen Zugriffseinheiten (12) auszusenden.
6. Das Zugangssystem (1) nach einem der voranstehenden Beispiele,
   dadurch gekennzeichnet,
   dass die Zugriffseinheit (12) zumindest zum Aussenden von Signalen und/oder Daten mittels Funk, WLAN oder Nahfeldkommunikation, vorzugsweise RFID, ausgestaltet ist.
7. Das Zugangssystem (1) nach einem der voranstehenden Beispiele,
   dadurch gekennzeichnet,
   dass die Zugriffseinheit (12) dazu ausgestaltet ist, zumindest einen Identifikationscode an die Freischalteinheit (11) zu übermitteln, anhand dessen die Freischalteinheit (11) eine Autorisierungsprüfung der Zugriffseinheit (12) durchführen kann, wobei die Übermittlung der Steuersignale (14) an die Systemsteuerung (110) erst nach erfolgreicher Autorisierungsprüfung der Zugriffseinheit (12) erfolgt.
8. Das Zugangssystem (1) nach Beispiel 7,
   dadurch gekennzeichnet,
   dass die Zugriffseinheit (12) ein Transponder ist, der dazu ausgestaltet ist, nach Empfang der Datenkommunikation (22) von der Freischalteinheit (11) zumindest den Identifizierungscode an die Freischalteinheit (11) zu übertragen.
9. Das Zugangssystem (1) nach Beispiel 8,
   dadurch gekennzeichnet,
   dass der Transponder (12) ein passiver Transponder ist.
10. Das Zugangssystem (1) nach einem der voranstehenden Beispiele,
   dadurch gekennzeichnet,
   dass die Freischalteinheit (11) dazu ausgestaltet ist, spätestens nach Ablauf des vorbestimmten Zeitraums der Aktivierung die Systemsteuerung (110) anzuweisen, die aufgrund der vorherigen Datenkommunikation (22) mit der Zugriffseinheit (12) entriegelten Komponenten (140) wieder zu verriegeln.
11. Das Zugangssystem (1) nach einem der voranstehenden Beispiele,
   dadurch gekennzeichnet,
   dass die Zugriffseinheit (12) dazu ausgestaltet ist, nach Abschluss der Ladung des Fahrzeugs (100) eine Verriegelung der entsprechenden Komponenten (140) mittels entsprechender Datenkommunikation (22) mit der Freischalteinheit (11) durch die Systemsteuerung (110) des Fahrzeugs (100) zu veranlassen.
12. Das Zugangssystem (1) nach einem der Beispiele 10 oder 11,
   dadurch gekennzeichnet,
   dass die Freischalteinheit (11) dazu ausgestaltet ist, nach erfolgter Verriegelung der Komponenten (140) des Fahrzeugs (100) der Aktivierungseinheit (13) und/oder der Zugriffseinheit (12) charakteristische Daten über die erfolgte Ladung des Fahrzeugs (100) zu übertragen.
13. Das Zugangssystem (1) nach einem der voranstehenden Beispiele,
   dadurch gekennzeichnet,
   dass die Freischalteinheit (11) für eine reversible Anordnung im Fahrzeug (100) und zur Verbindung mit der Systemsteuerung (110) ausgestaltet ist.
14. Das Zugangssystem (1) nach einem der voranstehenden Beispiele,
   dadurch gekennzeichnet,
   dass das Zugangssystem (1) ein Hintergrund-Computersystem umfasst, das so ausgestaltet ist, dass es zumindest eine Registrierung von Nutzern (3) und eine Eintragung von Daten der Fahrzeuge (100) und/oder der Freischalteinheiten (11) und/oder der Zugriffseinheiten (12) und/oder der Aktivierungseinheiten (13) sowie deren Zuordnung zu den Fahrzeugen (100) und/oder Nutzern (3) ermöglicht und eine geeignete Übertragung von Daten an die Freischalteinheit (11) zu Ermöglichung eine Autorisierungsprüfung durch die Freischalteinheit (11) durchführt.
15. Das Zugangssystem (1) nach einem der voranstehenden Beispiele,
   dadurch gekennzeichnet,
   dass die Datenkommunikation (21, 22) verschlüsselt erfolgt.
16. Das Zugangssystem (1) nach einem der voranstehenden Beispiele,
   dadurch gekennzeichnet,
   dass das Fahrzeug (100) ein Elektrofahrzeug ist und die von der Freischalteinheit (11) an die Systemsteuerung (110) übermittelten Steuersignale (14) dazu vorgesehen sind, zumindest eine Aufladung des Elektrofahrzeugs (100) oder eine Öffnung eines Kofferraums und/oder einer Ladefläche (120) mittels Freigabe der entsprechenden Komponenten (140) des Elektrofahrzeugs (100) zu ermöglichen.
17. Ein Fahrzeug (100) mit einem Verriegelungssystem und einer Steuerungseinheit (110) zumindest zur Steuerung des Verriegelungssystems sowie einem digitalen Zugangssystem (1) nach Beispiel 1 umfassend mindestens eine Zugriffseinheit (12) und mindestens eine Aktivierungseinheit (13) zur Verwendung außerhalb des Fahrzeugs und eine Freischalteinheit (11), die in dem Fahrzeug (100) positioniert und mit der Steuerungseinheit (110) geeignet verbunden ist, um mittels Ansteuerung des Verriegelungssystems und Freigabe zumindest einer verriegelnden Komponente (140) den Zugang zum Fahrzeug zu dessen Ladung zu ermöglichen.
18. Das Fahrzeug (100) nach Beispiel 17,
   dadurch gekennzeichnet,
   dass die Freischalteinheit (11) mit einer Empfangsantenne (130) des Fahrzeugs (100) verbunden ist.
19. Das Fahrzeug (100) nach Beispiel 17 oder 18,
   dadurch gekennzeichnet,
   dass die Freischalteinheit (11) im Fahrzeug (100) an einer von außen und/oder vom Innenraum des Fahrzeugs (100) unzugänglichen Stelle angeordnet ist.
20. Das Fahrzeug (100) nach Beispiel 17 oder 18,
   dadurch gekennzeichnet,
   dass die Freischalteinheit (11) reversibel im Fahrzeug (100) installiert ist.
21. Das Fahrzeug (100) nach einem der Beispiele 17 bis 20,
   dadurch gekennzeichnet,
   dass das Fahrzeug (100) ein Elektrofahrzeug ist und die von der Freischalteinheit (11) an die Systemsteuerung (110) übermittelten Steuersignale (14) dazu vorgesehen sind, zumindest eine Aufladung des Elektrofahrzeugs (100) oder eine Öffnung eines Kofferraums und/oder einer Ladefläche (120) mittels Freigabe entsprechender Komponenten (140) des Elektrofahrzeugs (100) zu ermöglichen.
22. Das Fahrzeug (100) nach Beispiel 21,
   dadurch gekennzeichnet,
   dass die Systemsteuerung (110) des Elektrofahrzeugs (100) aufgrund des Steuersignals (14) der Freigabeeinheit (11) bei gewünschter Aufladung des Elektrofahrzeugs (100) zumindest eine Tankklappe als eine der Komponenten (140) entriegelt und/oder über Diagnoseanschlüsse des Elektrofahrzeugs (100) funktionsfähig freischaltet.
23. Ein Verfahren (200) zur Gewährung einer Zugangsberechtigung zu einem Fahrzeug (100) mit einem Verriegelungssystem und einer Steuerungseinheit (110) zumindest zur Steuerung des Verriegelungssystems sowie einem in dem Fahrzeug (100) eingebauten digitalen Zugangssystem (1) nach Beispiel 1 umfassend mindestens eine Zugriffseinheit (12) und mindestens eine Aktivierungseinheit (13) zur Verwendung außerhalb des Fahrzeugs und eine im Fahrzeug (100) positionierte und mit der Steuerungseinheit (110) geeignet verbundene Freischalteinheit (11), umfassend folgende Schritte:
   - Aktivieren (210) der Freischalteinheit (11) zumindest für einen Zeitraum durch die sich außerhalb des Fahrzeugs (100) befindliche Aktivierungseinheit (13) mittels drahtloser Datenkommunikation (21) zu der Freischalteinheit (11);
   - Veranlassen (220) eines Zugangs von außen zu dem Fahrzeug (100) durch die sich ebenfalls außerhalb des Fahrzeugs (100) befindliche Zugriffseinheit (12) mittels einer zur vorherigen Datenkommunikation (21) separaten unabhängigen drahtlosen Datenkommunikation (22) mit der durch die Aktivierungseinheit (13) vorher aktivierten Empfangseinheit (11);
   - Übermitteln (230) von den Zugang veranlassenden Steuersignalen (14) an die Systemsteuerung (110) durch die Freischalteinheit (11) in Reaktion auf die Datenkommunikation (22) mit der Zugriffseinheit (12); und
   - Ansteuerung (240) des Verriegelungssystems und Freigabe zumindest einer verriegelnden Komponente (140) zur Ermöglichung des Zugangs zum Fahrzeug zu dessen Ladung durch die Systemsteuerung (110).
24. Das Verfahren (200) nach Beispiel 23, wobei die Freischalteinheit (11) eine Prozessoreinheit (111) mit Datenspeicher (112) umfasst, auf dem Daten zur Autorisierung der Aktivierungseinheit (13) und/oder der Zugriffseinheit (12) gespeichert sind, umfassend die weiteren Schritte:
   - Durchführen (250) einer Autorisierungsprüfung der Aktivierungseinheit (13) anhand dieser Daten durch die Prozessoreinheit (111) und Aktivieren (210) der Freischalteinheit (11) erst nach Erfolg der Autorisierungsprüfung der Aktivierungseinheit (13), und/oder
   - Durchführen (260) einer Autorisierungsprüfung der Zugriffseinheit anhand eines von der Zugriffseinheit an die Freischalteinheit (13) übermittelten Identifikationscodes durch die Prozessoreinheit (111) und Übermitteln (230) der Steuersignale erst nach Erfolg der Autorisierungsprüfung der Zugriffseinheit (12).
25. Das Verfahren (200) nach Beispiel 23 oder 24, umfassend den oder die weiteren Schritte:
   - Anweisen (270) der Systemsteuerung (110) durch die Freischalteinheit (11) spätestens nach Ablauf des vorbestimmten Zeitraums der Aktivierung, die Komponenten (140) zur Ladung des Fahrzeugs zu verriegeln, sofern diese aufgrund der vorherigen Datenkommunikation (22) mit der Zugriffseinheit (12) entriegelt wurden; und/oder
   - Verriegeln (280) der entsprechenden Komponenten (140) durch die Systemsteuerung (110) des Fahrzeugs (100) nach Abschluss der Ladung des Fahrzeugs (100) nach entsprechender Datenkommunikation (22) zwischen Zugriffseinheit (12) und Freischalteinheit (11).
26. Das Verfahren (200) nach einem der Beispiele 23 bis 25, umfassend den weiteren Schritt:
   - Übertragen (290) von charakteristischen Daten über die erfolgte Ladung des Fahrzeugs (100) durch die Freischalteinheit (11) an die Aktivierungseinheit (14) und/oder an die Zugriffseinheit (12) nach erfolgter Verriegelung der Komponenten (140) des Fahrzeugs (100).
27. Das Verfahren nach einem der Beispiele 23 bis 26, wobei das Fahrzeug (100) ein Elektrofahrzeug ist, ermöglicht das Übermitteln (230) von den Zugang veranlassenden Steuersignalen (14) an die Systemsteuerung (110) zumindest eine Aufladung des Elektrofahrzeugs (100) oder eine Öffnung eines Kofferraums und/oder einer Ladefläche (120) mittels Freigabe der entsprechenden Komponenten (140) des Elektrofahrzeugs (100).

### Bezugszeichenliste

- 1: Erfindungsgemäßes Zugangssystem
- 11: Freischalteinheit
- 111: Prozessoreinheit
- 112: Datenspeicher
- 12: Zugriffseinheit
- 13: Aktivierungseinheit
- 14: Steuersignale
- 21: Datenkommunikation zwischen Aktivierungseinheit und Freischalteinheit
- 22: Datenkommunikation zwischen Zugriffseinheit und Freischalteinheit
- 3: Nutzer

- 100: Erfindungsgemäßes Fahrzeug, beispielsweise ein Elektrofahrzeug
- 110: Systemsteuerung des Fahrzeugs
- 120: Kofferraum und/oder Ladefläche
- 130: Empfangsantenne
- 140: Komponenten des Fahrzeugs, beispielsweise Tankklappe oder Verschluss von Kofferraum oder Ladefläche

- 200: erfindungsgemäßes Verfahren
- 210: Aktivieren einer im Fahrzeug positionierten Freischalteinheit
- 220: Veranlassen eines Zugangs von außen zu dem Fahrzeug
- 230: Übermitteln von Steuersignalen an die Systemsteuerung
- 240: Ansteuerung des Verriegelungssystems und Freigabe zumindest einer verriegelnden Komponente des Fahrzeugs
- 250: Durchführen einer Autorisierungsprüfung der Aktivierungseinheit
- 260: Durchführen einer Autorisierungsprüfung der Zugriffseinheit
- 270: Anweisen der Systemsteuerung zur Verriegelung die Komponenten nach Ablauf des vorbestimmten Zeitraums
- 280: Verriegeln der Komponenten durch die Systemsteuerung nach Abschluss der Aufladung oder einer Beladung
- 290: Übertragen von charakteristischen Daten zur Ladung nach erfolgter Verriegelung der Komponenten des Fahrzeugs
- 1001: Ladesystem zur dynamischen Aufladung von Elektrofahrzeugen
- 1002: (aufzuladendes) Elektrofahrzeug
- 1021: Elektrobatterie des Elektrofahrzeugs
- 1022: Navigationsgerät im Elektrofahrzeug
- 1003: mobiles Gerät
- 1004: Software-Applikation
- 1005: mobiles Ladefahrzeug
- 1051: Navigationseinrichtung des Ladefahrzeugs
- 1052: Batteriespeicher des Ladefahrzeugs
- 1053: DC-Ladeeinheit des Ladefahrzeugs
- 1054: AC-Ladeeinheit des Ladefahrzeugs
- 1010: Datenspeicherprodukt

- 1100: Verfahren zur dynamischen Aufladung von Elektrofahrzeugen
- 1110: Übermitteln von aktuellen Position der Ladefahrzeuge an die Software-Applikation
- 1120: Anzeigen zumindest des nächsten Ladefahrzeugs auf dem mobilen Gerät
- 1130: Übermitteln eines Ladewunsches für das Elektrofahrzeug an das Ladefahrzeug
- 1140: Übermitteln von Koordinaten vom gemeinsamen Treffpunkt und der Treffpunktzeit an das mobile Gerät
- 1150: Umsetzen von Treffpunkt und Treffpunktzeit in Navigationsanweisungen für einen Fahrer des aufzuladenden Elektrofahrzeugs
- 1160: Bestimmens des gemeinsamen Treffpunkts und der Treffpunktzeit unter Berücksichtigung zumindest einer bisherigen Route des aufzuladenden Elektrofahrzeugs
- 1170: zumindest periodisches Übermitteln der aktuellen Position des Ladefahrzeugs auf einem Weg zum gemeinsamen Treffpunkt an die Software-Applikation
- 1180: Anzeigen der aktuellen Position des Ladefahrzeugs auf dem Weg zum gemeinsamen Treffpunkt durch die Software-Applikation im Elektrofahrzeug
- 1190: Auswählen eines der angezeigten Ladefahrzeuge als das Ladefahrzeug für eine Aufladung der Fahrzeugbatterie

- BR: bisherigen Route des aufzuladenden Elektrofahrzeugs
- FRL: Fahrroute des Ladefahrzeugs zum gemeinsamen Treffpunkt
- FRE: Fahrroute des Elektrofahrzeugs zum gemeinsamen Treffunkt
- GP: geplante Route des Elektrofahrzeugs
- P2: aktuelle Position des Elektrofahrzeugs
- P5: aktuelle Position des Ladefahrzeugs
- RZ: Routenziel des Elektrofahrzeugs
- TG1: mögliches Treffpunktgebiet mit Berücksichtigung der aktuellen Position des Elektrofahrzeugs
- TG2: mögliches Treffpunktgebiet mit Berücksichtigung der bisherigen Route des Elektrofahrzeugs
- TP: Treffpunkt für Ladefahrzeug und aufzuladendem Elektrofahrzeug
- TZ: Treffpunktzeit für das Treffen von Ladefahrzeug und aufzuladendem Elektrofahrzeug

- 2001: Erfindungsgemäßer Energiespeicher
- 2011: Energiespeichereinheit
- 2111: Batteriespeicher der Energiespeichereinheit
- 2012: Steuerungsmodul
- 2013: Einspeise-Stromanschlüssen
- 2014: Ausspeise-Stromanschlüssen
- 2015: Lastsensoren
- 2016: Wasserstoffspeicher
- 2017: Brennstoffzelle
- 2018: Elektrolyseur
- 2002: Ladestationen
- 2031: allgemeines Stromnetz
- 2032: regenerative Energiequelle, z.B. eine Windenergieanlage
- 2033: regenerative Energiequelle, z.B. eine Solarenergieanlage
- 2004: Versorgungsnetz
- 2005: Elektrofahrzeuge
- 2010: erfindungsgemäße Stromtankstelle
- 2020: Wetterstation
- 2100: Verfahren zum Betrieben einer erfindungsgemäßen Stromtankstelle
- 2110: Weiterleiten der über die Einspeise-Stromanschlüssen aufgenommene elektrische Energie
- 2120: Überwachen der an den Einspeise-Stromanschlüssen ankommenden elektrische Energie
- 2130: Aufnahme, Abgabe oder Weiterleitung der elektrischen Energie zwischen den Einspeise- und Ausspeise-Stromanschlüssen gleichzeitig mit unterschiedlicher Spannung und Leistung
- 2140: Bedarfsgerechtes Abgeben der elektrischen Energie
- 2150: Durchführen einer Lastprüfung im Versorgungsnetz
- 2160: Bereitstellen zusätzlicher elektrischer Energie aus der Energiespeichereinheit für das Versorgungsnetz bei Bedarf
- 2170: Weiterleitung zumindest eines Teils der über die Einspeise-Stromanschlüsse aufgenommenen elektrischen Energie an da Energiespeichereinheit
- 2180: Steuern der Aufnahme, Abgabe oder Weiterleitung der elektrischen Energie auf Basis von erhaltenen Wetterdaten und statistisch ermitteltem Verbrauchsparametern
- 2190: automatisches Bestimmen einer nach den Wetterdaten und Verbrauchsparametern geeigneten Speichermenge an Energie
- 2200: entsprechendes Anpassen der Füllstände in der Energiespeichereinheit und/oder in dem oder den Wasserstoffspeichern

- A: Abgabe von elektrischer Energie
- E: Aufnahme von elektrischer Energie
- VP: statistisch ermitteltem Verbrauchsparametern an den Ladestationen
- W: Weiterleitung von elektrischer Energie
- WD: Wetterdaten

## Patentansprüche

1. Ein Energiespeicher (2001) für Stromtankstellen (2010), insbesondere für Ladefahrzeuge, umfassend eine Energiespeichereinheit (2011) und ein mit der Energiespeichereinheit (2011) verbundenes Steuerungsmodul (2012) zumindest mit mehreren Einspeise-Stromanschlüssen (2013) zur Aufnahme (E) von elektrischer Energie und mehreren Ausspeise-Stromanschlüssen (2014) zur Abgabe (A) von elektrischer Energie, wobei das Steuerungsmodul (2012) zur Weiterleitung (W) der über die Einspeise-Stromanschlüssen (2013) aufgenommene elektrische Energie an die Energiespeichereinheit (2011) und/oder an die Ausspeise-Stromanschlüsse (2014) sowie der abzugebenden elektrischen Energie von den Einspeise-Stromanschlüssen (2013) und/oder der Energiespeichereinheit (2011) über die Ausspeise-Stromanschlüsse (2014) zur bedarfsgerechten Abgabe an ein oder mehrere Ladesäulen (2002) für Elektrofahrzeuge vorgesehen ist, wobei das Steuerungsmodul (2012) mehrere entsprechend angesteuerte Spannungswandler umfasst, um die Aufnahme, Abgabe oder Weiterleitung (E, A, W) der elektrischen Energie zwischen den Einspeise- und Ausspeise-Stromanschlüssen (2013, 2014) gleichzeitig mit unterschiedlicher Spannung und Leistung zu ermöglichen, wozu das Steuerungsmodul (2012) die an den Einspeise-Stromanschlüssen (2013) ankommende elektrische Energie und die an den Ausspeise-Stromanschlüssen (2014) abgefragte elektrische Energie überwacht und mittels der Spannungswandler geeignet an den jeweiligen Bedarf anpasst.

2. Der Energiespeicher (2001) nach Anspruch 1,
**dadurch gekennzeichnet,**
**dass** einer der Einspeise- Stromanschlüsse (2013) dazu vorgesehen ist, mit dem allgemeinen Stromnetz (2031) verbunden zu werden und ein oder mehrere andere der Einspeise-Stromanschlüsse (2013) zum Anschluss zumindest an eine regenerative Energiequelle (2032, 2033), vorzugsweise an eine Wind- und/oder Solarenergieanlage (2032, 2033) ausgestaltet sind.

3. Der Energiespeicher (2001) nach Anspruch 1 oder 2,
**dadurch gekennzeichnet,**
**dass** jeweils mindestens einer der Ausspeise-Stromanschlüsse (2014) für einpolige und/oder dreipolige Anschlüsse zur Abgabe von Gleichstrom- und/oder Wechselstrom ausgestaltet sind.

4. Der Energiespeicher (2001) nach einem der voranstehenden Ansprüche,
**dadurch gekennzeichnet,**
**dass** das Steuerungsmodul (2012) dazu ausgestaltet ist, neben der Weiterleitung (W) von elektrischer Energie von den Einspeise-Stromanschlüssen (2013) zu den Ausspeise-Stromanschlüsse (2014) zur Abgabe (A) der elektrischen Energie an die Ladestationen (2002) eine Lastprüfung in mindestens einem an die Ausspeisestromanschlüsse angeschlossenen Versorgungsnetz (2004) durchzuführen und bei Bedarf zusätzliche elektrische Energie aus der Energiespeichereinheit (2011) für das jeweilige Versorgungsnetz (2004) bereitzustellen, um eine Überlastung auf Seiten der Einspeise-Stromanschlüsse (2013) zu vermeiden, wobei vorzugsweise
(i) das Steuerungsmodul (2012) mit ein oder mehreren Lastsensoren (2015) zur Lastprüfung in dem jeweiligen angeschlossenen Versorgungsnetz (2004) ausgestattet ist und/oder
(ii) das Steuerungsmodul (2012) im Falle keiner durch die Lastprüfung festgestellten Überlastung des Versorgungsnetzes (2004) zur Weiterleitung (W) zumindest eines Teils der über die Einspeise-Stromanschlüsse (2013) aufgenommenen elektrischen Energie (E) an die Energiespeichereinheit (2011) vorgesehen ist.

5. Der Energiespeicher (2001) nach einem der voranstehenden Ansprüche,
**dadurch gekennzeichnet,**
**dass** das Steuerungsmodul (2012) dazu ausgestaltet ist, die Aufnahme, Abgabe oder Weiterleitung (E, A, W) der elektrischen Energie zwischen Einspeise-Stromanschlüssen (2013), Energiespeichereinheit (2011) und Ausspeise-Stromanschlüssen (2014) auf Basis von erhaltenen Wetterdaten (WD) und statistisch ermitteltem Verbrauchsparametern (VP) an Energie zu steuern.

6. Der Energiespeicher (2001) nach einem der voranstehenden Ansprüche,
**dadurch gekennzeichnet,**
**dass** der Energiespeicher (2011) des Weiteren mindestens einen Wasserstoffspeicher (2016)(2016) verbunden mit mindestens einer Brennstoffzelle (2017) zur Erzeugung von elektrischer Energie angeschlossen an zumindest einen der Einspeise-Stromanschlüsse (2013) umfasst, wobei insbesondere der Energiespeicher (2011) zusätzlich mindestens einen Elektrolyseur (2018) angeschlossen an den oder die Wasserstoffspeicher (2016) umfasst, der mittels des Steuermoduls (2012) mit Strom zur Elektrolyse von Wasser versorgt wird, das anschließend in dem oder den Wasserstoffspeicher (2016) gespeichert wird, wobei vorzugsweise das Steuermodul (2012) nach den Wetterdaten (WD) und Verbrauchsparametern (VP) automatisch eine dafür geeignete Speichermenge in der Energiespeichereinheit (2011) und in dem oder den Wasserstoffspeichern (2016) bestimmt und Füllstände in der Energiespeichereinheit (2011) und/oder in dem oder den Wasserstoffspeichern (2016) mittels Energiespeicherung oder Wasserstofferzeugung oder deren jeweiligen Verbrauch entsprechend anpasst.

7. Der Energiespeicher (2001) nach einem der voranstehenden Ansprüche,
**dadurch gekennzeichnet,**
**dass** die Energiespeichereinheit (2011) zumindest einen oder mehrere geeignet mit dem Steuerungsmodul verbundene Energiespeichereinheitselemente, wie Batteriespeicher (2111), umfasst.

8. Eine Stromtankstelle, insbesondere ein Ladefahrzeug, (2010), vorzugsweise zur parallelen Aufladung mehrerer Elektrofahrzeuge (2005), umfassend ein oder mehrere über ein oder mehrere Versorgungsnetze (2004) der Stromtankstelle (2010) miteinander verbundene Ladesäulen (2002) und mindestens einen Energiespeicher (2001) nach einem der Ansprüche 1 bis 7, der zur Abgabe (A) von elektrischer Energie über das oder die internen Versorgungsnetze (2004) an die Ladesäulen (2002) angeschlossen ist und zur Aufnahme (E) von elektrischer Energie zumindest mit dem allgemeinen Stromnetz (2031) verbunden ist.

9. Die Stromtankstelle (2010) nach Anspruch 8,
**dadurch gekennzeichnet,**
**dass** die Stromtankstelle (2010) des Weiteren eine Wind- und/oder Solarkraftanlage (2032, 2033) umfasst, die über jeweilige Einspeise-Stromanschlüsse (2013) und über den Energiespeicher (2001) mit dem internen Versorgungsnetz (2004) verbunden sind.

10. Die Stromtankstelle (2010) nach einem der Ansprüche 8 oder 9,
**dadurch gekennzeichnet,**
**dass** ein oder mehreren Lastsensoren (2015) an das oder die Versorgungsnetze (2004) angeschlossen und mit dem Steuerungsmodul (2012) des Energiespeichers
(2001) verbunden sind, damit das Steuerungsmodul (2012) eine Lastprüfung in dem jeweiligen Versorgungsnetz (2004) ausführen und bei Bedarf zusätzliche elektrische Energie aus der Energiespeichereinheit (2011) für das jeweilige Versorgungsnetz (2004) bereitstellen kann, um eine Überlastung auf Seiten der Einspeise-Stromanschlüsse (2013) zu vermeiden.

11. Die Stromtankstelle (2010) nach einem der Ansprüche 8 bis 10,
**dadurch gekennzeichnet,**
**dass** die Stromtankstelle (2010) zumindest zum Empfang von Wetterdaten (WD) und zur Übermittlung dieser Wetterdaten (WD) an das Steuermodul (2012) ausgestattet ist, damit das Steuermodul (2012) die Aufnahme, Abgabe oder Weiterleitung (E, A, W) der elektrischen Energie zwischen Einspeise-Stromanschlüssen (2013), Energiespeichereinheit (2011) und Ausspeise-Stromanschlüssen (2014) auf Basis der Wetterdaten (WD) und/oder statistisch ermitteltem Verbrauchsparametern (VP) an Energie steuern kann, wobei vorzugsweise die Stromtankstelle (2010) zum Empfang der Wetterdaten (WD) eine Wetterstation (2020) umfasst.

12. Die Stromtankstelle (2010) nach einem der Ansprüche 8 bis 11,
**dadurch gekennzeichnet,**
**dass** zumindest einer der Ausspeisestromanschlüsse (2014) als Rückspeiseanschluss für das allgemeine Stromnetz (2031) vorgesehen ist.

13. Ein Verfahren (2100) zum Betreiben einer Stromtankstelle (2010), insbesondere eines Ladefahrzeugs, vorzugsweise zur parallelen Aufladung mehrerer Elektrofahrzeuge (2005), umfassend ein oder mehrere über ein Versorgungsnetz (2004) der Stromtankstelle (2010) miteinander verbundene Ladesäulen (2002) und mindestens einen Energiespeicher (2001) nach einem der Ansprüche 1 bis 7 umfassend eine Energiespeichereinheit (2011) und ein mit der Energiespeichereinheit (2011) verbundenes Steuerungsmodul (2012) zumindest mit mehreren Einspeise-Stromanschlüssen (2013) zur Aufnahme (A) von elektrischer Energie und mehreren Ausspeise-Stromanschlüssen (2014) zur Abgabe (A) von elektrischer Energie, wobei der Energiespeicher (2001) zur Abgabe (A) der elektrischen Energie über das interne Versorgungsnetz (2004) an die Ladesäulen (2002) angeschlossen ist und zur Aufnahme (E) der elektrischen Energie zumindest mit dem allgemeinen Stromnetz (2031) verbunden ist, wobei das Steuermodul (2012) nachfolgende Schritte ausführt:
- Weiterleiten (2110) der über die Einspeise-Stromanschlüsse (2013) aufgenommene elektrische Energie an die Energiespeichereinheit (2011) und/oder an die Ausspeise-Stromanschlüsse (2014);
- Überwachen (120) der an den Einspeise-Stromanschlüssen (2013) ankommenden elektrischen Energie und der an den Ausspeise-Stromanschlüssen (2014) abgefragten elektrischen Energie;
- Aufnahme, Abgabe oder Weiterleitung (2130) der elektrischen Energie zwischen den Einspeise- und Ausspeise-Stromanschlüssen (2013, 2014) gleichzeitig mit unterschiedlicher Spannung und Leistung durch entsprechend angesteuerte Spannungswandler im Steuerungsmodul (2011); und
- bedarfsgerechtes Abgeben (2140) der elektrischen Energie mittels Weiterleitung (W) der abzugebenden elektrischen Energie von den Einspeise-Stromanschlüssen (2013) und/oder der Energiespeichereinheit (2011) über die Ausspeise-Stromanschlüssen (2014) an das Versorgungsnetz (2004) zur Versorgung der Ladestationen (2002).

14. Das Verfahren (2100) nach Anspruch 13, umfassend des Weiteren die zusätzlichen Schritte:
- Durchführen (2150) einer Lastprüfung im Versorgungsnetz (2004) mittels ein oder mehrerer Lastsensoren (2015), die an geeigneter Stelle im Versorgungsnetz (2004) angeordnet sind;
- Bereitstellen (2160) zusätzlicher elektrischer Energie aus der Energiespeichereinheit (2011) für das Versorgungsnetz (2004) bei Bedarf, um eine Überlastung auf Seiten der Einspeise-Stromanschlüsse (2013) zu vermeiden; und
- Weiterleiten (2170) zumindest eines Teils der über die Einspeise-Stromanschlüsse (2013) aufgenommenen elektrischen Energie an da Energiespeichereinheit (2011), falls durch die Lastprüfung keine Überlastung des Versorgungsnetzes (2004) festgestellt wurde.

15. Das Verfahren (2100) nach Anspruch 13 oder 14, umfassend des Weiteren den zusätzlichen Schritt:
- Steuern (2180) der Aufnahme, Abgabe oder Weiterleitung der elektrischen Energie zwischen Einspeise-Stromanschlüssen, Energiespeichereinheit und Ausspeise-Stromanschlüssen auf Basis von erhaltenen Wetterdaten und statistisch ermitteltem Verbrauchsparametern an den Ladestationen, wobei vorzugsweise der Energiespeicher (2001) des Weiteren mindestens einen Wasserstoffspeicher (2016) verbunden mit mindestens einer Brennstoffzelle (2017) zur Erzeugung von elektrischer Energie angeschlossen an zumindest einen der Einspeise-Stromanschlüsse (2013) und einen Elektrolyseur (2018) angeschlossen an den oder die Wasserstoffspeicher (2016) umfasst, wobei der Elektrolyseur (2018) mittels des Steuermoduls (2011) mit Strom zur Elektrolyse von Wasser versorgt wird, das anschließend in dem oder den Wasserstoffspeicher (2016) gespeichert wird, umfassend des Weiteren die zusätzlichen Schritte:
- automatisches Bestimmen (2190) einer nach den Wetterdaten (WD) und Verbrauchsparametern (VP) geeigneten Speichermenge in der Energiespeichereinheit (2011) und in dem oder den Wasserstoffspeichern (2016); und
- entsprechendes Anpassen (2200) der Füllstände in der Energiespeichereinheit (2011) und/oder in dem oder den Wasserstoffspeichern (2016) mittels Energiespeicherung oder Wasserstofferzeugung oder deren jeweiligen Verbrauch.
